# EUROPEAN PATENT APPLICATION

(11) **EP 4 209 946 A1**
(43) Date of publication of application: **12.07.2023**
(21) Application number: 21873823.5
(22) Date of filing: 25.03.2021
(51) Int. Cl.: G06F 21/44, H04L 65/40

(54) **CROSS-DEVICE AUTHENTICATION METHOD AND RELATED APPARATUS**

(30) Priority: 30.09.2020 CN 202011063402
(71) Applicant: Huawei Technologies Co., Ltd., Shenzhen, Guangdong 518129 (CN)
(72) Inventor: FANG, Xiwen, Shenzhen, Guangdong 518129 (CN)
(74) Representative: Maiwald GmbH
(86) International application number: PCT/CN2021/082861
(87) International publication number: WO 2022/068156

(57) **Abstract**

This application provides a cross-device authentication method and an electronic device, applied to a first electronic device. The first electronic device is connected to a second electronic device. When local authentication fails, the first electronic device performs cross-device authentication by using the second electronic device. The method is used to implement cross-device authentication information collection, to improve convenience of an authentication operation.

## Description

### CROSS-REFERENCE TO RELATED APPLICATIONS

This application claims priority to Chinese Patent Application No. 202011063402.8, filed with the China National Intellectual Property Administration on September 30, 2020 and entitled "CROSS-DEVICE AUTHENTICATION METHOD AND RELATED APPARATUS", which is incorporated herein by reference in its entirety.

### TECHNICAL FIELD

This application relates to the field of communication technologies, and in particular, to a cross-device authentication method and a related apparatus.

### BACKGROUND

When a user uses a mobile phone, the mobile phone may continuously perform identity authentication on the user based on collected biometric feature information (for example, a face image, a fingerprint, and a touch input on a touchscreen) of the user by using a technical means such as facial recognition, fingerprint recognition, or screen touch behavior recognition. When identity authentication fails, the mobile phone may not respond to an input operation performed by a current user. When the user intends to use the mobile phone, but the mobile phone cannot collect the biometric feature information of the user, the mobile phone cannot respond to an input operation performed by the user either.

In conclusion, a current single-device identity authentication solution has low convenience and poor user experience.

### SUMMARY

Embodiments of this application provide a cross-device authentication method and a related apparatus, to improve convenience of cross-device authentication and effectively improve user experience.

According to a first aspect, this application provides a cross-device authentication method, applied to a first electronic device and a second electronic device. The first electronic device is connected to the second electronic device, and the method includes: The first electronic device receives a first operation; the first electronic device performs local authentication in response to the first operation; the first electronic device starts cross-device authentication in response to detecting that a local authentication result of the first electronic device is that authentication fails, where the cross-device authentication is used by the first electronic device to perform authentication by using the second electronic device; the first electronic device obtains a cross-device authentication result; and the first electronic device executes an instruction corresponding to the first operation if the first electronic device determines that the cross-device authentication result is that authentication succeeds.

In this way, identity authentication of the first electronic device can be implemented by using the second electronic device, to effectively improve convenience of cross-device authentication and create better user experience.

In a possible implementation, that the first electronic device starts cross-device authentication includes: The first electronic device sends a first request message to the second electronic device, where the first request message is used to request to obtain a local authentication result of the second electronic device; and that the first electronic device obtains a cross-device authentication result includes: The first electronic device receives a first response message from the second electronic device, where the first response message includes the cross-device authentication result, and the cross-device authentication result is the local authentication result of the second electronic device.

In a possible implementation, that the first electronic device starts cross-device authentication includes: The first electronic device sends a second request message to the second electronic device, where the second request message is used to request to obtain identity authentication information of the second electronic device; and the first electronic device receives a second response message from the second electronic device, where the second response message includes the identity authentication information of the second electronic device; and that the first electronic device obtains a cross-device authentication result includes: The first electronic device authenticates the first operation based on the identity authentication information of the second electronic device, and generates the cross-device authentication result.

In a possible implementation, the first electronic device stores preset information; and that the first electronic device authenticates the first operation based on the identity authentication information of the second electronic device, and generates the cross-device authentication result includes: The first electronic device matches the identity authentication information sent by the second electronic device with the preset information, to generate a matching result; and when the matching result is greater than a first preset threshold, the first electronic device determines that the local authentication result of the second electronic device is that authentication succeeds; or when the matching result is not greater than a first preset threshold, the first electronic device determines that the local authentication result of the second electronic device is that authentication fails.

In a possible implementation, the first electronic device stores preset information; and that the first electronic device performs local authentication on the first operation in response to the first operation includes: In response to the first operation, the first electronic device obtains identity authentication information of a user who enters the first operation; the first electronic device matches the identity authentication information of the user with the preset information; and the first electronic device determines, based on a matching result, whether the local authentication result of the first electronic device is that authentication succeeds.

In a possible implementation, that the first electronic device determines, based on a matching result, whether the local authentication result of the first electronic device is that authentication succeeds includes: The first electronic device compares a matching degree in the matching result and a preset threshold; and when the matching degree is greater than a second preset threshold, the first electronic device determines that the local authentication result of the first electronic device is that authentication succeeds; or when the matching degree is not greater than a second preset threshold, the first electronic device determines that the local authentication result of the first electronic device is that authentication fails.

In a possible implementation, the identity authentication information includes any one or more of face information, fingerprint information, voiceprint information, iris information, and screen touch behavior information; and the preset information includes any one or more of face information, fingerprint information, voiceprint information, iris information, and screen touch behavior information.

In a possible implementation, the first operation is any one of a screen unlocking operation, an application unlocking operation, or an operation performed on a functional control in an application.

In a possible implementation, the first electronic device and the second electronic device log in to a same user account, and the user account is one of an instant messaging account, an email account, and a mobile phone number.

In a possible implementation, the method further includes: The first electronic device detects a distance between the first electronic device and the second electronic device; and that the first electronic device determines an instruction corresponding to the first operation if the first electronic device determines that the cross-device authentication result is that authentication succeeds includes: The first electronic device executes the instruction corresponding to the first operation when the first electronic device determines that the cross-device authentication result is that authentication succeeds and that the distance between the first electronic device and the second electronic device is less than a first preset distance. Whether to execute the instruction corresponding to the first operation is determined based on the distance.

In a possible implementation, that the first electronic device detects a distance between the first electronic device and the second electronic device includes: The first electronic device detects the distance between the first electronic device and the second electronic device by using a Bluetooth positioning technology, an ultra-wideband UWB positioning technology, or a wireless fidelity Wi-Fi positioning technology.

In a possible implementation, that the first electronic device is connected to the second electronic device includes: The first device establishes a connection to the second device by using a near field communication protocol, where the near field communication protocol includes being connected to the second electronic device by using one or more of a wireless fidelity Wi-Fi communication protocol, a UWB communication protocol, a Bluetooth communication protocol, a Zigbee communication protocol, or a near field communication NFC protocol.

In a possible implementation, before the first electronic device starts cross-device authentication, the method further includes: receiving a second operation, where the second operation is used to trigger starting of a cross-device authentication function; and that the first electronic device starts cross-device authentication in response to detecting that a local authentication result of the first electronic device is that authentication fails includes: The first electronic device starts cross-device authentication in response to the second operation and in response to detecting that the local authentication result of the first electronic device is that authentication fails.

In a possible implementation, the method further includes: The first electronic device obtains security state information of the second electronic device; and that the first electronic device executes an instruction corresponding to the first operation if the first electronic device determines that the cross-device authentication result is that authentication succeeds includes: The first electronic device executes the instruction corresponding to the first operation if the first electronic device determines that the cross-device authentication result is that authentication succeeds, and determines that the security state information of the second electronic device indicates that the second electronic device is in a secure state.

In a possible implementation, after the first electronic device receives the first operation, the method further includes: The first electronic device detects whether the first operation triggers a locked low-risk application; and in response to detecting that the first operation triggers a locked low-risk application, the first electronic device detects whether the local authentication result of the first electronic device is that authentication succeeds. In this way, for the locked low-risk application, identity authentication of the first electronic device can be implemented based on the local authentication result of the second electronic device, to effectively improve convenience of controlling the locked low-risk application.

In a possible implementation, when the first operation is a first voice instruction, before the first electronic device detects whether the local authentication result of the first electronic device is that authentication succeeds, the method further includes: The first electronic device detects whether a voiceprint feature in the first voice instruction conforms to a voiceprint feature of a preset user; and in response to detecting that the voiceprint feature in the first voice instruction conforms to the voiceprint feature of the preset user, the first electronic device detects whether the local authentication result of the first electronic device is that authentication succeeds. In this way, the first electronic device can implement voice control of the first electronic device based on the local authentication result of the second electronic device, to improve convenience of voice control.

In a possible implementation, the first electronic device performs local continuous authentication and generates the local authentication result of the first electronic device when the first electronic device receives the first operation or after the first electronic device receives the first operation. A manner in which the first electronic device performs local continuous authentication includes at least one of the following: facial recognition authentication, iris recognition authentication, and screen touch behavior recognition authentication. The local authentication result of the first electronic device may represent whether identity authentication performed by the first electronic device on the user succeeds.

In a possible implementation, the second electronic device performs local continuous authentication and generates the local authentication result of the second electronic device when the first electronic device receives the first operation or before the first electronic device receives the first operation. A manner in which the second electronic device performs local continuous authentication includes at least one of the following: facial recognition authentication, iris recognition authentication, and screen touch behavior recognition authentication. The local authentication result of the second electronic device may represent whether identity authentication performed by the second electronic device on the user succeeds.

In a possible implementation, before the first electronic device executes the instruction corresponding to the first operation, the method further includes: The first electronic device detects whether a priority of local continuous authentication of the second electronic device is lower than a priority of local continuous authentication of the first electronic device; and in response to detecting that the priority of local continuous authentication of the second electronic device is not lower than the priority of local continuous authentication of the first electronic device, the first electronic device executes the instruction corresponding to the first operation. In this way, when convenience of identity authentication is improved through cross-device authentication, it is determined that the priority of local continuous authentication of the second electronic device is not lower than the priority of local continuous authentication of the first electronic device, to ensure security of cross-device authentication.

According to a second aspect, this application provides a cross-device authentication method, applied to a first electronic device. The first electronic device performs a method of the first electronic device in the first aspect.

According to a third aspect, this application provides a cross-device authentication method, applied to a second electronic device. The second electronic device performs a method of the second electronic device in the first aspect.

According to a fourth aspect, the present invention provides a first electronic device. The first electronic device is connected to a second electronic device, and the first electronic device includes a memory and one or more processors. The memory is coupled to the one or more processors, the memory is configured to store computer program code, the computer program code includes computer instructions, and the one or more processors invoke the computer instructions, so that the electronic device performs the method performed by the first electronic device in the second aspect.

According to a fifth aspect, the present invention provides a second electronic device. The second electronic device is connected to a first electronic device, and the first electronic device includes a memory and one or more processors. The memory is coupled to the one or more processors, the memory is configured to store computer program code, the computer program code includes computer instructions, and the one or more processors invoke the computer instructions, so that the electronic device performs the method performed by the second electronic device in the third aspect.

According to a sixth aspect, the present invention provides a computer-readable storage medium, including instructions. When the instructions are run on an electronic device, the electronic device is enabled to perform the method in the second aspect or the third aspect.

According to a seventh aspect, the present invention provides a computer program product. When the computer program product runs on a computer, the computer is enabled to perform the method in the second aspect or the third aspect.

According to an eighth aspect, the present invention provides a communication system, including a first electronic device and a second electronic device. The first electronic device is configured to perform the method in the second aspect, and the second device is configured to perform the method in the third aspect.

### BRIEF DESCRIPTION OF DRAWINGS

FIG. 1 is a schematic diagram of a system architecture of a communication system according to an embodiment of this application;
FIG. 2 is a schematic diagram of a structure of an electronic device according to an embodiment of this application;
FIG. 3A to FIG. 3C each are a schematic diagram of an interface in which cross-device authentication is started according to an embodiment of this application;
FIG. 4A to FIG. 4D each are a schematic diagram of a voice control scenario according to an embodiment of this application;
FIG. 5A to FIG. 5G each are a schematic diagram of an interface in which an application is locked according to an embodiment of this application;
FIG. 5H to FIG. 5M each are a schematic diagram of an interface in which an application function is locked according to an embodiment of this application;
FIG. 6A to FIG. 6J each are a schematic diagram of a voice control scenario according to an embodiment of this application;
FIG. 7A to FIG. 7C each are a schematic diagram of an interface in which a low-risk application is set according to an embodiment of this application;
FIG. 8A to FIG. 8D each are a schematic diagram of a voice control scenario according to an embodiment of this application;
FIG. 9A to FIG. 9H each are a schematic diagram of an interface in which casting is triggered according to an embodiment of this application;
FIG. 9I to FIG. 9J each are a schematic diagram of an interface in which casting is controlled according to an embodiment of this application;
FIG. 10A to FIG. 10I each are a schematic diagram of an interface in which casting is controlled according to an embodiment of this application;
FIG. 11A to FIG. 11C each are a schematic diagram of an interface in which casting is controlled according to an embodiment of this application;
FIG. 12A and FIG. 12B each are a schematic diagram of an interface in which casting is controlled according to an embodiment of this application;
FIG. 13A to FIG. 13E each are a schematic diagram of an interface in which an authorized user is added according to an embodiment of this application;
FIG. 14A to FIG. 14C each are a schematic diagram of an interface in which casting is controlled according to an embodiment of this application;
FIG. 15A to FIG. 15C each are a schematic diagram of a cross-device authentication system according to an embodiment of this application;
FIG. 16A and FIG. 16B are a schematic flowchart of a cross-device authentication method in a voice control scenario according to an embodiment of this application;
FIG. 17A and FIG. 17B are a schematic flowchart of a cross-device authentication method in a casting control scenario according to an embodiment of this application;
FIG. 18 is a schematic flowchart of a cross-device authentication method according to an embodiment of this application; and
FIG. 19 is a schematic diagram of a structure of a software system according to an embodiment of this application.

### DESCRIPTION OF EMBODIMENTS

The following clearly and completely describes technical solutions in embodiments of this application with reference to the accompanying drawings. In descriptions of embodiments of this application, unless otherwise specified, "/" indicates "or". For example, A/B may indicate A or B. The term "and/or" in this specification merely describes an association relationship for describing associated objects, and indicates that three relationships may exist. For example, A and/or B may indicate the following three cases: Only A exists, both A and B exist, and only B exists. In addition, in the descriptions of embodiments of this application, "a plurality of' means two or more.

The terms "first" and "second" mentioned below are merely intended for a purpose of description, and shall not be understood as an indication or implication of relative importance or implicit indication of a quantity of indicated technical features. Therefore, a feature limited by "first" and "second" may explicitly or implicitly include one or more features. In the descriptions of the embodiments of this application, unless otherwise specified, "a plurality of" means two or more. A method procedure provided in embodiments of this application may include more or fewer steps, and a specific sequence of the steps may not be limited. The method procedure provided in embodiments of this application is merely an example, and should not be construed as a limitation on this embodiment of this application.

Based on the background, to resolve an existing technical problem, an embodiment of this application provides a cross-device authentication method. The cross-device authentication method can be used to improve convenience of cross-device authentication and effectively improve user experience.

Related concepts in the cross-device authentication method provided in this embodiment of this application are first described.

In this embodiment of this application, in addition to screen locking of an electronic device, there may be application locking of the electronic device, and there may also be application function locking of an application in the electronic device.

Screen locking: Screen locking may also be referred to as a lock screen. Screen locking may be used to protect privacy of the electronic device, avoid wrongly operating a touchscreen, and save power without closing system software. A user may select a password type of screen locking. The password type may include but is not limited to a face image, a fingerprint, and a digital password. It can be understood that, after the user sets screen locking and an electronic device enters a screen locking state, the user can normally use the electronic device only by performing screen unlocking by using a password.

Application locking and application function locking: Application locking is to lock a specific application (for example, payment software or Email). Application function locking is to lock a specific application function (for example, a payment function in payment software or Me of instant messaging software) in a specific application (for example, payment software or instant messaging software). A user may select a password type of application locking and application function locking. The password type may include but is not limited to a face image, a fingerprint, and a digital password. A password of screen locking or a customized password may be used for application locking and/or application function locking.

In this embodiment of this application, application locking or application function locking may be set by the user, or may be set by an electronic device by default, or may be adaptively determined by the electronic device based on a use scenario. This is not specifically limited herein.

Local continuous authentication: Local continuous authentication means that an electronic device may continuously perform identity authentication on a user within a detection range by using a technical means such as facial recognition, iris recognition, or screen touch behavior recognition. In addition to authentication manners such as facial recognition, fingerprint recognition, and screen touch behavior recognition, in this embodiment of this application, identity authentication may be continuously performed on the user in another authentication manner, for example, fingerprint recognition, gait recognition, and heart rate recognition. In this embodiment of this application, single identity authentication may also be referred to as local authentication. A local authentication result may be an authentication result obtained after an electronic device performs identity authentication in one or more authentication manners such as facial recognition, fingerprint recognition, and screen touch behavior recognition, and is used to represent whether identity authentication succeeds. In this embodiment of this application, identity authentication information may include a local authentication result, or may include biometric feature information collected by the electronic device in one or more authentication manners such as facial recognition, fingerprint recognition, and screen touch behavior recognition. In some embodiments, the electronic device may periodically perform local continuous authentication, and a result of one time of local authentication may include whether the local authentication succeeds, or may include a timestamp of the local authentication.

For example, an electronic device 100 prestores biometric feature information 1 of a user 1, and the biometric feature information 1 is used to verify an identity of the user 1. During local continuous authentication, when a matching degree between biometric feature information 1 and biometric feature information collected by the electronic device 100 by using a technical means such as facial recognition, fingerprint recognition, or screen touch behavior recognition reaches a preset threshold 1, the electronic device 100 may determine that local authentication of the user 1 succeeds. For example, the preset threshold 1 is equal to 90%.

It should be noted that, in some embodiments, after the user performs screen unlocking, the electronic device may perform local continuous authentication. When the user enters a locked application or a locked application function, if identity authentication in local continuous authentication of the electronic device succeeds, the electronic device can enter the application or the application function without a need to receive an unlocking operation of the user in an unlocking interface of the application or the application function.

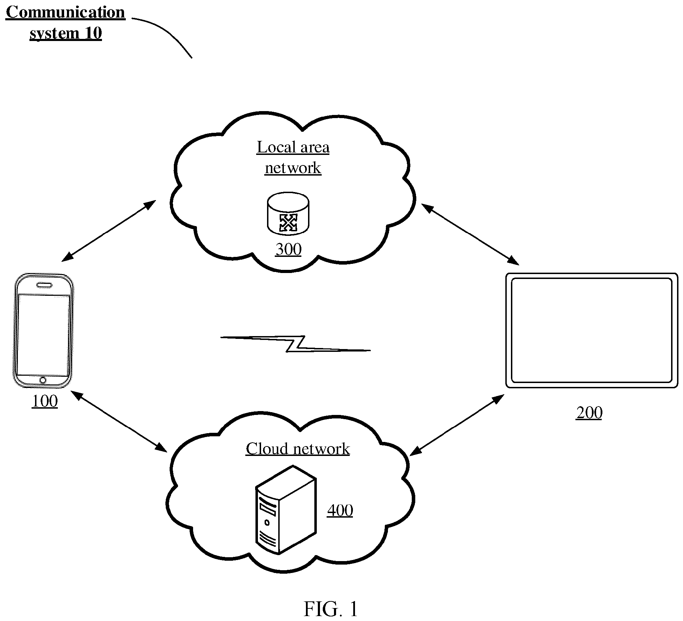

The following describes a communication system 10 provided in an embodiment of this application. FIG. 1 is a schematic diagram of an example of a communication system 10 according to an embodiment of this application. As shown in FIG. 1, the communication system 10 includes an electronic device 100 and an electronic device 200. An electronic device in the communication system 10 may establish a wired or wireless connection in one or more connection manners.

In this embodiment of this application, the electronic device 100 may be directly connected to the electronic device 200 through a near field communication connection or a local wired connection. For example, the electronic device 100 and the electronic device 200 each may include one or more short-range communication modules in a wireless fidelity (wireless fidelity, Wi-Fi) communication module, an ultra-wideband (ultra wide band, UWB) communication module, a Bluetooth (Bluetooth) communication module, a near field communication (near field communication, NFC) communication module, and a ZigBee communication module. The electronic device 100 is used as an example. The electronic device 100 may detect and scan for an electronic device (for example, the electronic device 200) near the electronic device 100 by transmitting a signal by using a short-range communication module (for example, the Bluetooth communication module), so that the electronic device 100 can find the nearby electronic device by using a near field communication protocol (for example, a Bluetooth wireless communication protocol), establish a wireless communication connection to the nearby electronic device, and transmit data to the nearby electronic device. For example, the electronic device 100 may further be directly connected based on a Wi-Fi peer-to-peer (Wi-Fi peer-to-peer, Wi-Fi P2P) communication protocol.

In some embodiments, in a short-range communication scenario, the electronic device 100 may further measure a distance of the electronic device 200 by using a positioning technology such as a Bluetooth positioning technology, a UWB positioning technology, or a Wi-Fi positioning technology.

In this embodiment of this application, the electronic device 100 and the electronic device 200 may be connected to a local area network (local area network, LAN) by using an electronic device 300 in a wired connection manner or a wireless fidelity (wireless fidelity, Wi-Fi) connection manner. The electronic device 100 and the electronic device 200 are indirectly connected by using the electronic device 300. For example, the electronic device 300 may be a third-party device such as a router, a gateway, or a smart device controller. For example, the electronic device 300 may send data to the electronic device 100 and/or the electronic device 200 through a network, or may receive, through a network, data sent by the electronic device 100 and/or the electronic device 200.

In this embodiment of this application, the electronic device 100 and the electronic device 200 may alternatively be indirectly connected by using at least one network device in a wide area network. For example, the electronic device 100 and the electronic device 200 establish an indirect connection by using an electronic device 400. The electronic device 400 may be a hardware server, or may be a cloud server implanted in a virtualized environment. For example, the cloud server may include a virtual machine executed on a hardware server of at least one another virtual machine. For example, the electronic device 400 may send data to the electronic device 100 and/or the electronic device 200 through a network, or may receive, through a network, data sent by the electronic device 100 and/or the electronic device 200. In some embodiments, the electronic device 100 and the electronic device 200 may be electronic devices that log in to a same account by using the electronic device 400, or the electronic device 100 and the electronic device 200 may be electronic devices that log in to different accounts by using the electronic device 400. For example, the electronic device 100 logs in to a first account by using the electronic device 400, and the electronic device 200 logs in to a second account by using the electronic device 400. The electronic device 100 that logs in to the first account may initiate, by using the electronic device 400, a connection request to the electronic device 200 that logs in to the second account, to establish a connection relationship between the first account and the second account. The first account and the second account each may be an instant messaging account, an email account, a mobile phone number, or the like. The first account and the second account may belong to different carrier networks, or may belong to a same carrier network. This is not specifically limited herein.

In some embodiments of this application, the electronic device 100 is used as an example. After the electronic device 100 establishes a connection to the electronic device 200 (a manner of establishing the connection in this application includes the foregoing several types, and details are not described herein again), the electronic device 100 may grant permission to the electronic device 200, to specify permission of the electronic device 200 to control the electronic device 100. In some embodiments, the permission of the electronic device 200 includes that the electronic device 200 may obtain identity authentication information of the electronic device 100. In some embodiments, the permission of the electronic device 200 further includes that the electronic device 200 may send interface content of a user interface of the electronic device 200 to the electronic device 100 (for example, casting), and may reversely control the user interface of the electronic device 200 on the electronic device 100. In some embodiments, the permission of the electronic device 200 further includes that the electronic device 200 may actively obtain interface content of a user interface of the electronic device 100, and may reversely control the user interface of the electronic device 100 on the electronic device 200. Similarly, after the electronic device 100 establishes a connection to the electronic device 200, the electronic device 200 may grant permission to the electronic device 100, to specify permission of the electronic device 100 to control the electronic device 200 (for example, permission to obtain the identity authentication information of the electronic device 100). Details are not described herein again.

In this embodiment of this application, at least one of the electronic device 100 and the electronic device 200 may have a local continuous authentication capability. That the electronic device has the local continuous authentication capability means that the electronic device may perform local continuous authentication in at least one authentication manner.

It can be understood that a system structure shown in FIG. 1 does not constitute a specific limitation on the communication system 10. In some other embodiments of this application, the communication system 10 may further include more electronic devices. For a connection relationship between any two devices in the communication system 10, refer to the electronic device 100 and the electronic device 200. Details are not described herein again.

It should be noted that neither a type of the electronic device 100 nor a type of the electronic device 200 is specifically limited in this embodiment of this application. In some embodiments, the electronic device in this embodiment of this application may be a portable device such as a mobile phone, a wearable device (for example, a smart band or a smartwatch), a tablet computer, a laptop computer (laptop), a handheld computer, a notebook computer, an ultra-mobile personal computer (ultra-mobile personal computer, UMPC), a cellular phone, a personal digital assistant (personal digital assistant, PDA), or an augmented reality (Augmented reality, AR)/virtual reality (virtual reality, VR) device. An example embodiment of an electronic device includes but is not limited to an electronic device provided with iOS^{®}, Android^{®}, Microsoft^{®}, or another operating system.

To facilitate understanding of the solutions in embodiments of this application, the following describes an electronic device in embodiments of this application.

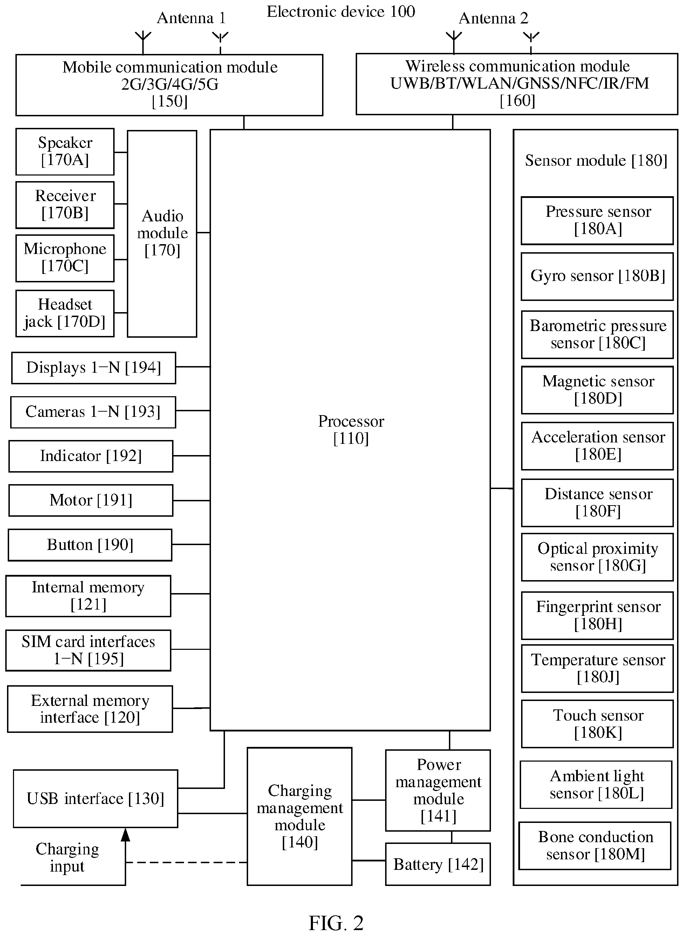

For example, an electronic device 100 is used as an example. FIG. 2 is a schematic diagram of a structure of an electronic device 100 according to an embodiment of this application.

As shown in FIG. 2, the electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It can be understood that the structure shown in this embodiment of this application does not constitute a specific limitation on the electronic device 100. In some other embodiments of this application, the electronic device 100 may include more or fewer components than those shown in the figure, combine some components, split some components, or have different component arrangements. The components shown in the figure may be implemented by using hardware, software, or a combination of software and hardware.

The processor 110 may include at least one processing unit. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into at least one processor. The processor 110 may simultaneously run a plurality of tasks (for example, applications), to provide a plurality of services and functions for a user.

The controller may be a nerve center and a command center of the electronic device 100. The controller may generate an operation control signal based on an instruction operation code and a time sequence signal, and complete control of instruction fetching and instruction execution.

A memory may be further disposed in the processor 110, and is configured to store instructions and data. In some embodiments, the memory in the processor 110 is a cache. The memory may store instructions or data that is just used or is cyclically used by the processor 110. If the processor 110 needs to use the instructions or the data again, the processor 110 may directly invoke the instructions or the data from the memory. In this case, repeated access is avoided, a waiting time period of the processor 110 is reduced, and efficiency of a system is improved.

In some embodiments, the processor 110 may include at least one interface. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identification module (subscriber identity module, SIM) interface, a universal serial bus (universal serial bus, USB) interface, and/or the like.

The I2C interface is a two-way synchronization serial bus, and includes one serial data line (serial data line, SDA) and one serial clock line (derail clock line, SCL). In some embodiments, the processor 110 may include a plurality of groups of I2C buses. The processor 110 may be separately coupled to the touch sensor 180K, a charger, a flashlight, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be used for audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transfer an audio signal to the wireless communication module 160 through the I2S interface, to implement a function of answering a call through a Bluetooth headset.

The PCM interface may also be used for audio communication, and analog signal sampling, quantization, and coding. In some embodiments, the audio module 170 may be coupled to the wireless communication module 160 through a PCM bus interface. In some embodiments, the audio module 170 may alternatively transmit an audio signal to the wireless communication module 160 through the PCM interface, to implement a function of answering a call through a Bluetooth headset. Both the I2S interface and the PCM interface may be used for audio communication.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 110 and the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music by using a Bluetooth headset.

The MIPI interface may be configured to connect the processor 110 to a peripheral component such as the display 194 or the camera 193. The MIPI interface includes a camera serial interface (camera serial interface, CSI), a display serial interface (display serial interface, DSI), and the like. In some embodiments, the processor 110 communicates with the camera 193 through the CSI, to implement a photographing function of the electronic device 100. The processor 110 communicates with the display 194 through the DSI, to implement a display function of the electronic device 100.

The GPIO interface may be configured by using software. The GPIO interface may be configured as a control signal, or may be configured as a data signal. In some embodiments, the GPIO interface may be configured to connect the processor 110 to the camera 193, the display 194, the wireless communication module 160, the audio module 170, the sensor module 180, or the like. The GPIO interface may be further configured as the I2C interface, the I2S interface, the UART interface, the MIPI interface, or the like.

The USB interface 130 is an interface that conforms to a USB standard specification, and may be specifically a mini USB interface, a micro USB interface, a USB Type C interface, or the like. The USB interface 130 may be configured to be connected to the charger to charge the electronic device 100, or may be configured to transmit data between the electronic device 100 and a peripheral device, or may be configured to be connected to a headset, to play audio by using the headset. The interface may be further configured to be connected to another electronic device, for example, an AR device.

It can be understood that an interface connection relationship between the modules that is shown in this embodiment of this application is merely an example for description, and does not constitute a limitation on the structure of the electronic device 100. In some other embodiments of this application, different interface connection manners in the foregoing embodiments or a combination of a plurality of interface connection manners may alternatively be used for the electronic device 100.

The charging management module 140 is configured to receive a charging input from the charger. The charger may be a wireless charger or a wired charger.

The power management module 141 is configured to be connected to the battery 142, the charging management module 140, and the processor 110. The power management module 141 receives an input from the battery 142 and/or the charging management module 140, and supplies power to the processor 110, the internal memory 121, the external memory, the display 194, the camera 193, the wireless communication module 160, or the like.

A wireless communication function of the electronic device 100 may be implemented by using the antenna 1, the antenna 2, the mobile communication module 150, the wireless communication module 160, the modem processor, the baseband processor, or the like.

The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna in a wireless local area network. In some other embodiments, the antenna may be used in combination with a tuning switch.

The mobile communication module 150 may provide a wireless communication solution that is applied to the electronic device 100 and that includes 2G/3G/4G/5G. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules of the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The baseband processor processes the low-frequency baseband signal, and then transfers an obtained signal to the application processor. The application processor outputs a sound signal by using an audio device (which is not limited to the speaker 170A, the receiver 170B, and the like), or displays an image or a video on the display 194. In some embodiments, the modem processor may be an independent component. In some other embodiments, the modem processor may be independent of the processor 110, and is disposed in the same device as the mobile communication module 150 or another functional module.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be at least one component integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 and the mobile communication module 150 in the electronic device 100 are coupled, and the antenna 2 and the wireless communication module 160 in the electronic device 100 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 may implement a display function through the GPU, the display 194, the application processor, and the like. The GPU is a microprocessor for image processing, and is connected to the display 194 and the application processor. The GPU is configured to perform mathematical and geometric computation, and is configured to perform graphics rendering. The processor 110 may include at least one GPU, and execute program instructions to generate or change display information.

The display 194 is configured to display an image, a video, or the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini LED, a micro LED, a micro-OLED, a quantum dot light emitting diode (quantum dot light emitting diode, QLED), or the like. In some embodiments, the electronic device 100 may include one or N displays 194, where N is a positive integer greater than 1.

The electronic device 100 may implement a photographing function by using the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is cast on the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP, to convert the electrical signal into a digital image signal. The ISP outputs the digital image signal to the DSP for processing. The DSP converts the digital image signal into a standard image signal in a format of RGB, YUV, or the like. In some embodiments, the electronic device 100 may include one or N camera modules 193, where N is a positive integer greater than 1.

In this embodiment of this application, the camera 193 includes a camera that collects an image required for facial recognition, for example, an infrared camera or another camera with low power consumption. The camera is usually located on a front side of the electronic device 100, for example, above a touchscreen, or may be located at another location. This is not limited in this embodiment of this application. In some embodiments, the electronic device 100 may further include another camera, and the electronic device 100 may further include a dot-matrix transmitter (not shown in the figure), configured to emit light. The camera collects light reflected by a face, to obtain a face image. The processor processes and analyzes the face image, and compares the face image and a prestored face image, to implement identity authentication.

The digital signal processor is configured to process a digital signal, and may process another digital signal in addition to the digital image signal. For example, when the electronic device 100 selects a frequency, the digital signal processor is configured to perform Fourier transform, or the like on energy of the frequency.

The video codec is configured to compress or decompress a digital video. The electronic device 100 may support one or more video codecs. Therefore, the electronic device 100 may play or record videos in a plurality of encoding formats, for example, moving picture experts group (moving picture experts group, MPEG)-1, MPEG-2, MPEG-3, and MPEG-4.

The NPU is a neural-network (neural-network, NN) computing processor. The NPU quickly processes input information by referring to a structure of a biological neural network, for example, a transfer mode between human brain neurons, and may further continuously perform self-learning. Applications such as intelligent cognition of the electronic device 100, for example, image recognition, facial recognition, speech recognition, and text understanding, may be implemented through the NPU.

The external memory interface 120 may be configured to be connected to an external storage card, for example, a micro SD card, to extend a storage capability of the electronic device 100. The external storage card communicates with the processor 110 through the external memory interface 120, to implement a data storage function. For example, files such as music and a video are stored in the external storage card.

The internal memory 121 may be configured to store computer-executable program code. The executable program code includes instructions. The processor 110 runs the instructions stored in the internal memory 121, to execute various function applications and data processing of the electronic device 100. The internal memory 121 may include a program storage area and a data storage area.

The electronic device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal for output, and is further configured to convert an analog audio input into a digital audio signal. The audio module 170 may be further configured to encode and decode the audio signal. In some embodiments, the audio module 170 may be disposed in the processor 110, or some functional modules of the audio module 170 may be disposed in the processor 110.

The speaker 170A, also referred to as a "loudspeaker", is configured to convert an electrical audio signal into a sound signal. The electronic device 100 may be configured to listen to music or answer a call in a hands-free mode through the speaker 170A.

The receiver 170B, also referred to as an "earpiece", is configured to convert an electrical audio signal into a sound signal. When a call is answered or audio information is listened to by using the electronic device 100, the receiver 170B may be put close to a human ear to listen to a voice.

The microphone 170C, also referred to as a "mike" or a "mic", is configured to convert a sound signal into an electrical signal. When making a call or sending audio information, a user may make a sound near the microphone 170C through the mouth of the user, to enter a sound signal into the microphone 170C. The electronic device 100 may be provided with at least one microphone 170C, and the microphone 170C may collect a voiceprint feature of the user, to authenticate a user identity.

The headset jack 170D is configured to be connected to a wired headset. The headset jack 170D may be a USB interface 130, or may be a 3.5 mm open mobile terminal platform (open mobile terminal platform, OMTP) standard interface, or a cellular telecommunications industry association of the USA (cellular telecommunications industry association of the USA, CTIA) standard interface.

The pressure sensor 180A is configured to sense a pressure signal, and may convert the pressure signal into an electrical signal. In some embodiments, the pressure sensor 180A may be disposed on the display 194. There are a plurality of types of pressure sensors 180A such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on the change in the capacitance. When a touch operation is performed on the display 194, the electronic device 100 detects intensity of the touch operation by using the pressure sensor 180A. The electronic device 100 may also calculate a touch location based on a detection signal of the pressure sensor 180A. In some embodiments, touch operations that are performed at a same touch location but have different touch operation intensity may correspond to different operation instructions. For example, when a touch operation whose touch operation intensity is less than a first pressure threshold is performed on a Messaging application icon, an instruction for viewing an SMS message is executed. When a touch operation whose touch operation intensity is greater than or equal to the first pressure threshold is performed on the Messaging application icon, an instruction for creating an SMS message is executed.

The gyro sensor 180B may be configured to determine a moving posture of the electronic device 100. In some embodiments, an angular velocity of the electronic device 100 around three axes (that is, axes x, y, and z) may be determined by using the gyro sensor 180B.

The barometric pressure sensor 180C is configured to measure barometric pressure. In some embodiments, the electronic device 100 calculates an altitude by using a barometric pressure value measured by the barometric pressure sensor 180C, to assist in positioning and navigation.

The magnetic sensor 180D includes a Hall sensor. The electronic device 100 may detect opening and closing of a flip leather case by using the magnetic sensor 180D. In some embodiments, when the electronic device 100 is a clamshell phone, the electronic device 100 may detect opening and closing of a flip leather case based on the magnetic sensor 180D. Further, a feature such as automatic unlocking upon opening of the flip leather case is set based on a detected opening or closing state of the flip leather case.

The acceleration sensor 180E may detect accelerations in various directions (usually on three axes) of the electronic device 100. When the electronic device 100 is still, a magnitude and a direction of gravity may be detected. The acceleration sensor 180E may be further configured to identify a posture of the electronic device, and is applied to an application such as switching between a landscape mode and a portrait mode or a pedometer.

The distance sensor 180F is configured to measure a distance. The electronic device 100 may measure the distance in an infrared manner or a laser manner. In some embodiments, in a photographing scenario, the electronic device 100 may measure a distance by using the distance sensor 180F, to implement quick focusing.

The optical proximity sensor 180G may include, for example, a light emitting diode (LED) and an optical detector, for example, a photodiode. The light emitting diode may be an infrared light emitting diode. The electronic device 100 emits infrared light by using the light emitting diode. The electronic device 100 detects infrared reflected light from a nearby object by using the photodiode.

The ambient light sensor 180L is configured to sense ambient light brightness. The electronic device 100 may adaptively adjust brightness of the display 194 based on the sensed ambient light brightness. The ambient light sensor 180L may also be configured to automatically adjust white balance during photographing. The ambient light sensor 180L may also cooperate with the optical proximity sensor 180G to detect whether the electronic device 100 is in a pocket, to avoid an accidental touch.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like. The fingerprint sensor 180H may be disposed below the touchscreen. The electronic device 100 may receive a touch operation of the user in a region corresponding to the fingerprint sensor on the touchscreen. The electronic device 100 may collect fingerprint information of a finger of the user in response to the touch operation, so that after fingerprint recognition in this embodiment of this application succeeds, the electronic device is unlocked, a locked application is entered, a locked application function is entered, and so on. In other words, data collected by the fingerprint sensor 180H may be configured to perform identity identification on the user.

The temperature sensor 180J is configured to detect a temperature. In some embodiments, the electronic device 100 executes a temperature processing policy based on the temperature detected by the temperature sensor 180J.

The touch sensor 180K is also referred to as a "touch panel". The touch sensor 180K may be disposed on the display 194, and the touch sensor 180K and the display 194 constitute a touchscreen, which is also referred to as a "touchscreen". The touch sensor 180K is configured to detect a touch operation performed on or near the touch sensor. The touch sensor may transfer the detected touch operation to the application processor to determine a type of a touch event. A visual output related to the touch operation may be provided through the display 194. In some other embodiments, the touch sensor 180K may also be disposed on a surface of the electronic device 100, and is located at a location different from that of the display 194.

In this embodiment of this application, the electronic device 100 may detect, by using the touch sensor 180K, a touch operation entered by the user on the touchscreen, and collect one or more touch parameters of the touch operation on the touchscreen such as a touch location, a touch area, a touch force, a touch direction, a touch time period, and the like. The touch force is a pressing force that is of a finger of the user on the touchscreen and that is collected by the electronic device 100 when the user enters the touch operation on the touchscreen. In some embodiments, the electronic device 100 may determine the touch force of the touch operation based on a change in a sensing parameter (for example, a capacitance value) on the touch sensor 180K, or may collect the touch force of the touch operation by using the pressure sensor 180A. In some embodiments, the electronic device 100 may perform identity identification on the user based on one or more collected touch parameters of the touch operation. After identity identification succeeds, the electronic device 100 may respond to the touch operation, and may further implement a case in which after identity identification in this embodiment of this application succeeds, a locked application is entered, a locked application function is entered, and so on.

The bone conduction sensor 180M may obtain a vibration signal. In some embodiments, the bone conduction sensor 180M may obtain a vibration signal of a vibration bone of a human vocal-cord part. The bone conduction sensor 180M may also contact a pulse of a human body, to receive a blood pressure beating signal.

The button 190 includes a power button, a volume button, and the like. The button 190 may be a mechanical button, or may be a touch button. The electronic device 100 may receive a button input, and generate a button signal input related to a user setting and function control of the electronic device 100.

The motor 191 may generate a vibration prompt. The motor 191 may be configured to provide an incoming call vibration prompt and a touch vibration feedback.

The indicator 192 may be an indicator light, and may be configured to indicate a charging status and a power change, or may be configured to indicate a message, a missed call, a notification, and the like.

The SIM card interface 195 is configured to be connected to a SIM card. The SIM card may be inserted into the SIM card interface 195 or removed from the SIM card interface 195, to implement contact with or separation from the electronic device 100.

In this embodiment of this application, for a structure of an electronic device 200, refer to related descriptions of the embodiment in FIG. 1. Details are not described herein again.

Based on the described hardware structure, system, and related concepts, the following describes, for different use scenarios with reference to the accompanying drawings, a cross-device authentication method provided in an embodiment of this application.

In the cross-device authentication method, an electronic device 100 may establish a connection to at least one electronic device. After the connection is established, the electronic device 100 may obtain identity authentication information of the at least one electronic device. The at least one electronic device includes an electronic device 200. In this embodiment of this application, when local authentication of the electronic device 100 fails, the electronic device 100 may start cross-device authentication, to be specific, determine whether the identity authentication information of the at least one electronic device (for example, the electronic device 200) matches preset information. When the identity authentication information matches the preset information, the electronic device 100 determines that cross-device identity authentication succeeds; or when the identity authentication information does not match the preset information, the electronic device 100 determines that cross-device identity authentication fails. In this way, identity authentication of the electronic device 100 can be implemented based on a local authentication result or biometric feature information of another reliable device, to effectively improve convenience of identity authentication and create better user experience.

In some embodiments, the identity authentication information may include biometric feature information collected by the electronic device 200 in one or more authentication manners such as facial recognition, fingerprint recognition, and screen touch behavior recognition, and the preset information is biometric feature information of a same type of a preset user of the electronic device 100. For example, biometric feature information sent by the electronic device 200 to the electronic device 100 is a face image 1 collected by the electronic device 200, and the preset information is a face image 2 that is of the preset user and that is prestored in the electronic device. It can be understood that when a matching degree between a facial feature in the face image 1 and a facial feature in the face image 2 is greater than a preset threshold 1, the electronic device 100 may determine that the facial feature in the face image 1 matches the facial feature in the face image 2, and that cross-device identity authentication succeeds; or when a matching degree between a facial feature in the face image 1 and a facial feature in the face image 2 is not greater than a preset threshold 1, the electronic device 100 may determine that the facial feature in the face image 1 does not match the facial feature in the face image 2, and that cross-device identity authentication fails. For example, the preset threshold 1 is equal to 90%.

In some embodiments, the electronic device 100 and the electronic device 200 include a same preset user (for example, a user 1), and the electronic device 100 and the electronic device 200 each prestore biometric feature information 1 of the preset user. The identity authentication information may include a local authentication result obtained after the electronic device 200 performs identity authentication on a user in a detection range in one or more authentication manners such as facial recognition, fingerprint recognition, and screen touch behavior recognition. The preset information may be a local authentication result representing that identity authentication succeeds. It can be understood that when the electronic device 200 determines that a matching degree between the biometric feature information collected by the electronic device 200 and the biometric feature information 1 of the preset user is greater than the preset threshold 1, a current local authentication result is that authentication succeeds. For example, the preset information is equal to 1. When the local authentication result of the electronic device 200 is equal to 1, it indicates that identity authentication succeeds, and when the local authentication result is equal to 0, it indicates that identity authentication fails. It can be understood that when the local authentication result sent by the electronic device 200 is equal to the preset information, or the matching degree with the facial feature in the face image 2 is equal to 100%, the electronic device 100 determines that the identity authentication information of the electronic device 200 matches the preset information, and that the cross-device identity authentication succeeds; or when the local authentication result sent by the electronic device 200 is unequal to the preset information, and the matching degree with the facial feature in the face image 2 is unequal to 100%, the electronic device 100 determines that the identity authentication information of the electronic device 200 does not match the preset information, and that the cross-device identity authentication fails.

The following describes, for a voice control scenario, the cross-device authentication method provided in this embodiment of this application.

In some embodiments of this application, the user 1 is not within a detection range in which the electronic device 100 performs local authentication. When the electronic device 100 receives a voice instruction 1, the electronic device 100 may obtain the identity authentication information of the at least one electronic device that establishes the connection to the electronic device 100; when determining that the identity authentication information of the electronic device 200 in the at least one electronic device matches the preset information, the electronic device 100 determines that cross-device identity authentication succeeds; and then, the electronic device 100 may start, in response to the voice instruction 1, a function 1 triggered by the voice instruction 1, in other words, perform a corresponding response operation triggered by the voice instruction 1. It can be understood that, in this embodiment of this application, the electronic device 100 may implement voice control of the electronic device 100 based on the identity authentication information of the electronic device 200, to improve convenience of voice control.

In some embodiments of this application, before the electronic device 100 uses the cross-device authentication, the user needs to manually start a cross-device authentication function. In some embodiments of this application, the electronic device 100 may start the cross-device authentication function by default, and the user does not need to start the cross-device authentication function.

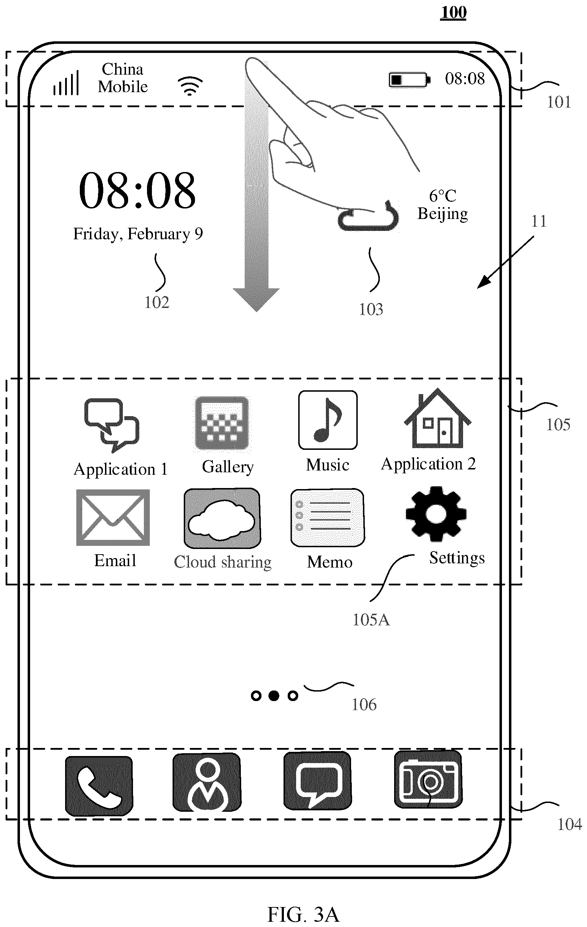

For example, FIG. 3A shows a user interface 11 that is of an electronic device 100 and that is used to display an application installed on the electronic device 100. The user interface 11 may include a status bar 101, a calendar indicator 102, a weather indicator 103, a tray 104 having a commonly used application icon, and another application icon 105.

The tray 104 having a commonly used application icon may display a Phone icon, a Contacts icon, a Messaging icon, and a Camera icon. The another application icon 105 may display an icon of Application 1, an icon of Gallery, an icon of Music, an icon of smart home, an icon of Email, an icon of Cloud sharing, an icon of Memo, and an icon of Settings 105A. A user interface 10 may further include a page indicator 106. The another application icon may be distributed on a plurality of pages, and the page indicator 106 may be configured to indicate a specific page on which an application is currently viewed by the user. The user may flick leftward or rightward in a region of the another application icon, to view an application icon on another page.

It can be understood that FIG. 3A merely shows an example of a user interface of an electronic device 100, and should not constitute a limitation on this embodiment of this application.

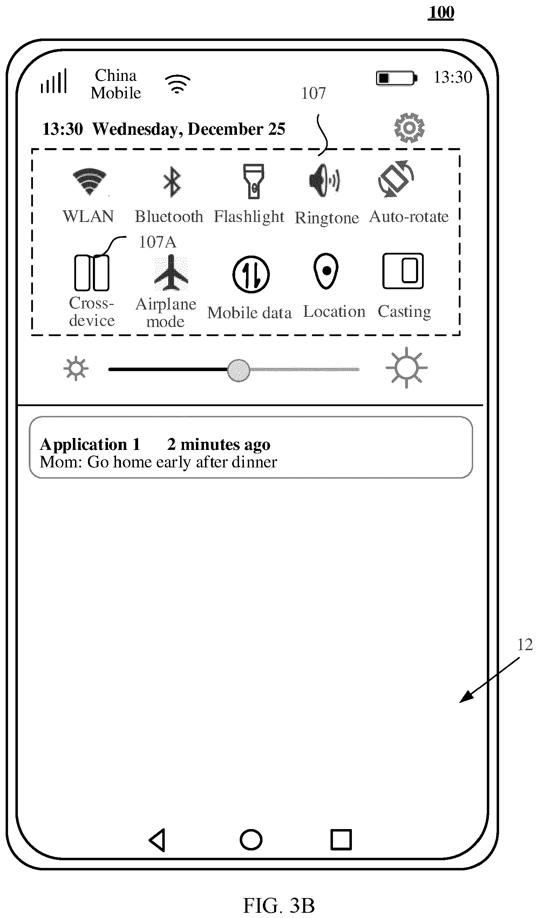

As shown in FIG. 3B, when an input operation of sliding downward on the status bar 101 is detected, the electronic device 100 may display a notification bar interface 12 in response to such a sliding input. The notification bar interface 12 includes a window 107, and the window 107 is used for on/off controls of a plurality of shortcut functions. As shown in FIG. 3B, the window 107 may display an on/off control 107A of "Cross-device", and may further display an on/off control of another shortcut function (for example, Wi-Fi, Bluetooth, Flashlight, Ringtone, Auto-rotate, Airplane mode, Mobile data, Location, or Casting).

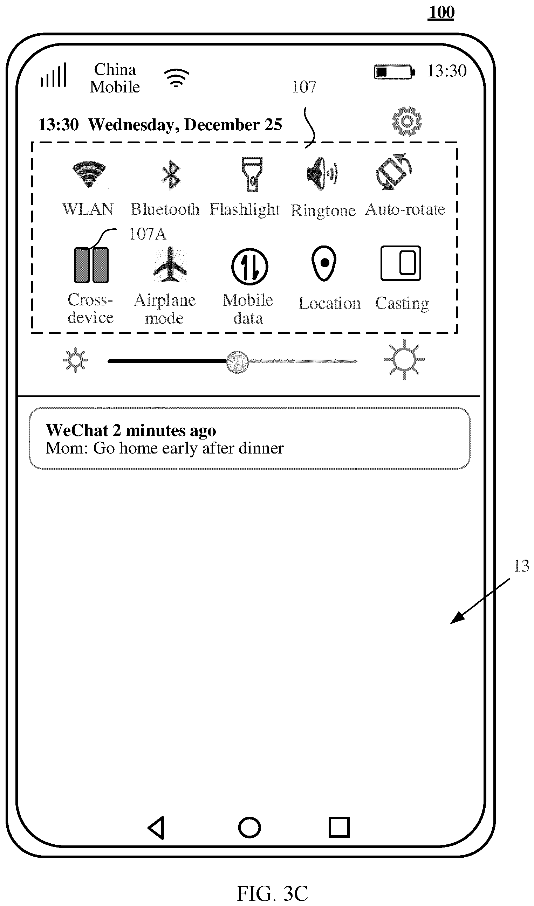

When the electronic device 100 may receive an input operation (for example, a touch operation) performed on the on/off control 107, the electronic device 100 may start cross-device authentication in response to the input operation. As shown in FIG. 3C, the electronic device 100 may represent, by changing a display effect of the on/off control 107A, that cross-device authentication is started.

In addition to starting cross-device authentication in the window 107, the user may alternatively start cross-device authentication in another manner. This is not specifically limited herein. For example, the user may alternatively start cross-device authentication in system settings.

Based on a feature of a function triggered by the voice instruction 1, the following separately describes different voice control scenarios.

Voice control scenario 1: In this scenario, the electronic device 100 cannot identify an identity of the user 1 based on the voice instruction 1. Regardless of whether the voice instruction 1 triggers a locked function or an unlocked function, the electronic device 100 starts cross-device authentication, and only after identity authentication in cross-device authentication succeeds, starts the function triggered by the voice instruction. In this embodiment of this application, the locked function may be entering a locked application, or may be entering a locked application function, or may be entering a locked file (for example, a picture, a document, or a video). This is not specifically limited herein.

Specifically, for the scenario in which the electronic device 100 cannot identify the identity of the user 1 based on the voice instruction 1, in an implementation, the electronic device 100 has a capability of identifying an identity of a user based on a voice, but the electronic device 100 does not prestore a voiceprint feature of the user 1. In another implementation, the electronic device 100 does not have the capability of identifying a user identity based on a voice.

In some embodiments, in Voice control scenario 1, when the electronic device 100 receives the voice instruction 1, the electronic device 100 may be in a lock screen state. In some embodiments, in Voice control scenario 1, when the electronic device 100 receives the voice instruction 1, the electronic device 100 may be in a screen unlocking state. This is not specifically limited herein.

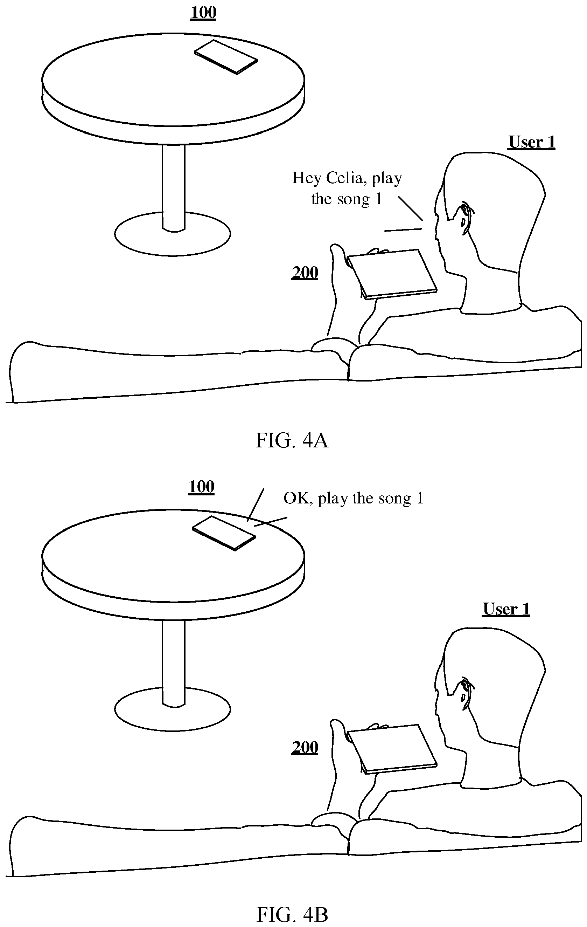

For example, as shown in FIG. 4A to FIG. 4D, the user 1 is not within a detection range of local continuous authentication of the electronic device 100, the electronic device 100 cannot collect biometric feature information of the user 1, and a local authentication result of the electronic device 100 is that local authentication fails.

As shown in FIG. 4A, the user 1 is not in a detection range in which the electronic device 100 performs local authentication, and the user 1 is using the electronic device 200, and sends a voice instruction 1 "Hey Celia, play the song 1". The voice instruction 1 includes a wakeup keyword "Hey Celia" of the electronic device 100. After receiving and recognizing the voice instruction, the electronic device 100 starts cross-device authentication, to obtain the identity authentication information of the electronic device 200. After determining that the identity authentication information of the electronic device 200 matches the preset information, the electronic device 100 plays the song 1 in response to the voice instruction 1, and may send a voice response "OK, play the song 1" shown in FIG. 4B. In this case, the electronic device 100 may display a playing interface of the song 1, or may be in the lock screen state. This is not specifically limited herein.

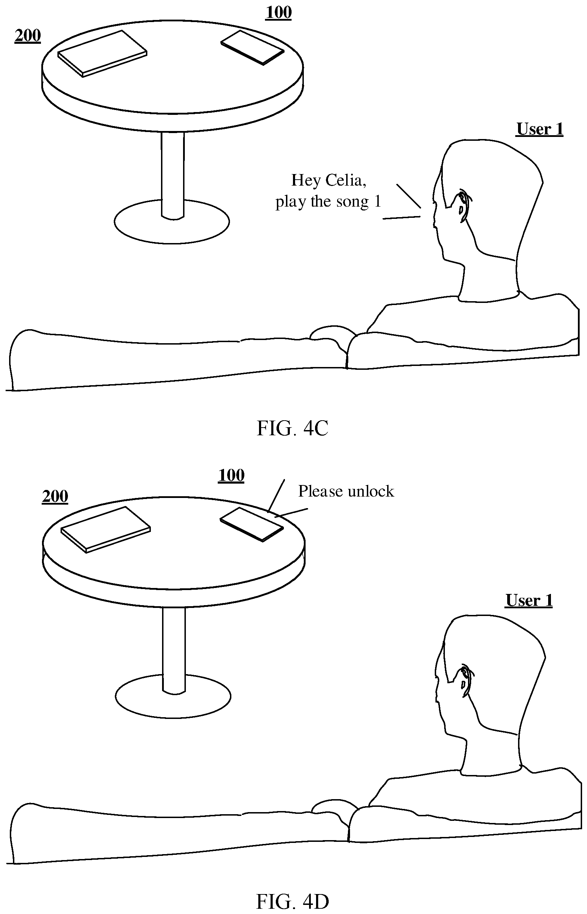

As shown in FIG. 4C, the user 1 is not within a detection range of local authentication of the electronic device 100 and the electronic device 200, and the user 1 sends a voice instruction 1 "Hey Celia, play the song 1". The voice instruction 1 includes a wakeup keyword "Hey Celia" of the electronic device 100. After receiving and recognizing the voice instruction, the electronic device 100 starts cross-device authentication, to obtain the identity authentication information of the electronic device 200. Because the electronic device 200 does not detect the biometric feature information of the user 1, identity authentication information of the electronic device 200 does not match the preset information. Therefore, the electronic device 100 does not play the song 1, and may send a voice response "Please unlock" shown in FIG. 4D. In this case, the electronic device 100 may be in the lock screen state. In some embodiments, the electronic device 100 in FIG. 4D may alternatively display a screen unlocking interface.

Voice control scenario 2: In this scenario, the electronic device 100 may identify an identity of a user based on a voice of the user. In some embodiments, after the electronic device 100 receives a voice instruction 1 of the user, when determining, through voice recognition, that the user is the preset user 1, and determining that the voice instruction 1 triggers an unlocked function, the electronic device 100 directly start, in response to the voice instruction 1, the function triggered by the voice instruction 1. In some embodiments, after the electronic device 100 receives the voice instruction 1, when determining, through voice recognition, that the user is the preset user 1, and determining that the voice instruction 1 triggers a locked function, the electronic device 100 starts cross-device authentication. Only after determining that identity authentication in cross-device authentication succeeds, the electronic device 100 starts, in response to the voice instruction 1, the function triggered by the voice instruction 1.

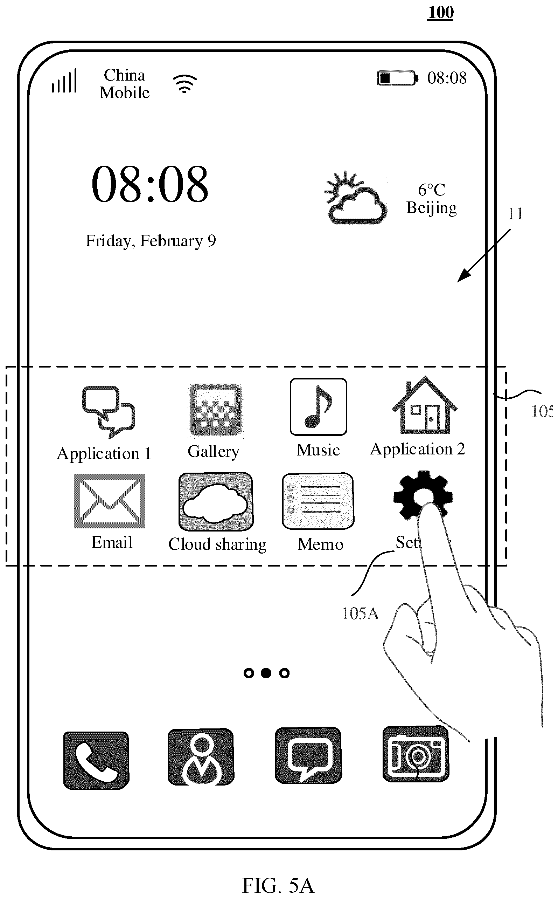

For example, FIG. 5A to FIG. 5G each show a user interface in which Application 1 is locked.

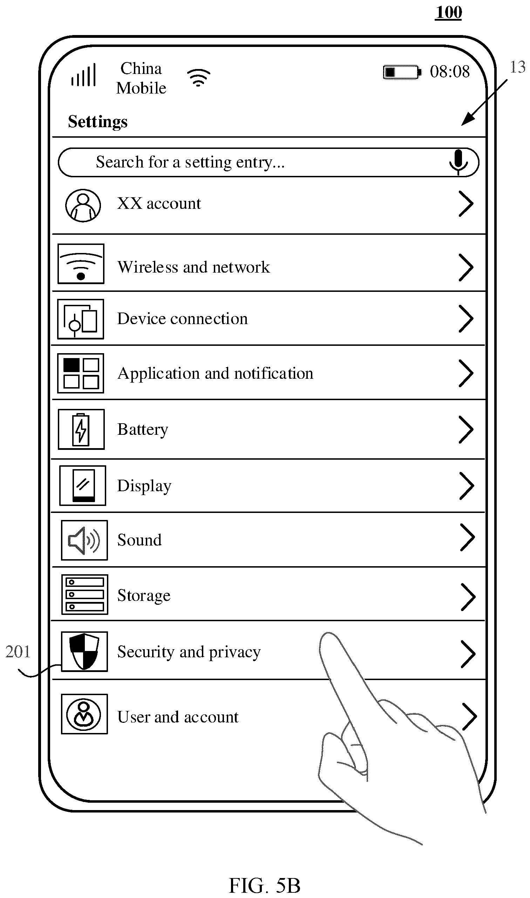

As shown in FIG. 5A, the another application icon 105 in the user interface 11 includes an icon 105A of system settings. The electronic device 100 may receive an input operation (for example, a touch operation) performed on the icon 105A of Settings, and in response to the input operation, the electronic device may display a user interface 13 of Settings shown in FIG. 5B.

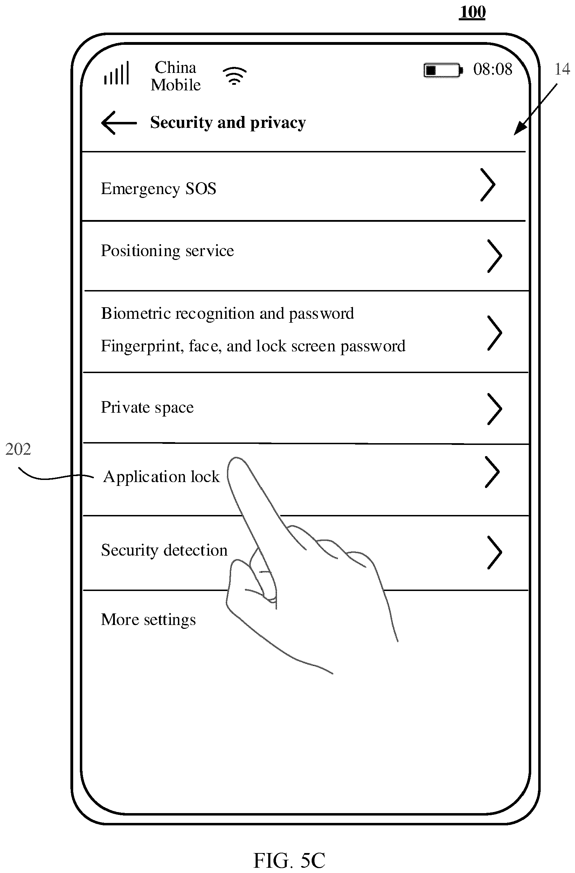

As shown in FIG. 5B, the user interface 13 may include a setting entry 201 of Security and privacy, may further include a setting entry of an XX account, a setting entry of Wireless and network, a setting entry of Device connection, a setting entry of Application and notification, a setting entry of Battery, a setting entry of Display, a setting entry of Sound, a setting entry of Storage, a setting entry of User and account, and the like. The Security and privacy setting entry 201 may be used to set face unlocking, a fingerprint, a lock screen password, an application lock, and the like. The electronic device 100 may receive an input operation (for example, a touch operation) performed on the setting entry 201 of Security and privacy, and in response to the input operation, the electronic device may display a user interface 14 for setting Security and privacy shown in FIG. 5C.

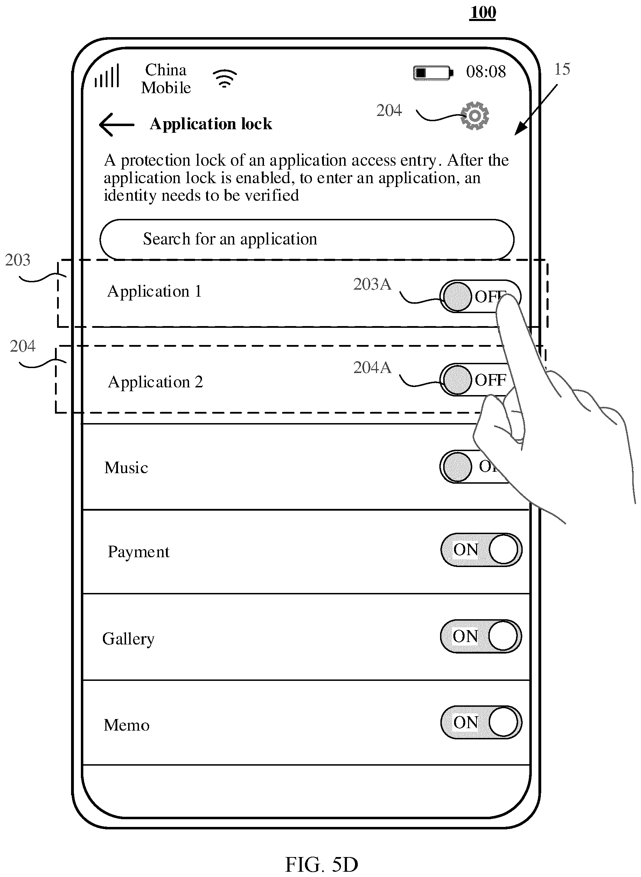

As shown in FIG. 5C, the user interface 14 may include a setting entry 202 of Application lock, and may further include a setting entry of Emergency help, a setting entry of Positioning service, a setting entry of Biometric recognition and password, a setting entry of Private space, and a setting entry of Security detection. The setting entry 202 of Application lock may be used to lock a private application, to effectively prevent unauthorized access of another person. The electronic device 100 may receive an input operation (for example, a touch operation) performed on the setting entry 202 of Application lock, and in response to the input operation, the electronic device may display a user interface 15 of Application lock shown in FIG. 5D.

As shown in FIG. 5D, the user interface 15 may include an application search box and a setting bar of at least one application. The setting bar of at least one application may include a setting bar 203 of Application 1, a setting bar 204 of Application 2, a setting bar of Music, a setting bar of Payment, a setting bar of Gallery, a setting bar of Memo, and the like. An on/off control is displayed on each setting bar, and the on/off control may be configured to enable or disable a protection lock of an application access entry. For example, an on/off control 203A is displayed on the setting bar 203 of Application 1, and an on/off control 204A is displayed on the setting bar 204 of Application 2. When the on/off control is in an on (ON) state, and the user accesses an application, the user needs to authenticate the identity, that is, unlock the application. When the on/off control is in an off (OFF) state, and the user accesses an application, the user can directly access the application without authenticating the identity.

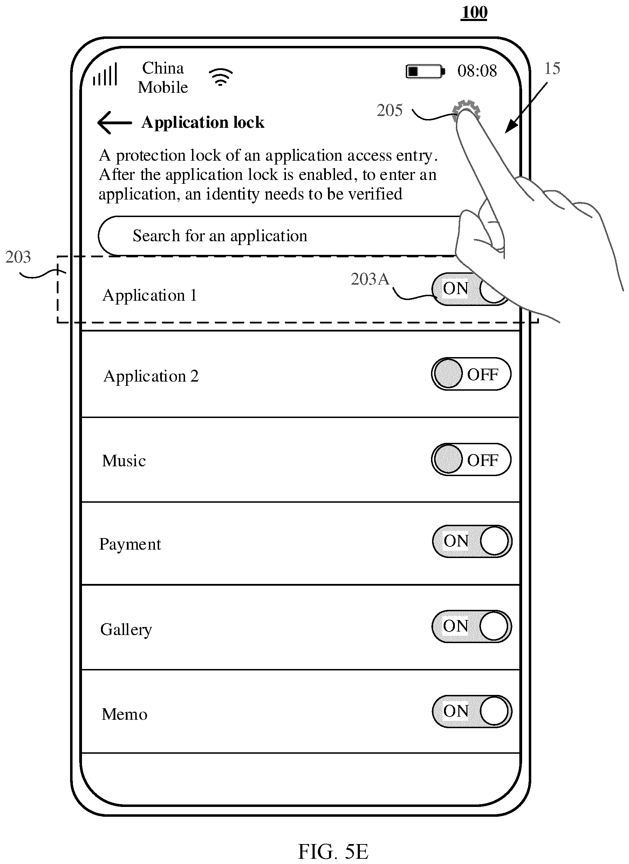

For example, as shown in FIG. 5D, the on/off control 203A is in an off state. The electronic device 100 may receive an input operation (for example, a touch operation) performed on the on/off control 203A of the application, and in response to the input operation, the electronic device may switch a state of the on/off control 203A to an on state shown in FIG. 5E.

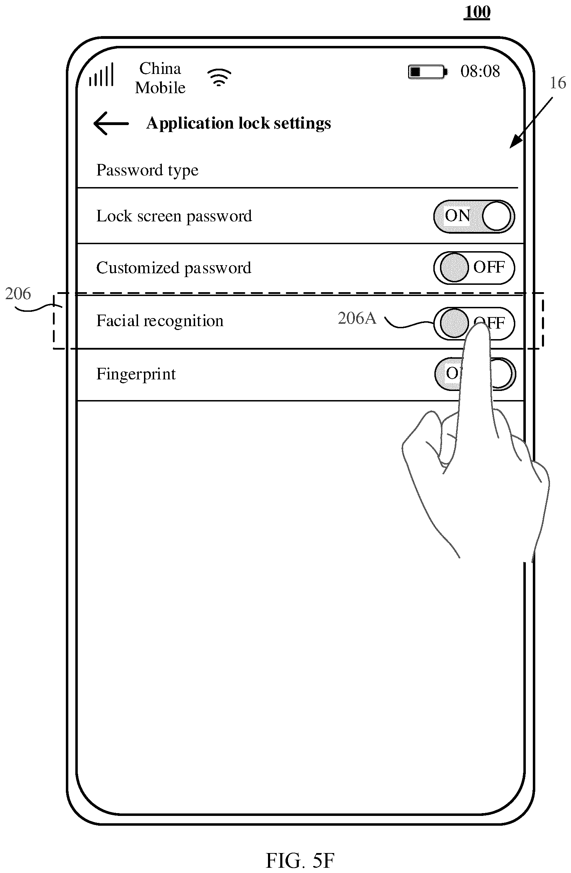

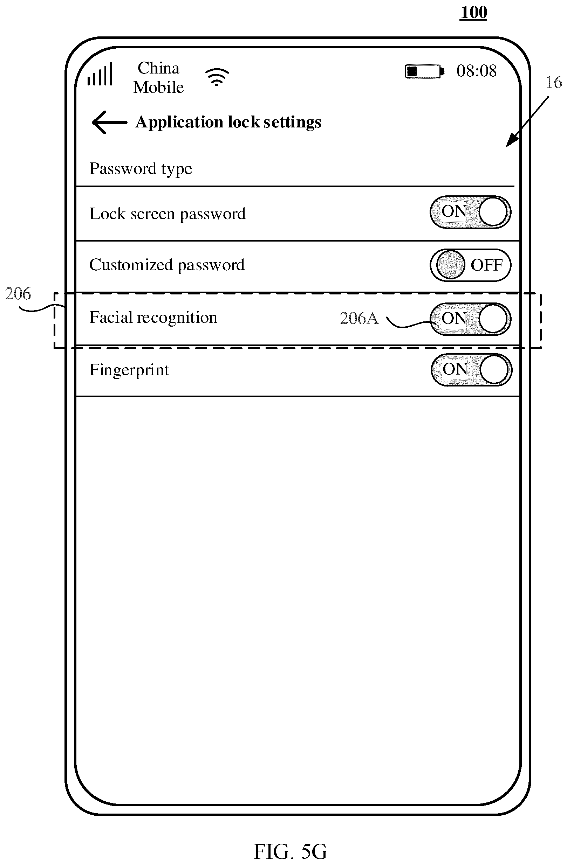

As shown in FIG. 5E, the user interface 15 may further include a setting control 205 of Application lock. The electronic device 100 may receive an input operation (for example, a touch operation) performed on the setting control 205, and in response to the input operation, the electronic device may display a setting interface 16 of Application lock shown in FIG. 5F. The setting interface 16 may include a plurality of password type setting bars of Application lock such as a setting bar of Lock screen password, a setting bar of Customized password, a setting bar 206 of Facial recognition, and a setting bar of Fingerprint. In some embodiments of this application, a password type may further include voiceprint recognition, screen touch behavior feature recognition, or the like (not shown in FIG. 5F). An on/off control is displayed on each setting bar, and the on/off control may be configured to enable or disable use of a type of password. For example, as shown in FIG. 5F, the on/off control 206A is in an off state. The electronic device 100 may receive an input operation (for example, a touch operation) performed on the on/off control 206A of the application, and in response to the input operation, the electronic device 100 may switch a state of the on/off control 206A to an on state shown in FIG. 5G.

In addition to a manner of locking an application shown in FIG. 5A to FIG. 5G, the user may lock the application in another manner. This is not specifically limited herein. For example, Application 1 is locked in a setting interface of Application 1.

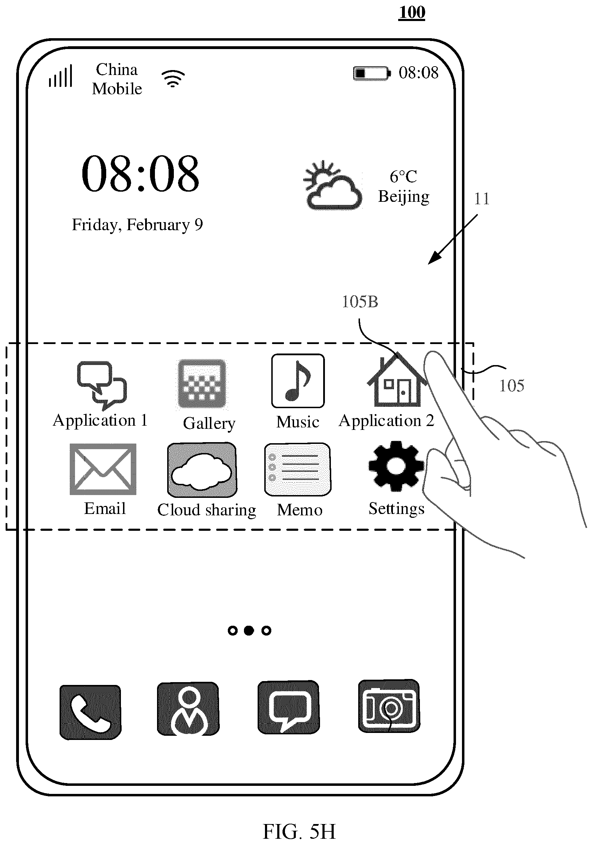

For example, FIG. 5H to FIG. 5M each show a user interface in which an application function of Application 2 is locked.

As shown in FIG. 5H, the another application icon 105 of the user interface 11 includes an icon 105B of Application 2. Refer to FIG. 5E. Application 2 is an unlocked application. The electronic device 100 may receive an input operation (for example, a touch operation) performed on the icon 105B of Application 2, and in response to the input operation, the electronic device may display a user interface 17 of Application 2 shown in FIG. 51.

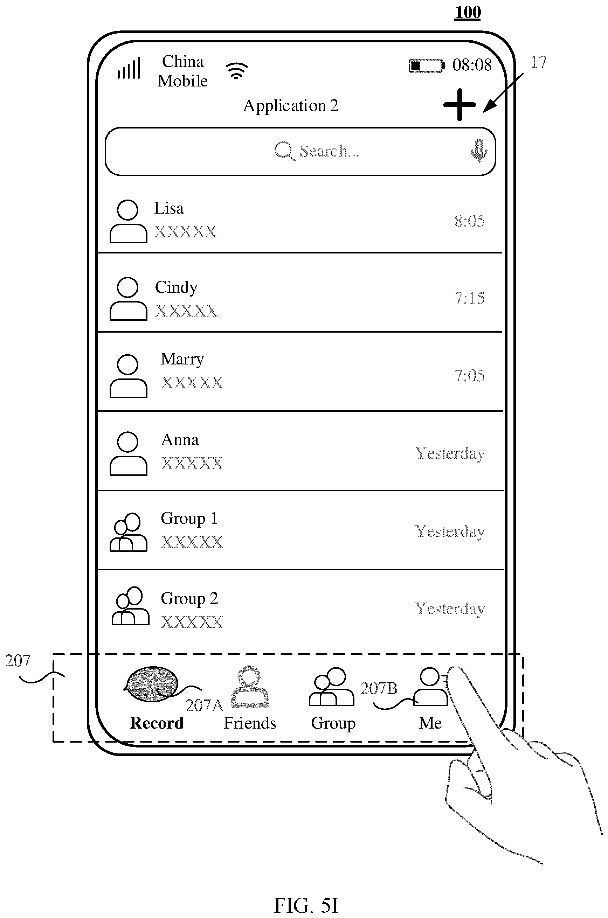

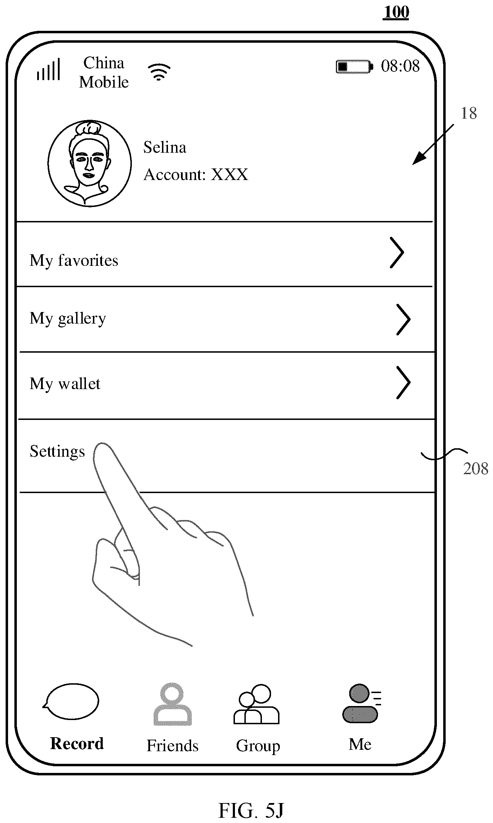

As shown in FIG. 51, the user interface 17 may include a menu tray 207, and the menu tray 207 may include a plurality of menu options such as an option 207A of Record, an option of Friend, an option of Group, and an option 207B of Me. Content displayed in the user interface 17 is related to a currently selected option in the menu tray 207. As shown in FIG. 5I, the option 207A of Record in the current menu tray 207 is selected, and the user interface 17 is configured to display a plurality of "Chat record" entries. The electronic device 100 may receive an input operation (for example, a touch operation) performed on the option 207B of Me, and in response to the input operation, the electronic device may display an interface 18 of Me of Application 2 shown in FIG. 5J.

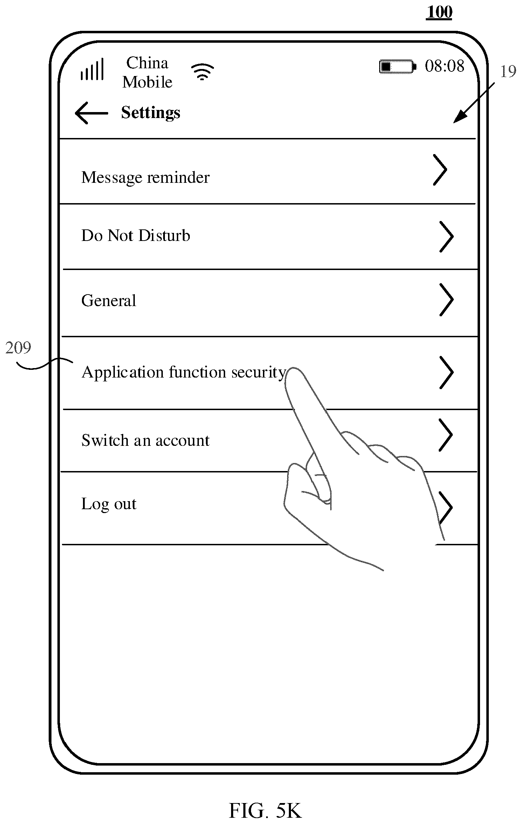

As shown in FIG. 5J, the interface 18 of Me includes a setting entry 208 of Application 2, and may further include another setting entry, for example, a setting entry of My favorites, a setting entry of My gallery, and a setting entry of My wallet. The electronic device 100 may receive an input operation (for example, a touch operation) performed on the setting entry 208, and in response to the input operation, the electronic device may display a setting interface 19 of Application 2 shown in FIG. 5K.

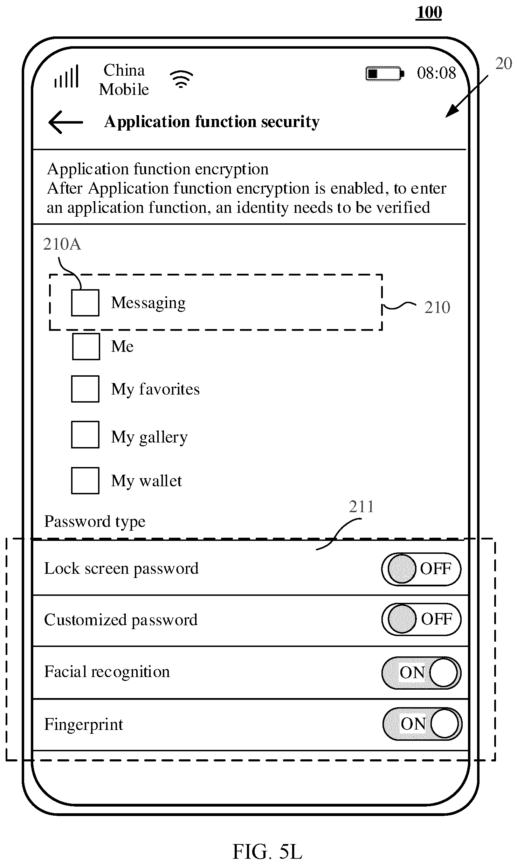

As shown in FIG. 5K, the setting interface 19 may include a setting entry 209 of Application function security of Application 2, and may further include another setting entry, for example, a setting entry of Message reminder, a setting entry of Do Not Disturb, a setting entry of General, a setting entry of Switch an account, and a setting of Log out. The electronic device 100 may receive an input operation (for example, a touch operation) performed on the setting entry 209, and in response to the input operation, the electronic device may display a setting interface 20 of Application function security shown in FIG. 5L.

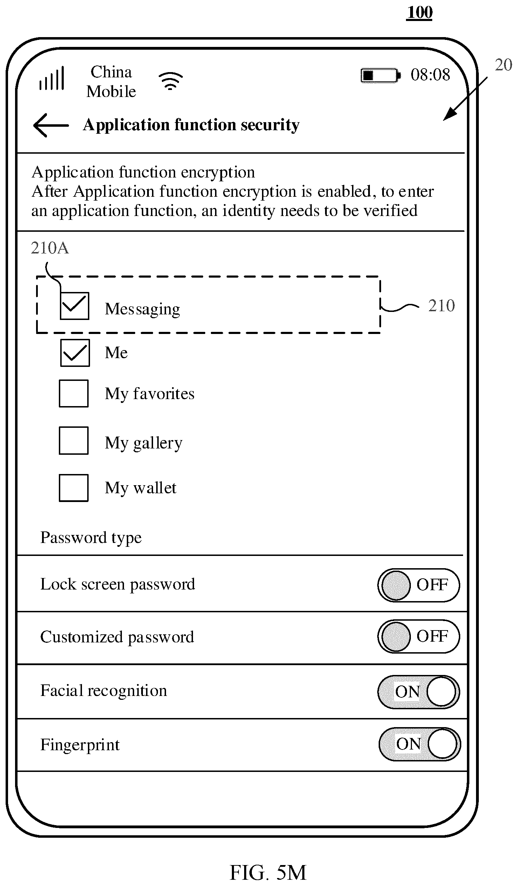

As shown in FIG. SL, the setting interface 20 may include a setting bar that may include at least one application function of Application 2, and a password type setting bar 211 of the application function of Application 2. As shown in FIG. SL, an enabled password type of the application function of Application 2 may include facial recognition and a fingerprint. For example, the setting bar of the at least one application function may include a setting bar 210 of Messaging, a setting bar of Me, a setting bar of My favorites, a setting bar of My gallery, and a setting entry of My wallet. An on/off control is displayed on each setting bar, and the on/off control may be configured to enable or disable a protection lock of an application function access entry. For example, an on/off control 210A is displayed on the setting bar 210 of Messaging. As shown in FIG. SL, the on/off control 210A is in an off state. The electronic device 100 may receive an input operation (for example, a touch operation) performed on the on/off control 210A of the application, and in response to the input operation, the electronic device may switch a state of the on/off control 210A to an on state shown in FIG. 5M. As shown in FIG. 5M, the user may further set Me of Application 2 as a locked application function.

In addition to a manner of locking an application function shown in FIG. 5H to FIG. 5M, the user may lock the application function in another manner. This is not specifically limited herein.

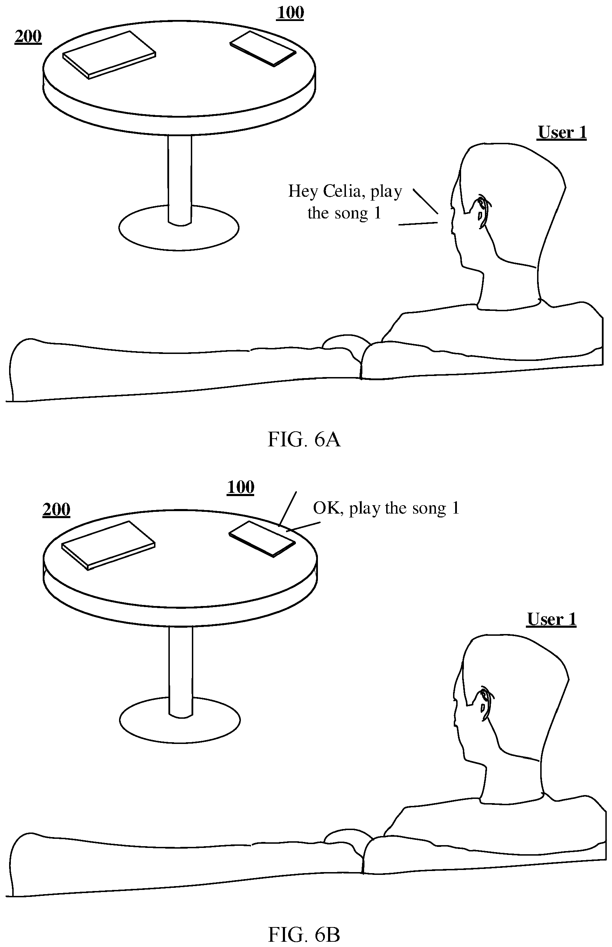

For example, as shown in FIG. 6A to FIG. 6J, the user 1 is not within the detection range in which the electronic device 100 performs local authentication, and the electronic device 100 cannot collect biometric feature information of the user 1.

As shown in FIG. 6A, the user 1 is not within a detection range of local authentication of the electronic device 100 and the electronic device 200, and the user 1 sends a voice instruction 1 "Hey Celia, play the song 1". The voice instruction 1 includes a wakeup keyword "Hey Celia" of the electronic device 100. After receiving and recognizing the voice instruction 1, when the electronic device 100 recognizes that a voiceprint feature of the voice instruction 1 conforms to a voiceprint feature of the user 1, and determines that Music is an unlocked application shown in FIG. 5E, the electronic device 100 directly plays the song 1 in response to the voice instruction of the user 1, and sends a voice response "OK, play the song 1" as shown in FIG. 6B. In this case, the electronic device may display a playing interface of the song 1, or may be in a lock screen state. This is not specifically limited herein.

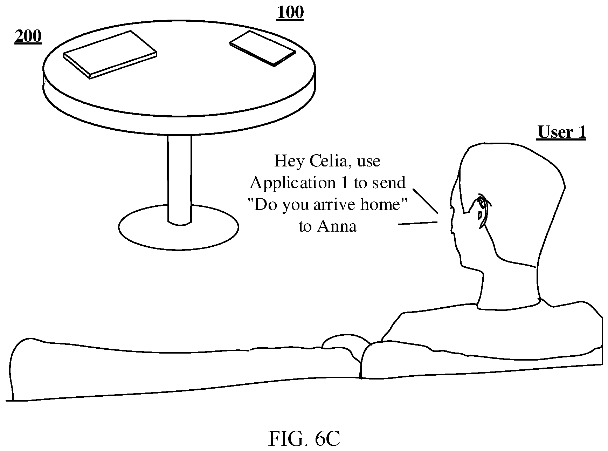

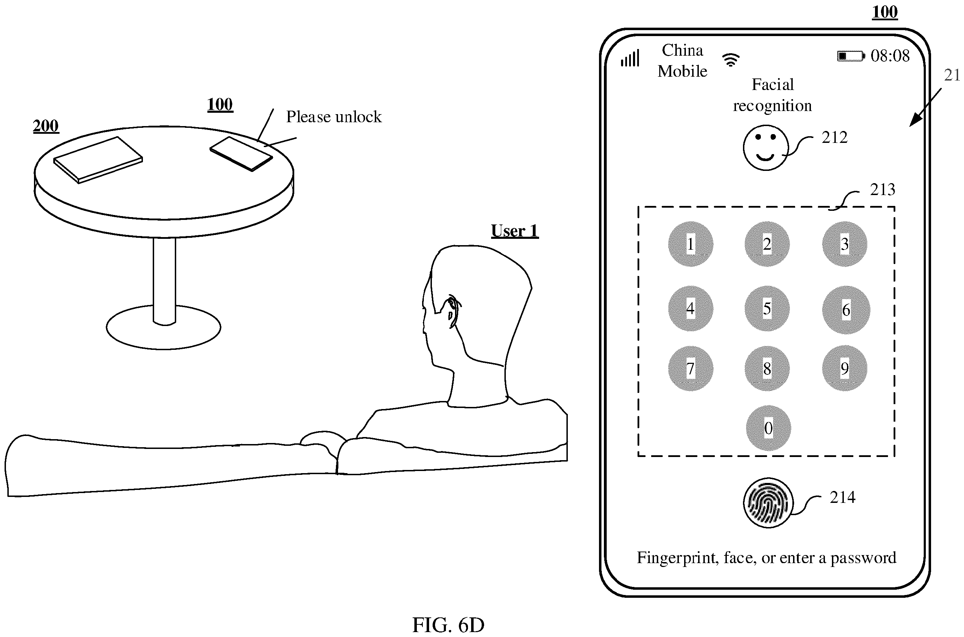

As shown in FIG. 6C, the user 1 is not within a detection range of local authentication of the electronic device 100 and the electronic device 200, and the user 1 sends a voice instruction 1 "Hey Celia, use Application 1 to send 'Do you return home' to Anna". The voice instruction 1 includes a wakeup keyword "Hey Celia" of the electronic device 100. After the electronic device 100 receives and recognizes the voice instruction 1, when the electronic device 100 recognizes that a voiceprint feature of the voice instruction 1 conforms to a voiceprint feature of the user 1, and determines that Application 1 is a locked application shown in FIG. 5E, the electronic device 100 starts cross-device authentication, to obtain the identity authentication information of the electronic device 200. Because the user 1 is not within the detection range of the electronic device 200 either, the identity authentication information of the electronic device 200 does not match the preset information. Therefore, the electronic device 100 does not execute the voice instruction, and may send a voice response "Please unlock" shown in FIG. 6D. In some embodiments, in this case, the electronic device 100 may display an unlocking interface 21 of Application 1 shown in FIG. 6D. It can be learned from FIG. 5G that a password type of Application 1 includes facial recognition, a fingerprint, and a lock screen password. Correspondingly, the unlocking interface 21 shown in FIG. 6D may include a control 212 of Facial recognition, a control 213 of Fingerprint, and a control 214 of Lock screen password. In some embodiments, the electronic device 100 may alternatively be in a screen-off state. This is not specifically limited herein.

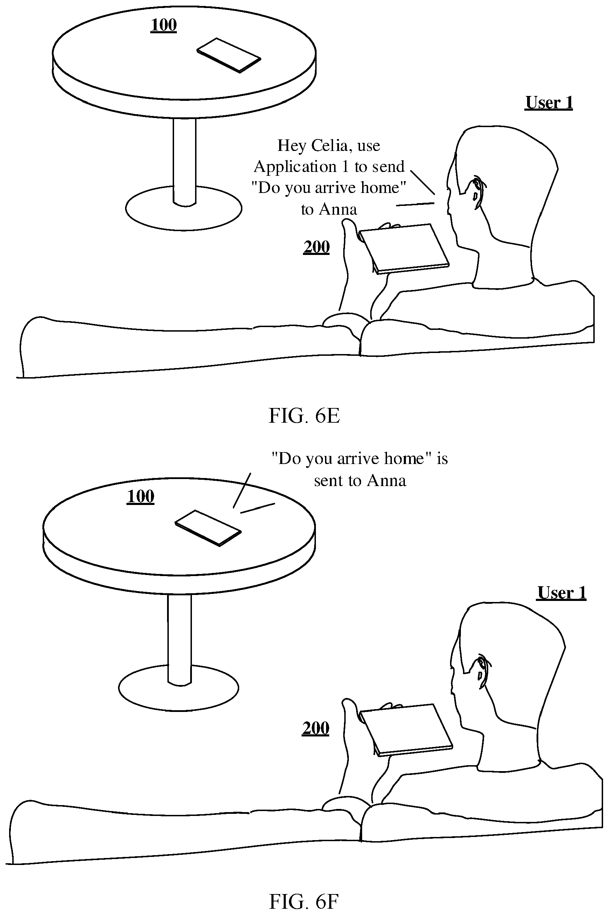

As shown in FIG. 6E, the user 1 is not in a detection range in which the electronic device 100 performs local authentication, and the user 1 is using the electronic device 200, and sends a voice instruction 1 "Hey Celia, use Application 1 to send 'Do you return home' to Anna". The voice instruction 1 includes a wakeup keyword "Hey Celia" of the electronic device 100. After the electronic device 100 receives and recognizes the voice instruction 1, when the electronic device 100 recognizes that a voiceprint feature of the voice instruction 1 conforms to a voiceprint feature of the user 1, and determines that Application 1 is a locked application shown in FIG. 5E, the electronic device 100 starts cross-device authentication, to obtain the identity authentication information of the electronic device 200. When the identity authentication information of the electronic device 200 matches the preset information, the electronic device 100 sends, in response to the voice instruction 1, a message "Do you return home" to "Anna" by using Application 1, and may send a voice response "'Do you return home' is sent to Anna" shown in FIG. 6F.

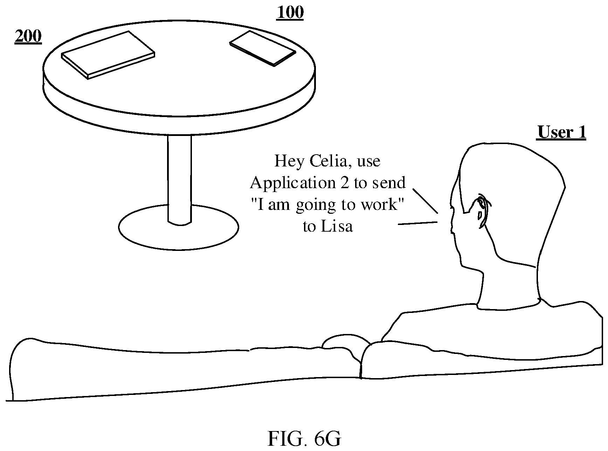

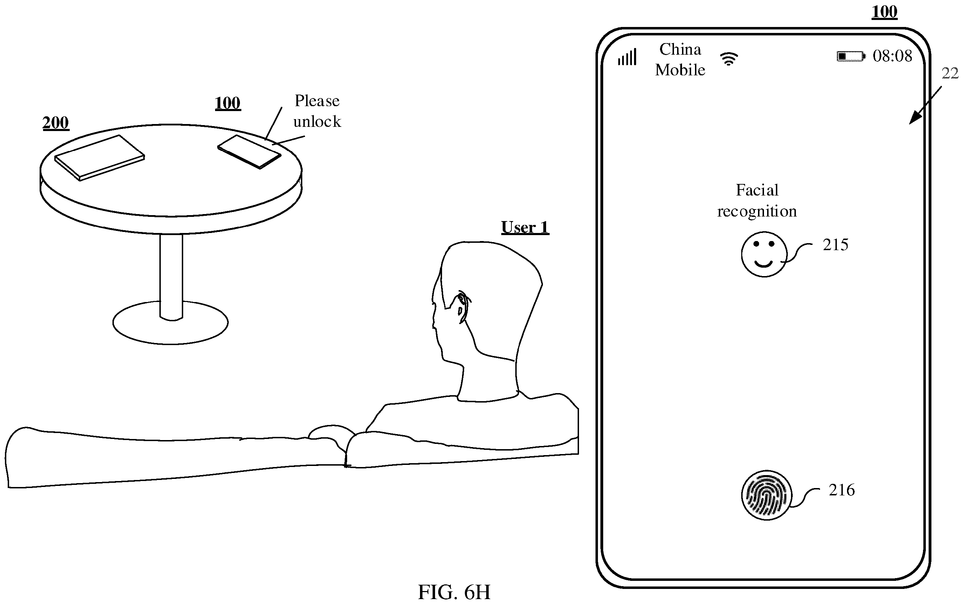

As shown in FIG. 6G, the user 1 is not within a detection range of local authentication of the electronic device 100 and the electronic device 200, and the user 1 sends a voice instruction 1 "Hey Celia, use Application 2 to send 'I am going to work' to Lisa". The voice instruction 1 includes a wakeup keyword "Hey Celia" of the electronic device 100. After the electronic device 100 receives and recognizes the voice instruction 1, when the electronic device 100 recognizes that a voiceprint feature of the voice instruction conforms to a voiceprint feature of the user 1, and determines that a "Messaging" application function of Application 2 is a locked application function shown in FIG. 5M, the electronic device 100 starts cross-device authentication, to obtain the identity authentication information of the electronic device 200. Because the user 1 is not within the detection range of the electronic device 200 either, the identity authentication information of the electronic device 200 does not match the preset information. Therefore, the electronic device 100 does not execute the voice instruction, and may send a voice response "Please unlock" shown in FIG. 6H. In some embodiments, the electronic device 100 may display an unlocking interface 22 of the "Messaging" application function of Application 2 shown in FIG. 6H. It can be learned from FIG. 5M that a password type of the application function of Application 2 includes facial recognition and a fingerprint. Correspondingly, the unlocking interface 22 shown in FIG. 6H includes a control 215 of Facial recognition and a control 216 of Fingerprint.

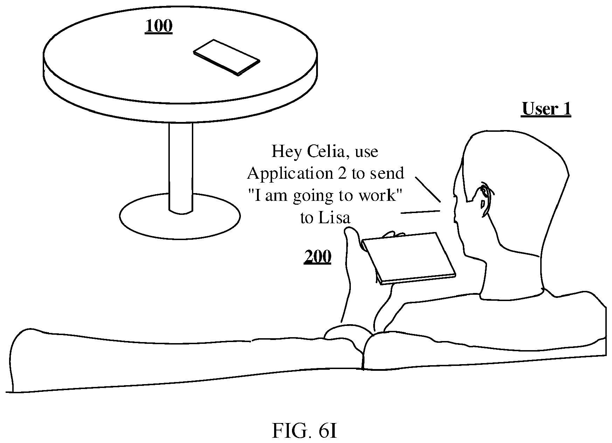

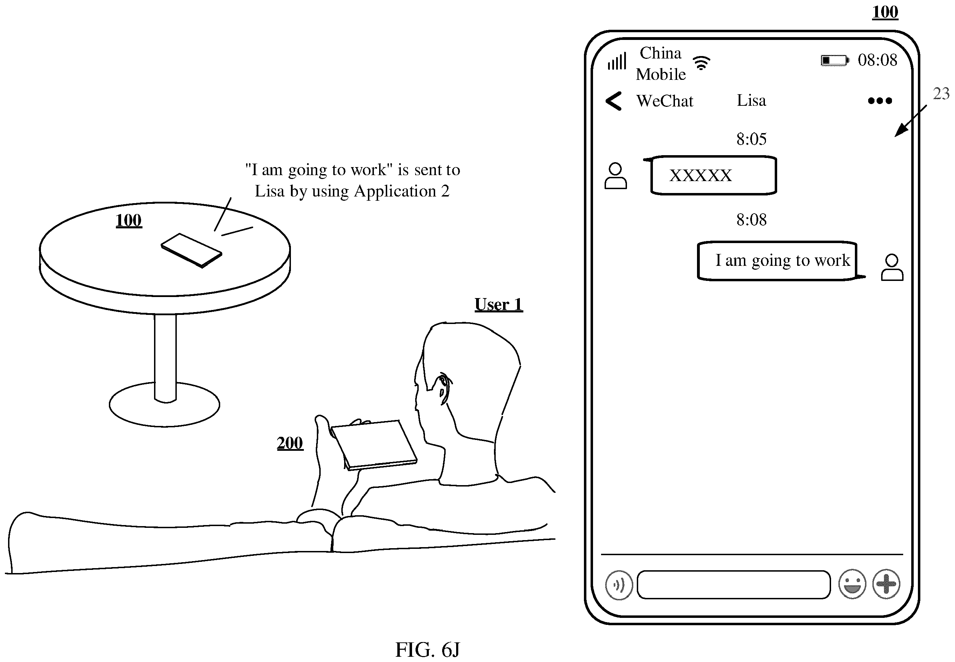

As shown in FIG. 6I, the user 1 is not in a detection range in which the electronic device 100 performs local authentication, and the user 1 is using the electronic device 200, and sends a voice instruction 1 "Hey Celia, use Application 2 to send 'I am going to work' to Lisa". The voice instruction 1 includes a wakeup keyword "Hey Celia" of the electronic device 100. After the electronic device 100 receives and recognizes the voice instruction 1, when the electronic device 100 recognizes that a voiceprint feature of the voice instruction conforms to a voiceprint feature of the user 1, and determines that a "Messaging" application function of Application 2 is a locked application function shown in FIG. 5M, the electronic device 100 starts cross-device authentication, to obtain the identity authentication information of the electronic device 200. When the electronic device 100 determines that the identity authentication information of the electronic device 200 matches the preset information, the electronic device 100 may send, in response to the voice instruction 1, "I am going to work" to the Lisa by using Application 2, and may send a voice response "'I am going to work' is sent to Lisa by using Application 2" as shown in FIG. 6J. In some embodiments, the electronic device 100 may display a messaging interface 23 for Lisa of Application 2, or may remain in a lock screen state. This is not specifically limited herein.

In this embodiment of this application, the locked application may include a locked low-risk application and a locked high-risk application, and the locked application function may also include a locked low-risk application function and a locked high-risk application function. A locked low-risk function may include entering the locked low-risk application and entering the locked low-risk application function. A locked high-risk function may include entering the locked high-risk application and the locked high-risk application function.

Voice control scenario 3: In this scenario, the electronic device 100 may identify an identity of a user based on a voice of the user. After the electronic device 100 receives the voice instruction 1, if recognizing, based on the voice, that the user is the preset user 1, and determining that the voice instruction 1 triggers a locked low-risk function 1, the electronic device 100 starts cross-device authentication. Only when the electronic device 100 determines that the identity authentication information of the electronic device 200 matches the preset information, the electronic device 100 starts, in response to the voice instruction 1, the function triggered by the voice instruction 1. After receiving the voice instruction 1, when the electronic device 100 determines that the voice instruction 1 triggers a locked high-risk function, the electronic device 100 does not start the function triggered by the voice instruction 1.

It can be understood that, in Voice control scenario 3, a locked high-risk function does not support cross-device authentication, and the electronic device can start the locked high-risk function only after the electronic device 100 receives a local unlocking operation performed by the user on the electronic device 100.

It should be noted that, in Voice control scenario 3, when the voice instruction 1 triggers an unlocked function, after the electronic device 100 receives the voice instruction 1, the electronic device 100 may start cross-device authentication, and only when determining that identity authentication succeeds, start, in response to the voice instruction 1, the function triggered by the voice instruction 1; or the electronic device 100 may directly start, in response to the voice instruction 1, the function triggered by the voice instruction 1, without a need to start cross-device authentication. This is not specifically limited herein.

In this embodiment of this application, a locked low-risk (high-risk) application may be set by the user, or may be set by the electronic device by default. A locked high-risk (low-risk) application function may be set by the user, or may be set by the electronic device by default. This is not specifically limited herein. For example, the electronic device considers by default that application functions such as Transfer, Payment, and Red packet of all applications are high-risk application functions.

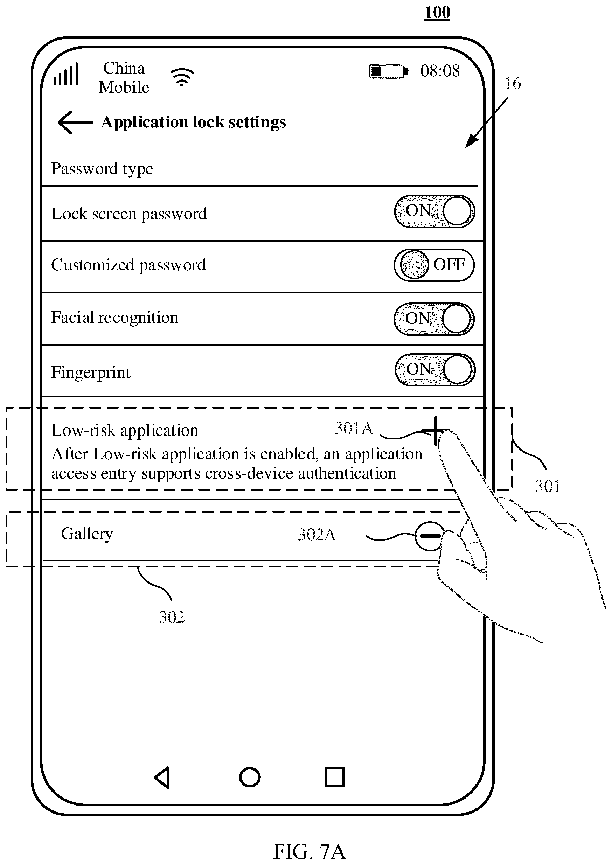

For example, FIG. 7A to FIG. 7C each show a user interface in which a user sets a low-risk application in locked applications. In this embodiment of this application, an application other than the low-risk application in the locked applications is a high-risk application, and the high-risk application does not support cross-device authentication.

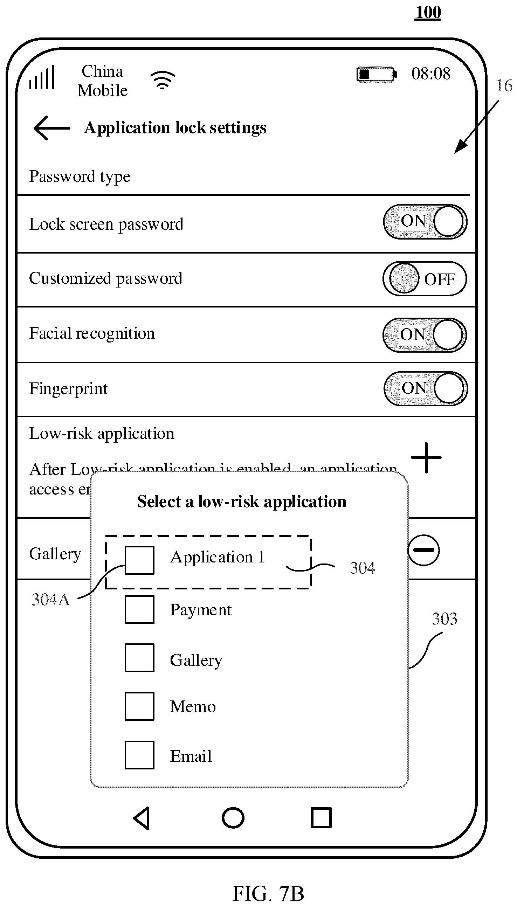

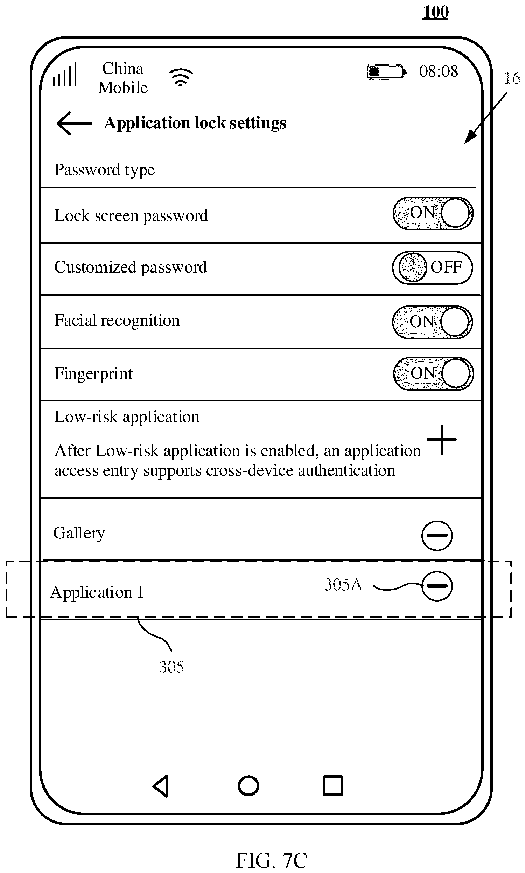

As shown in FIG. 7A, a user interface 16 may further include a low-risk setting bar 301 and a setting bar of an added low-risk application. For example, the setting bar of an added low-risk application includes a setting bar 302 of Gallery, the setting bar 302 of Gallery is provided with a removal control 302A, and the removal control 302A is configured to remove Gallery from the added low-risk application. The low-risk setting bar 301 is provided with an addition control 301A. The electronic device 100 may receive an input operation (for example, a touch operation) performed on the addition control 301A, and in response to the input operation, the electronic device may display, in the user interface 16, a window 303 shown in FIG. 7B. The window 303 includes setting bars of a plurality of locked applications such as a setting bar 304 of Application 1, a setting bar of Payment, a setting bar of Gallery, a setting bar of Memo, and a setting bar of Email. A setting bar of each locked application displays an on/off control, and the on/off control may be configured to set the application as a low-risk application. For example, the setting bar 304 of Application 1 displays an on/off control 304A. The electronic device 100 may receive an input operation (for example, a touch operation) performed on the on/off control 304A of an application, and in response to the input operation, the electronic device may display, in the user interface 16, a setting bar 305 of Application 1 shown in FIG. 7C. The setting bar 305 of Application 1 is provided with a removal control 305A, and the removal control 305A is configured to remove Application 1 from the added low-risk application.

Refer to FIG. 6E and FIG. 6F. The user 1 is using the electronic device 200, and intends to control, based on the voice instruction 1, the electronic device 100 to send a message to "Anna" by using Application 1. When the electronic device 100 receives and recognizes the voice instruction 1 of the user 1, and determines that Application 1 is a locked low-risk application shown in FIG. 7C, the electronic device 100 starts cross-device authentication, to obtain the identity authentication information of the electronic device 200. When the electronic device 100 determines that the identity authentication information of the electronic device 200 matches the preset information, the electronic device 100 sends, in response to the voice instruction 1, a message to "Anna" by using Application 1.

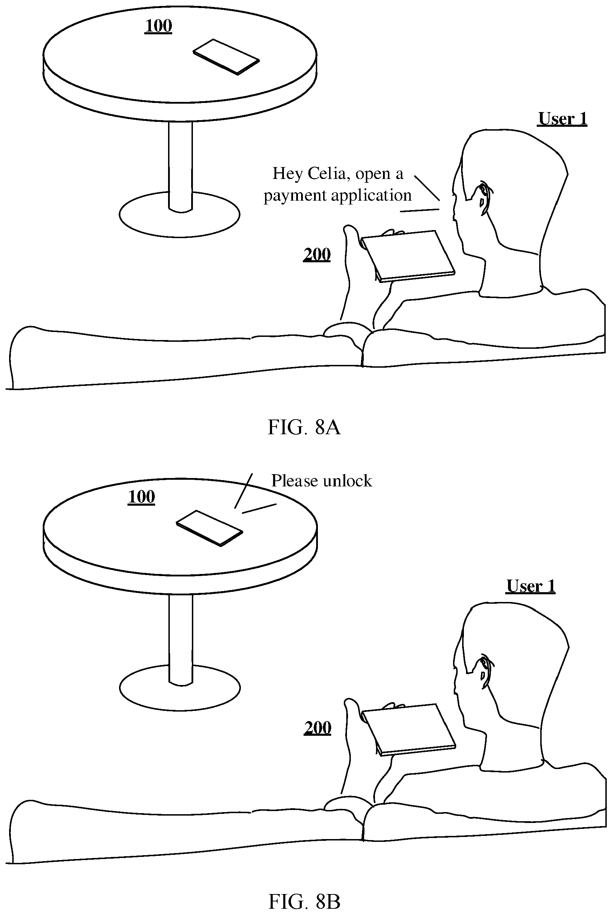

For example, as shown in FIG. 8A to FIG. 8D, the user 1 is not within the detection range in which the electronic device 100 performs local authentication, and the electronic device 100 cannot collect biometric feature information of the user 1.

As shown in FIG. 8A, the user 1 is using the electronic device 200, and sends a voice instruction 1 "Hey Celia, open a payment application". The voice instruction 1 includes a wakeup keyword "Hey Celia" of the electronic device 100. After receiving and recognizing the voice instruction 1, when the electronic device 100 recognizes that a voiceprint feature of the voice instruction conforms to a voiceprint feature of the user 1, and determines that the payment application is a high-risk application (in other words, not the low-risk application shown in FIG. 7C), the electronic device 100 does not execute the voice instruction 1, and may send a voice response "Please unlock" shown in FIG. 8B.

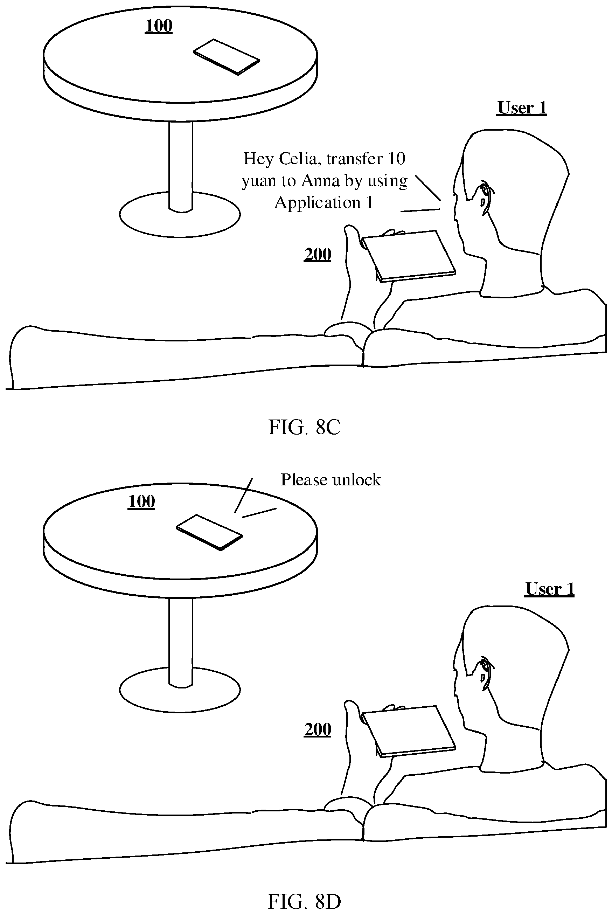

In some embodiments, the electronic device 100 considers by default that a transfer function in all applications is a high-risk application function. As shown in FIG. 8C, the user 1 is using the electronic device 200, and sends a voice instruction 1 "Hey Celia, transfer 10 yuan to Anna by using Application 1". The voice instruction 1 includes a wakeup keyword "Hey Celia" of the electronic device 100. After the electronic device 100 receives and recognizes the voice instruction 1, when the electronic device 100 recognizes that a voiceprint feature of the voice instruction conforms to a voiceprint feature of the user 1, and determines that Transfer is a high-risk application function, the electronic device 100 does not execute the voice instruction, and may send a voice response "Please unlock" shown in FIG. 8D. It can be understood that the high-risk application function does not support cross-device authentication, even if the application function is an application function of a locked low-risk application or an application function of an unlocked application.

In some embodiments of this application, in the three voice control scenarios, when the electronic device 100 receives the voice instruction 1 and starts cross-device authentication, the electronic device 100 obtains the identity authentication information of the electronic device 200. Only when the electronic device 100 determines that the identity authentication information of the electronic device 200 matches the preset information and that a distance between the electronic device 200 and the electronic device 100 is less than a preset distance value, the electronic device 100 starts the function 1 triggered by the voice instruction 1. It can be understood that, only when the distance between the electronic device 200 and the electronic device 100 is less than the preset distance value, the electronic device 100 determines that the identity authentication information of the electronic device 200 is a secure and reliable authentication result.

In some embodiments of this application, in the three voice control scenarios, when the electronic device 100 receives the voice instruction 1 and starts cross-device authentication, the electronic device 100 obtains the identity authentication information of the electronic device 200. Only when the electronic device 100 determines that the identity authentication information of the electronic device 200 matches the preset information and that the electronic device 200 is in a secure state, the electronic device 100 starts the function 1 corresponding to the voice instruction 1. In some embodiments, that the electronic device 200 is in the secure state may mean that the electronic device 200 is in a non-root state, there is no Trojan horse virus, and traffic monitoring is normal. It can be understood that, only when the electronic device 200 is in the secure state, the electronic device 100 determines that the identity authentication information of the electronic device 200 is a secure and reliable authentication result.

In some embodiments of this application, in the three voice control scenarios, when the electronic device 100 receives the voice instruction 1 and starts cross-device authentication, the electronic device 100 obtains the identity authentication information of the electronic device 200. Only when the electronic device 100 determines that the identity authentication information of the electronic device 200 matches the preset information and determines that a priority of an authentication manner of local continuous authentication of the electronic device 200 is not lower than that of the electronic device 100, the electronic device 100 starts the function 1 corresponding to the voice instruction 1. It can be understood that, only when the priority of the authentication manner of local continuous authentication of the electronic device 200 is not lower than that of the electronic device 100, the electronic device 100 determines that the identity authentication information of the electronic device 200 is a secure and reliable authentication result. For example, priorities of authentication manners of local continuous authentication are sorted in descending order as follows: facial recognition (iris recognition), heart rate detection, gait recognition, and screen touch behavior recognition.

In some embodiments of this application, in the three voice control scenarios, when the electronic device 100 receives the voice instruction 1 and starts cross-device authentication, the electronic device 100 obtains the identity authentication information of the electronic device 200. Only when the electronic device 100 determines that the identity authentication information of the electronic device 200 matches the preset information and determines that the electronic device 200 meets at least two of three conditions "a distance between the electronic device 200 and the electronic device 100 is less than a preset distance value", "the electronic device 200 is in the secure state", and "a priority of an authentication manner of local continuous authentication of the electronic device 200 is not lower than that of the electronic device 100", the electronic device 100 starts the function triggered by the voice instruction 1. It can be understood that, only when the electronic device 200 meets at least two of the three conditions, the electronic device 100 determines that the identity authentication information of the electronic device 200 is a secure and reliable authentication result.

In addition, in the three voice control scenarios, in some embodiments, when the electronic device 100 detects biometric feature information of a non-preset user, the electronic device 100 remains in the lock screen state, regardless of whether the identity authentication information sent by the electronic device 200 matches the preset information. In some embodiments, when the electronic device 200 detects non-prestored biometric feature information of a user, the identity authentication information sent by the electronic device 200 to the electronic device 100 may represent that the electronic device 200 detects the biometric feature information of the non-preset user. After receiving the identity authentication information, the electronic device 100 remains in the lock screen state.

The following describes, for a casting control scenario, the cross-device authentication method provided in this embodiment of this application.

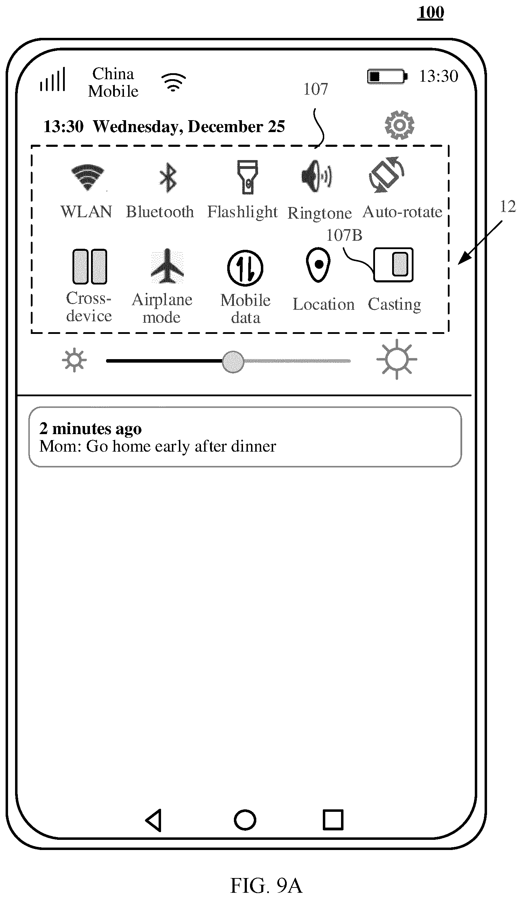

For example, FIG. 9A to FIG. 9 show a casting manner in which an electronic device 100 actively performs casting on an electronic device 200.

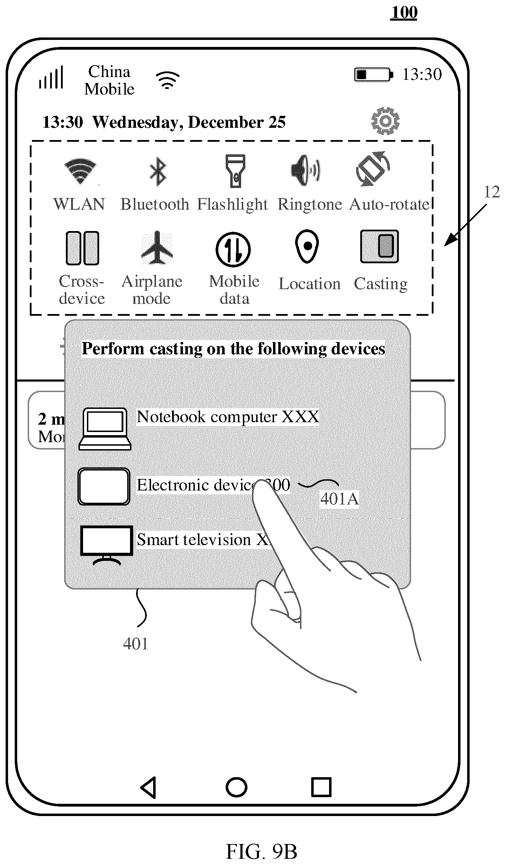

As shown in FIG. 9A, a notification bar interface 12 further includes a control 107B of Casting. When the electronic device may receive an input operation (for example, a touch operation) performed on the control 107B of Casting, in response to the input operation, the electronic device 100 may display a window 401 shown in FIG. 9B.

As shown in FIG. 9B, the window 401 includes an option of at least one casting device, for example, an option of Notebook computer XXX, an option 401A of Electronic device 200, and an option of Smart television XXX. When the electronic device may receive an input operation (for example, a touch operation) performed on the option 401A of Electronic device 200, the electronic device 100 may send a casting request to the electronic device 200 in response to the input operation.

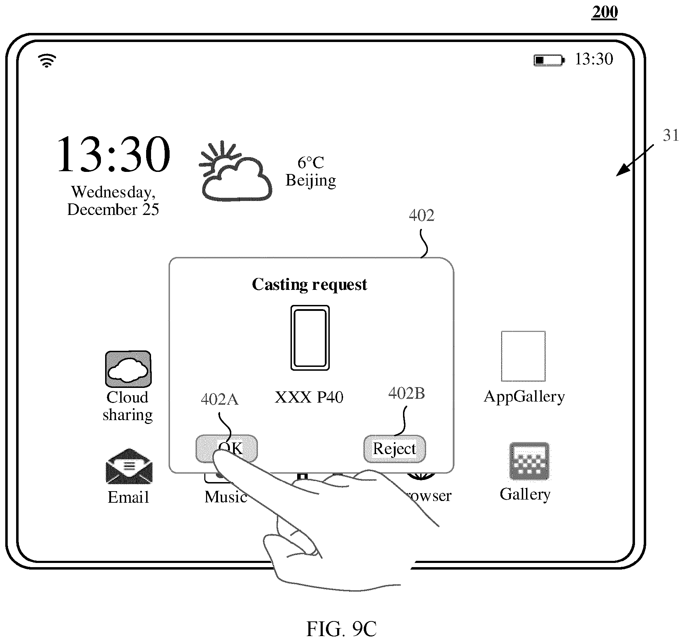

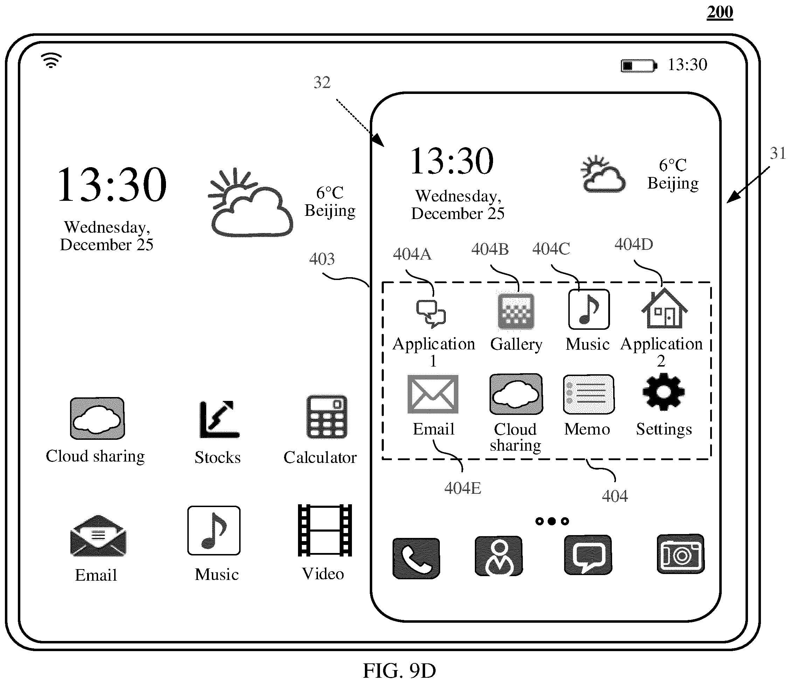

As shown in FIG. 9C, the electronic device 200 displays the window 402 in a user interface 31 based on the casting request sent by the electronic device 100. The window 402 includes a control 402A of OK and a control 402B of Reject. The electronic device 200 may receive an input operation (for example, a touch operation) performed on the control 402B of Reject. In response to the input operation, the electronic device 200 may close the window 402, and may further send a rejection response to the casting request to the electronic device 100. When the electronic device 200 may receive an input operation (for example, a touch operation) performed on the control 402A of OK, in response to the input operation, the electronic device 200 may display, in the user interface 31, a casting window 403 shown in FIG. 9D. The casting window 403 displays casting content sent by the electronic device 100, that is, a user interface 32.

In some embodiments, after receiving the casting request sent by the electronic device 100, the electronic device 200 may directly display the casting window 403 based on the casting content of the electronic device 100, without a need to receive an input operation performed by the user to confirm casting.

In some embodiments, the user interface 32 sent by the electronic device 100 includes a part or all of a current display interface (the user interface 11) of the electronic device 100. As shown in FIG. 9D, the user interface 32 includes interface content other than the status bar in the user interface 11 of the electronic device 100, and includes an icon 404 of another application. For example, the icon 404 of the another application includes an icon 404A of Application 1, an icon 404B of Gallery, an icon 404C of Music, an icon 404D of Application 2, an icon 404E of Email, an icon of Cloud sharing, an icon of Memo, and an icon of Settings.

In some embodiments, the user interface 31 may be a home screen of the electronic device 200. It can be understood that FIG. 9C and FIG. 9D each merely show an example of a user interface of an electronic device 200, and should not constitute a limitation on this embodiment of this application.

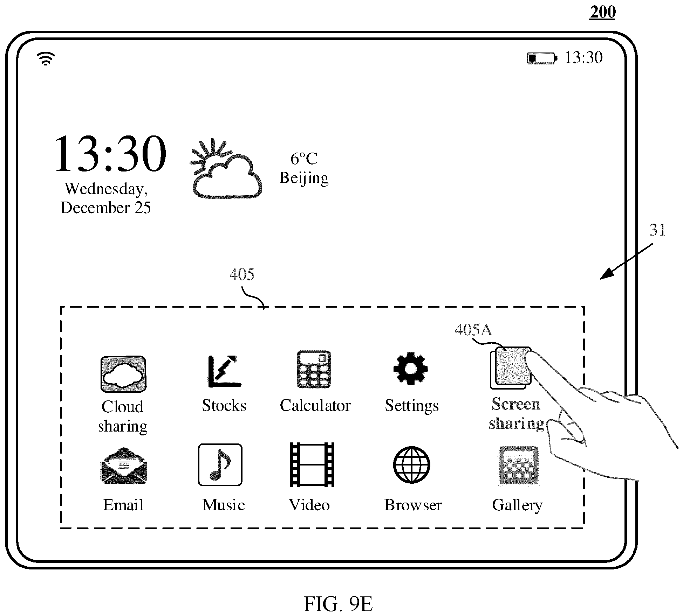

For example, FIG. 9E to FIG. 9H show a casting manner in which an electronic device 200 actively obtains casting content of an electronic device 100.

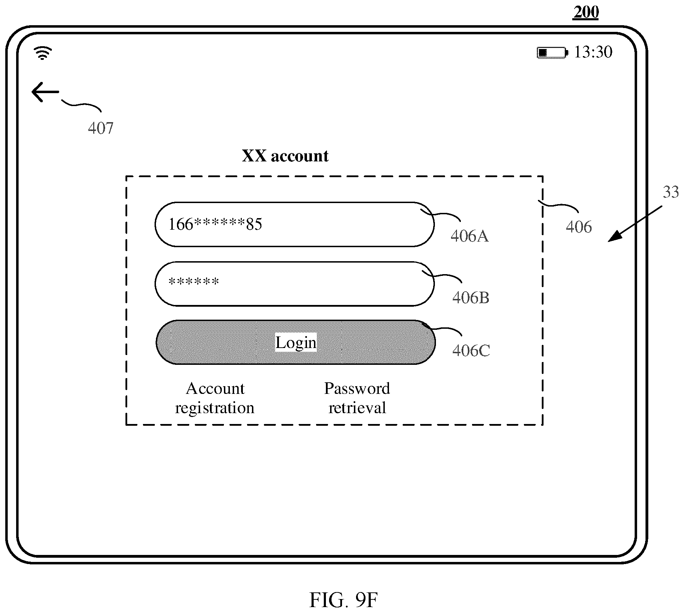

FIG. 9E shows a user interface 31 that is of an electronic device 200 and that is used to display an application installed on the electronic device 200. As shown in FIG. 9E, the user interface 31 includes icons 405 of a plurality of applications such as an icon of Cloud sharing, an icon of Stocks, an icon of Stocks, an icon of Settings, an icon 405A of Screen sharing, an icon of Email, an icon of Music, an icon of Video, an icon of Browser, and an icon of Gallery. When the electronic device may receive an input operation (for example, a touch operation) performed on the icon 405A of Screen sharing, in response to the input operation, the electronic device 200 may display a user interface 33 of Screen sharing shown in FIG. 9F.

As shown in FIG. 9F, the user interface 33 includes an account login control group 406 and a return control 407. The account login control group 406 includes an account input box 406A, a password input box 406B, and a control 406C of Login, and may further include a control of Account registration and a control of Password retrieval. The control of Account registration is configured to register a new account, and the control of Password retrieval is configured to retrieve a password of a registered account. When the electronic device 200 receives an input operation (for example, a touch operation) performed on the return control 407, the electronic device 200 may display a previous page of a current page.

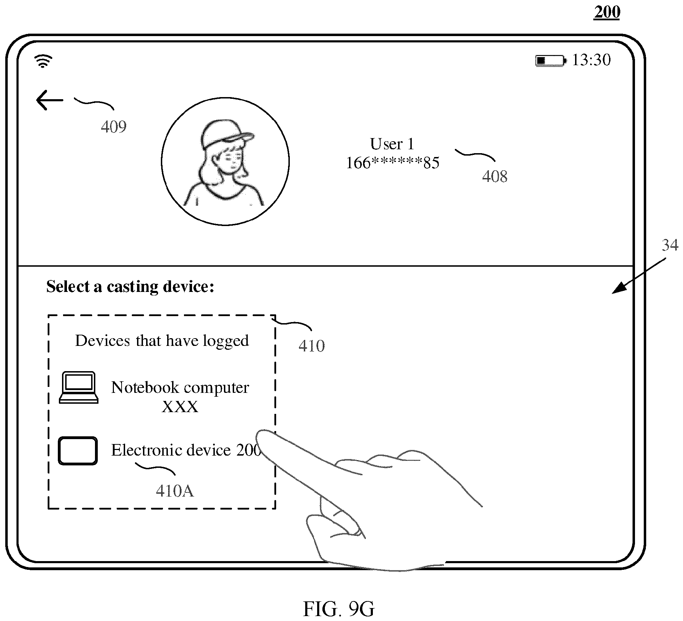

As shown in FIG. 9F, after the user enters an account in the account input box 406A and enters a password corresponding to the account in the password input box 406B, when the electronic device 200 may receive an input operation (for example, a touch operation) performed on the control 406C of Login, the electronic device 200 may display a user interface 34 of the account shown in FIG. 9G.

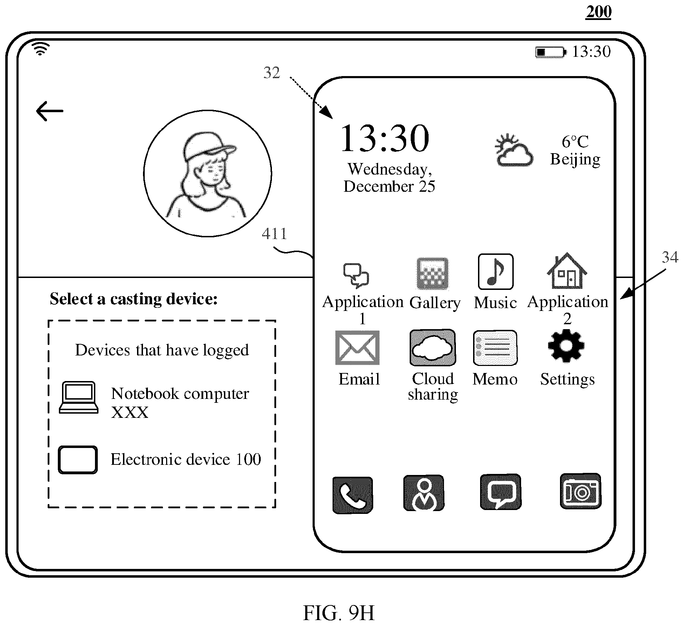

As shown in FIG. 9G, the user interface 33 may include a profile picture and an account 408 of a user, a return control 409, and an option 410 of at least one device that has logged in to a same account, for example, an option of Notebook computer XXX and an option 410A of Electronic device 100. The return control 409 is configured to return to a previous page of a current page. When the electronic device 200 may receive an input operation (for example, a touch operation) performed on the option 410A of the electronic device 200, in response to the input operation, the electronic device 200 may obtain casting content (that is, the user interface 32) from the electronic device 100, and display, in the user interface 34, a casting window 411 shown in FIG. 9H. Display content of the casting window 410 is the user interface 32. The display content of the casting window 411 may be a part or all of a home screen 11 of the electronic device 100, or may be a part or all of a current display interface of the electronic device 100. This is not specifically limited herein.

In this embodiment of this application, the electronic device 100 or the electronic device 200 may alternatively select, for casting, a user interface of an application from an application running on the electronic device 100. This is not specifically limited herein.

In addition to the casting manners, in this embodiment of this application, the casting content of the electronic device 100 may be displayed on the electronic device 200 in another casting manner. This is not specifically limited herein.

It should be noted that in the following casting scenarios, in some embodiments, the electronic device 100 prestores the biometric feature information 1 of the user 1, and does not prestore biometric feature information of a user 2. In some embodiments, the electronic device 100 and the electronic device 200 have a same preset user, and both prestore the biometric feature information 1 of the user 1, but neither prestores biometric feature information of a user 2. Local authentication performed by the electronic device 200 on the user 1 may succeed.

Casting control scenario 1: The electronic device 200 receives and displays casting content 1 sent by the electronic device 100. The electronic device 100 obtains identity authentication information of local continuous authentication of the electronic device 200 in real time. When the electronic device 100 determines that the identity authentication information of the electronic device 200 does not match the preset information, the electronic device 100 stops sending the casting content to the electronic device 200. In this way, the electronic device 100 controls casting based on the identity authentication information of the electronic device 200, to avoid a case in which an unauthorized person views the casting content of the electronic device 100, and improve casting security.

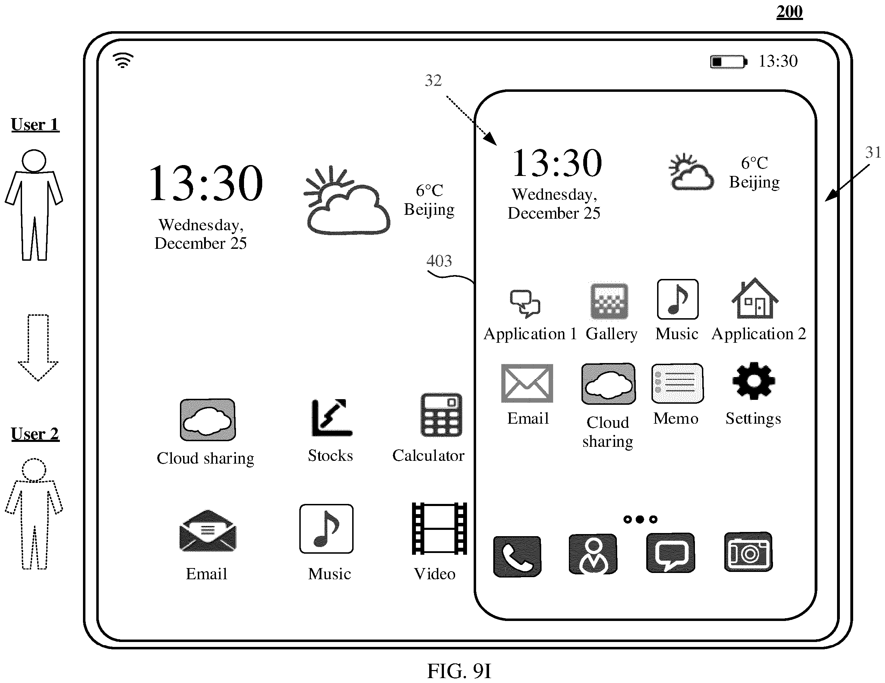

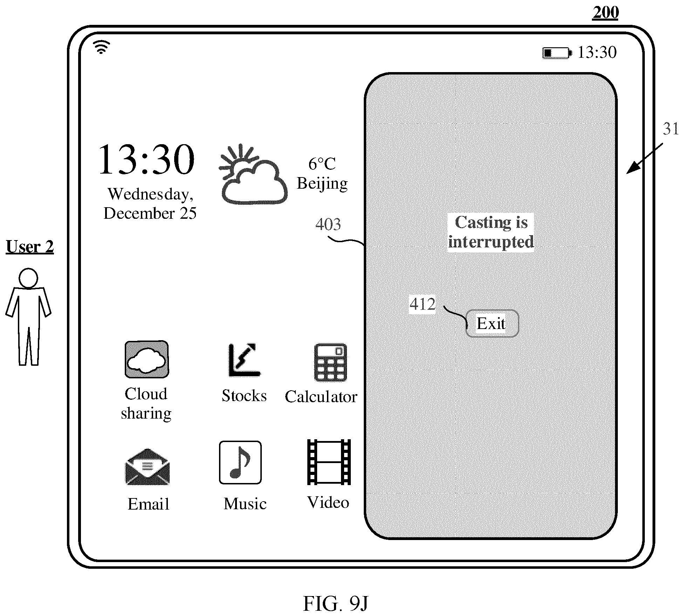

For example, as shown in FIG. 9I, the user 1 is using the electronic device 200, and the casting window 403 of the electronic device 200 displays the user interface 32. As shown in FIG. 9I and FIG. 9J, after a user of the electronic device 200 changes from the user 1 to the user 2, the electronic device 200 stops displaying the casting content of the electronic device 100, and may display a control 412 of Exit and prompt information "Casting is interrupted" in the casting window 403. The user may tap the control 412 of Exit, and in response to the detected tap operation, the electronic device 200 may stop displaying the casting window 403.

In some embodiments, when the user of the electronic device 200 changes from the user 1 to the user 2, the electronic device 100 determines that the identity authentication information of the electronic device 200 does not match the preset information, and the electronic device 100 may further cast a screen unlocking interface of the electronic device 100 on the electronic device 200 for display. It should be noted that the user can continue casting only after unlocking a screen of the electronic device 100. For example, the user may enter a password of the electronic device 100 in the screen unlocking interface of the electronic device 100 displayed by the electronic device 200, and the electronic device 200 sends the password to the electronic device 100. When determining that the password is correct, the electronic device 100 may continue to send the casting content.

In some embodiments, when the user of the electronic device 200 changes from the user 1 to the user 2, and the user 2 is not a preset user of the electronic device 200, the electronic device 200 may further display a screen unlocking interface of the electronic device 200 in full screen. It should be noted that, only after unlocking the screen of the electronic device 200, the user can continue to use the electronic device 200 and view the casting content of the electronic device 100.

In some embodiments of this application, the electronic device 200 receives and displays the casting content 1 of the electronic device 100. The electronic device 200 may receive a touch operation 1 performed on the casting content 1, and send a touch parameter of the touch operation 1 to the electronic device 100. After receiving the touch parameter of the touch operation 1, the electronic device 100 may start cross-device authentication, to obtain the identity authentication information of the electronic device 200. When the electronic device 100 determines, based on the identity authentication information of the electronic device 200, that authentication succeeds, the electronic device 100 may start, in response to the touch operation 1, a function 2 triggered by the touch operation 1, and draw casting content 2 corresponding to the function 2. The electronic device 100 sends the casting content 2 to the electronic device 200, and the electronic device 200 receives and displays the casting content 2 in the casting window. When the electronic device 100 determines that the identity authentication information of the electronic device 200 does not match the preset information, the electronic device 100 may stop sending the casting content to the electronic device 200. It can be understood that, in this embodiment of this application, the electronic device 100 may implement casting control of the electronic device 100 based on the identity authentication information of the electronic device 200, to improve casting security.

Based on different features of the function 2 triggered by the touch operation 1, the following separately describes different casting control scenarios.

Casting control scenario 2: In this scenario, when a function 2 triggered by a touch operation 1 is a locked function or an unlocked function, the electronic device 100 needs to perform cross-device authentication, and only after authentication succeeds, starts the function 2 triggered by the touch operation, to draw corresponding casting content and send the casting content to the electronic device 200.

It can be understood that, different from the casting scenario 2, in the casting control scenario 1, the electronic device 100 obtains the identity authentication information of the electronic device 200 in real time. Regardless of whether a touch operation performed on the casting content is received, when the electronic device 100 determines that the identity authentication information of the electronic device 200 does not match the preset information, the electronic device 100 stops sending the casting content to the electronic device 200.

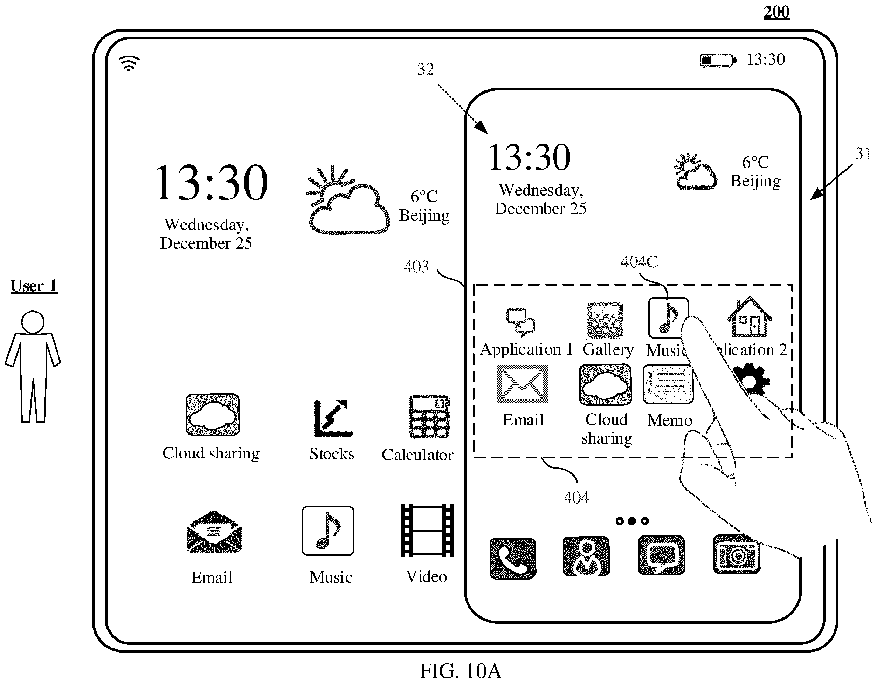

For example, as shown in FIG. 10A to FIG. 10D, the user 1 is not within the detection range in which the electronic device 100 performs local authentication, and the electronic device 100 cannot collect biometric feature information of the user 1.

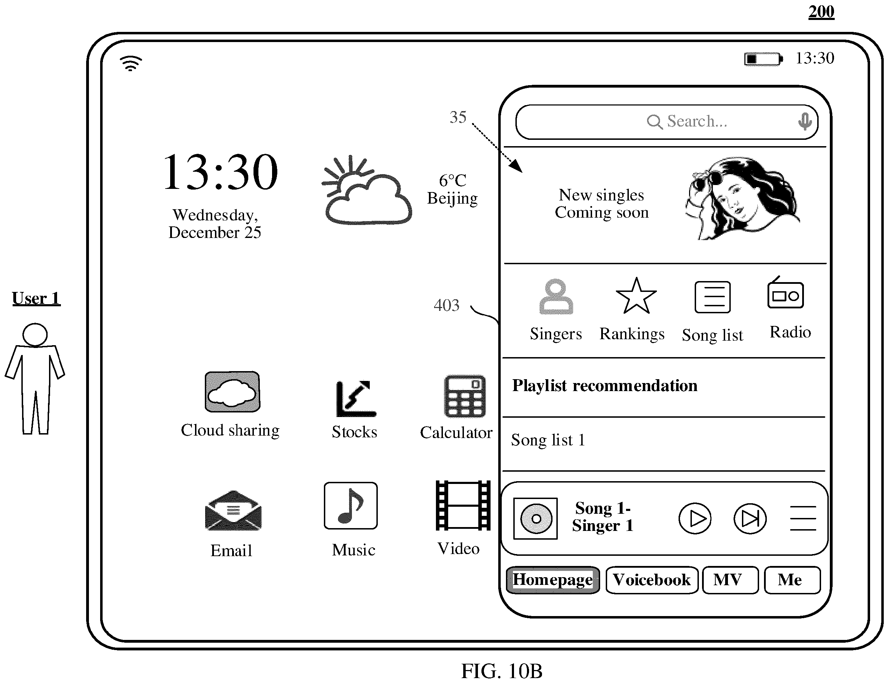

As shown in FIG. 10A, the user 1 is using the electronic device 200. The casting window 403 displayed by the electronic device 200 includes the icon 404C of Music. Refer to FIG. 5E. Music is an unlocked application. The electronic device 200 may receive a touch operation 1 (for example, a tap operation) performed on the icon 404C of Music, and notify the electronic device 100 of such a touch input. After receiving a notification from the electronic device 200, when the electronic device 100 obtains the identity authentication information of the electronic device 200, and determines that the identity authentication information of the electronic device 200 matches the preset information, the electronic device 100 may draw a home page interface 35 of the application Music in response to the touch operation 1. The electronic device 100 sends the home page interface 35 to the electronic device 200, and the electronic device 200 receives and displays, in the casting window 403, the home page interface 35 shown in FIG. 10B.

It should be noted that when the electronic device 200 displays the casting content sent by the electronic device 100, the electronic device 100 may be in a lock screen state, or may display the casting content, or may display another application interface. This is not specifically limited herein.

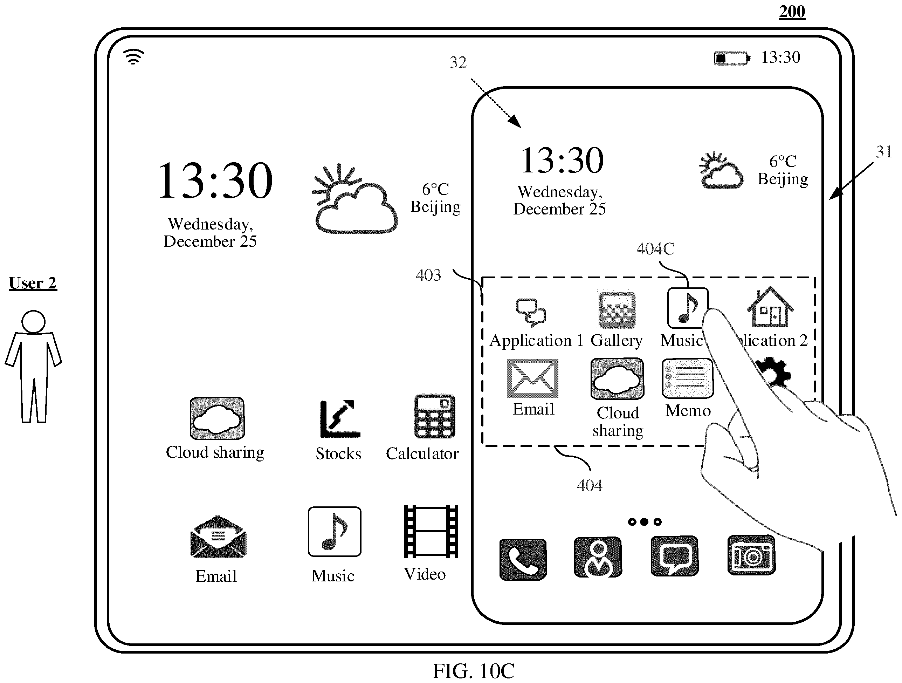

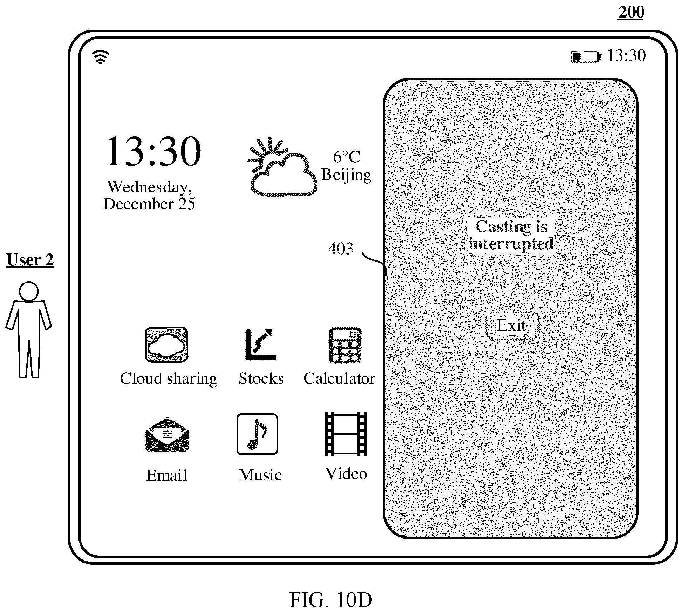

As shown in FIG. 10C, the user 2 is using the electronic device 200, and identity authentication performed by the electronic device 200 on the user 2 fails. The electronic device 200 may receive a touch operation 1 (for example, a tap operation) performed on the icon 404C of Music, and notify the electronic device 100 of the touch operation. After receiving a notification from the electronic device 200, the electronic device 100 starts cross-device authentication. When determining that the identity authentication information of the electronic device 200 does not match the preset information, the electronic device 100 stops sending the casting content to the electronic device 200, and the electronic device 200 displays, in the casting window 403, prompt information "Casting is interrupted" shown in FIG. 10D.

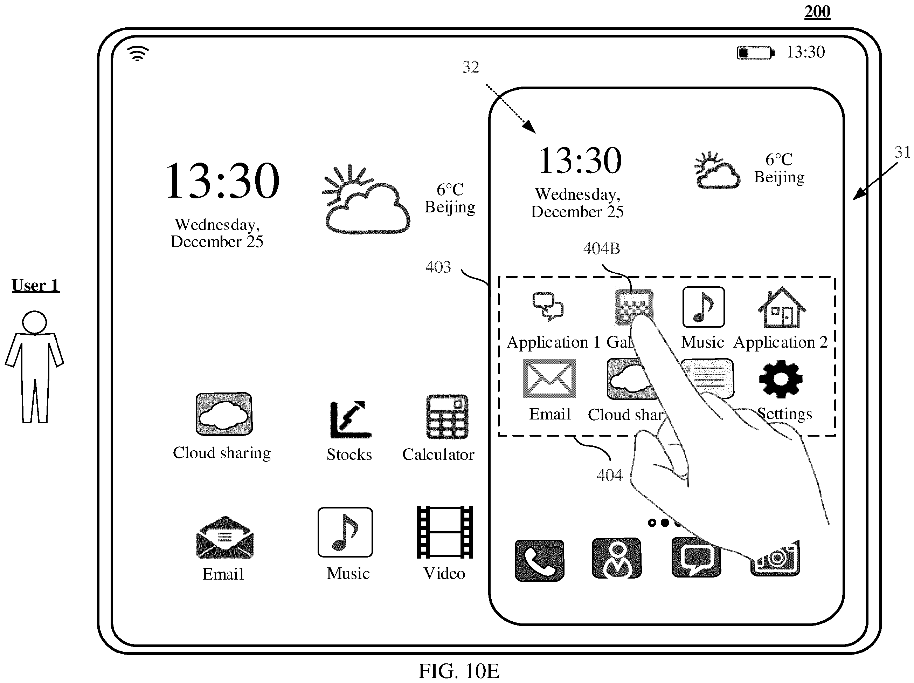

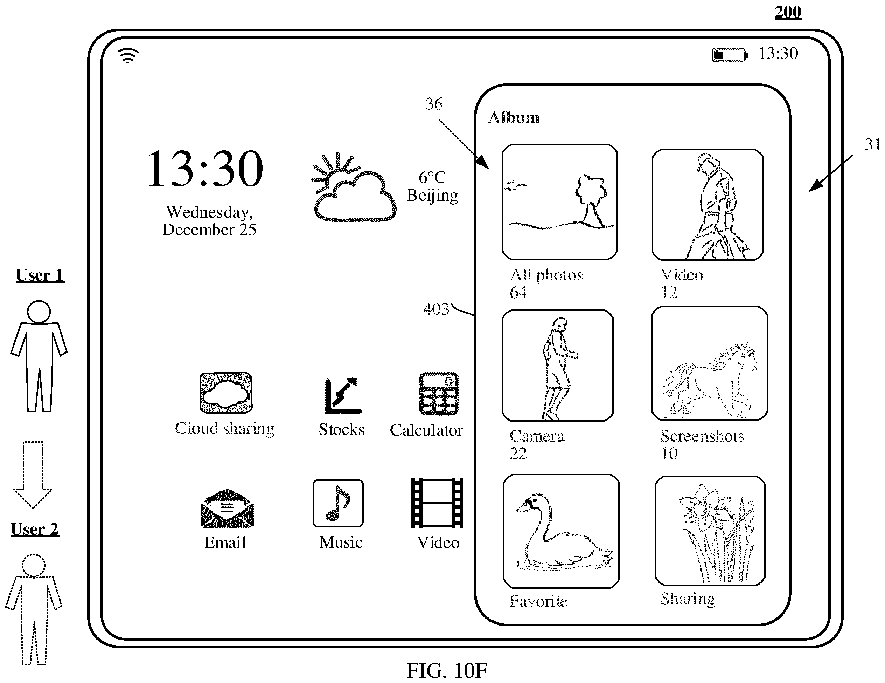

As shown in FIG. 10E, the user 1 is using the electronic device 200. The casting window displayed by the electronic device 200 further includes the icon 404 of Gallery. Refer to FIG. 5E. Gallery is a locked application. The electronic device 200 may receive a touch operation 1 (for example, a tap operation) performed on the icon 404B of Gallery, and notify the electronic device 100 of the touch operation. After receiving a notification from the electronic device 200, the electronic device 100 starts cross-device authentication. When determining that the identity authentication information of the electronic device 200 matches the preset information, the electronic device 100 may draw a user interface 36 of Gallery in response to the touch operation 1. The electronic device 100 sends the user interface 36 to the electronic device 200, and the electronic device 200 receives and displays, in the casting window 403, the user interface 36 shown in FIG. 10F.

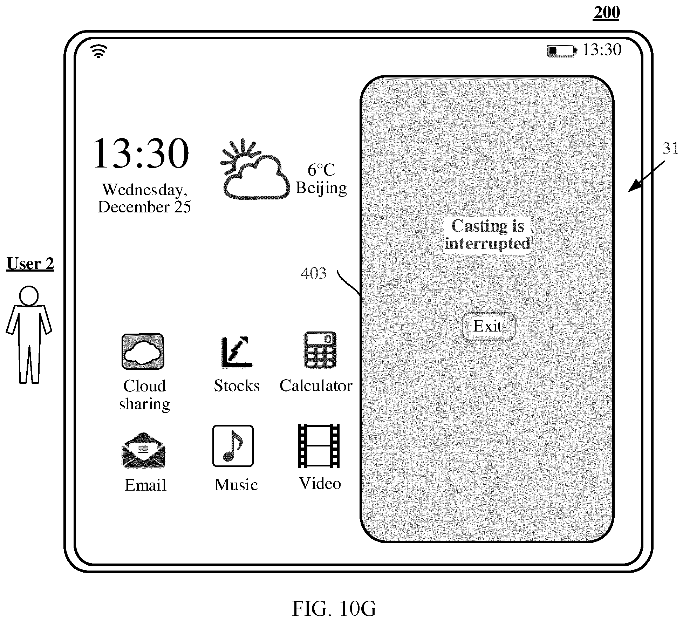

In some embodiments of this application, when the electronic device 200 displays a user interface of a locked application in the casting window 403, the electronic device 100 obtains the identity authentication information of the electronic device 200 in real time. When determining that the identity authentication information of the electronic device 200 does not match the preset information, the electronic device 100 stops sending the casting content, and the casting window 403 of the electronic device 200 stops displaying the casting content. For example, as shown in FIG. 10F and FIG. 10G, the electronic device 200 displays the user interface 36 of Gallery in the casting window 403. After the user of the electronic device 200 switches from the user 1 to the user 2, the casting window 403 of the electronic device 200 stops displaying the casting content.

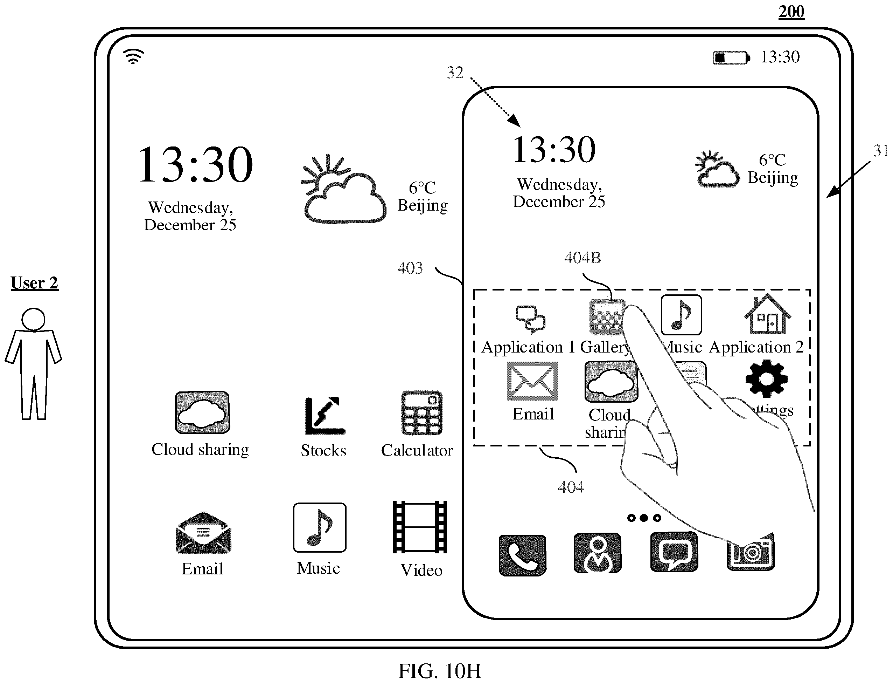

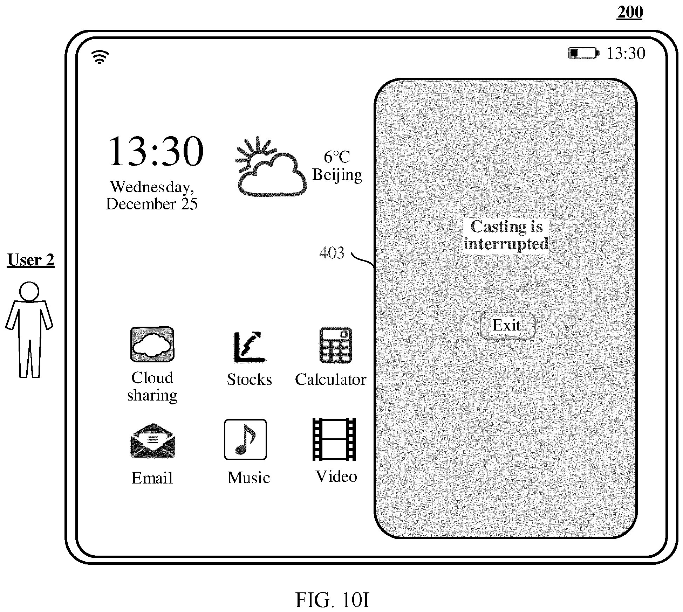

As shown in FIG. 10H, the user 2 is using the electronic device 200. The electronic device 200 may receive a touch operation 1 (for example, a tap operation) performed on the icon 404B of Gallery, and notify the electronic device 100 of the touch operation. After receiving a notification from the electronic device 200, the electronic device starts cross-device authentication, and determines that the identity authentication information of the electronic device 200 does not match the preset information. The electronic device 100 stops sending the casting content to the electronic device 200, and the electronic device 200 displays, in the casting window 403, prompt information "Casting is interrupted" shown in FIG. 10I.

Casting control scenario 3: In this scenario, after receiving a touch operation 1 by using the electronic device 200, when determining that the touch operation 1 triggers an unlocked function 2, the electronic device 100 directly draws, in response to the touch operation 1, casting content corresponding to the function 2, and sends the casting content to the electronic device 200. After receiving the touch operation 1 by using the electronic device 200, when determining that the touch operation 1 triggers a locked function 2, the electronic device 100 starts cross-device authentication, and only after determining that cross-device authentication succeeds, draws, in response to the touch operation 1, casting content corresponding to the function 2, and sends the casting content to the electronic device 200.

FIG. 5A to FIG. 5G each show a related interface in which an application is locked according to an embodiment of this application. FIG. 5H to FIG. 5M each show a related interface in which an application function is locked according to an embodiment of this application.

In some embodiments of this application, in a casting process, the electronic device 100 obtains the identity authentication information of the electronic device 200 in real time. When the casting window of the electronic device 200 displays a user interface of a locked application or displays a user interface of a locked application function, if determining that the identity authentication information of the electronic device 200 does not match the preset information, the electronic device 100 stops sending the casting content to the electronic device 200.

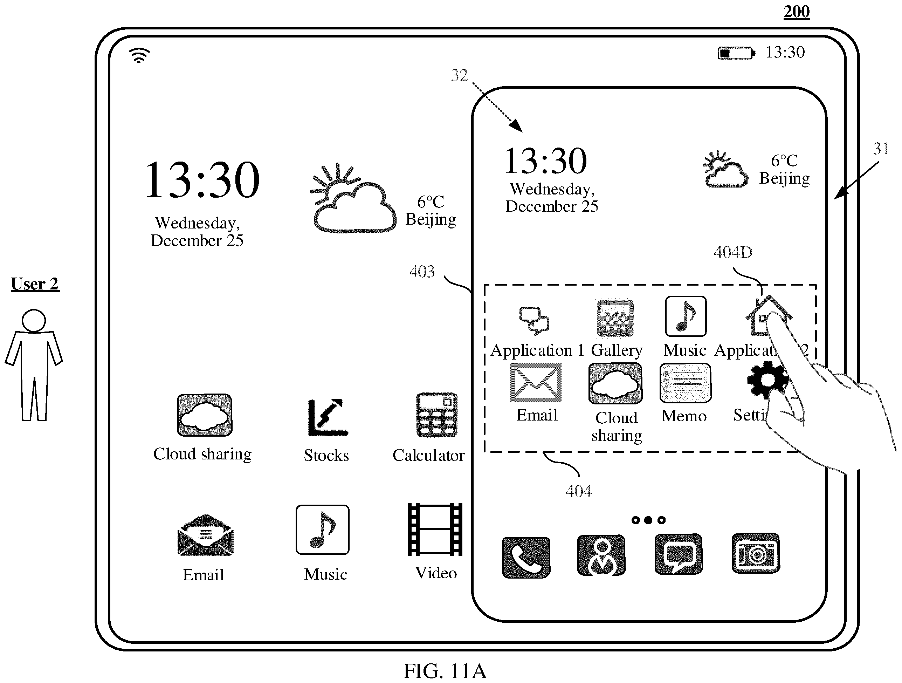

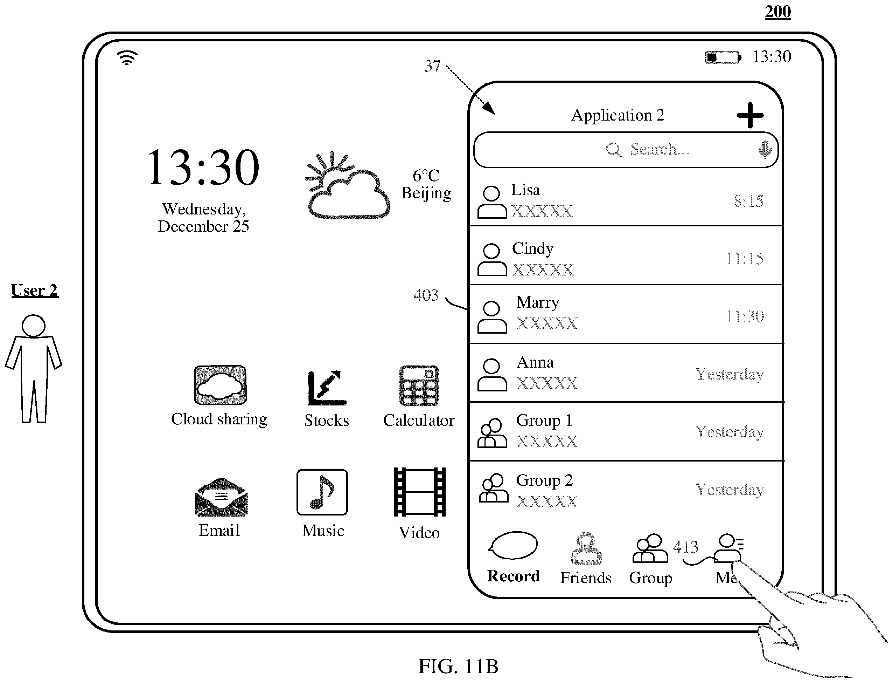

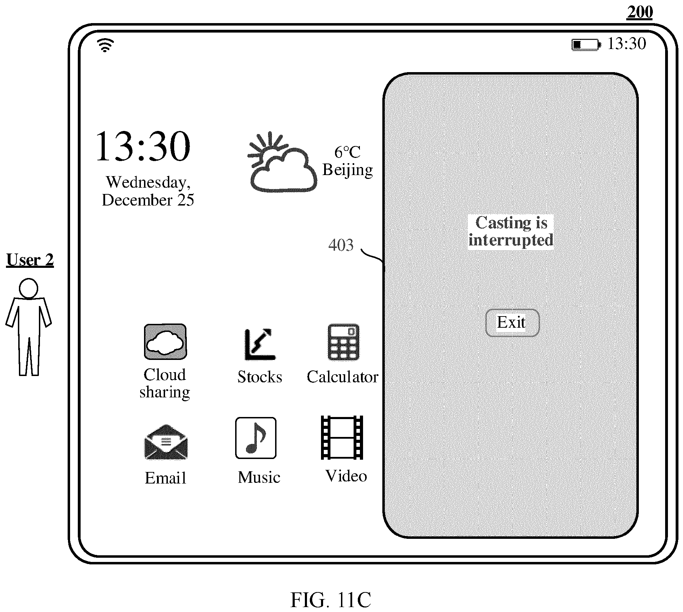

Refer to FIG. 5E. Application 2 is an unlocked application. Refer to FIG. 5M. Me of Application 2 is a locked application function. As shown in FIG. 11A, the user 2 is using the electronic device 200. The user interface 32 displayed in the casting window 403 includes the icon 404D of Application 2. The electronic device 200 may receive a touch operation 1 (for example, a tap operation) performed on the icon 404D of Application 2, and notify the electronic device 100 of the touch operation. After receiving a notification from the electronic device 200, the electronic device 100 draws a user interface 37 of Application 2 in response to the touch operation 1. The electronic device 100 sends the user interface 37 to the electronic device 200, and the electronic device 200 receives and displays, in the casting window 403, the user interface 37 shown in FIG. 11B. As shown in FIG. 11B, the user interface 37 includes an option 413 of Me. The electronic device 200 may receive a touch operation performed on the option 413 of Me, and notify the electronic device 100 of the touch operation. After receiving a notification from the electronic device 200, the electronic device 100 starts cross-device authentication, and when determining that the identity authentication information of the electronic device 200 does not match the preset information, the electronic device 100 stops sending the casting content to the electronic device 200. As shown in FIG. 11C, the electronic device 200 stops displaying the casting content of the electronic device 100 in the casting window 403.

Refer to FIG. 5E. Gallery is a locked application. Refer to FIG. 10E to FIG. 10I. For the locked application Gallery, the electronic device 100 may implement casting control of Gallery based on the identity authentication information of the electronic device 200. As shown in FIG. 10E and FIG. 10F, the user 1 uses the electronic device 200. When determining that Gallery on which a touch operation is performed is a locked application, the electronic device 100 starts cross-device authentication. When determining that cross-device authentication succeeds, the electronic device 200 may display the casting content of the electronic device 100, that is, the user interface 36 of Gallery. As shown in FIG. 10H and FIG. 10I, the user 2 uses the electronic device 200. When the electronic device 100 determines that Gallery on which a touch operation is performed is a locked application, the electronic device 100 starts cross-device authentication and determines that cross-device authentication fails, the electronic device 100 stops sending the casting content to the electronic device 200, and the electronic device 200 stops displaying the casting content of the electronic device 100. As shown in FIG. 10F and FIG. 10G, when the casting window 403 of the electronic device 200 displays the user interface 36 of Gallery, after the user of the electronic device 200 switches from the user 1 to the user 2, the identity authentication information of the electronic device 200 does not match the preset information, and the electronic device 200 stops displaying the casting content of the electronic device 100.

Casting control scenario 4: In this scenario, after the electronic device 100 receives the touch operation 1, when determining that the touch operation 1 triggers a low-risk function 2 of locking, the electronic device 100 starts cross-device authentication and determines that the cross-device authentication succeeds, the electronic device 100 responds to the touch operation 1. Draw a user interface of the function 2 triggered by the touch operation 1. After the electronic device 100 receives the touch operation 1, when determining that the touch operation 1 triggers a locked high-risk function 2, the electronic device 100 stops sending the casting content to the electronic device 200, and the electronic device 200 stops displaying the casting content of the electronic device 100.

In the casting control scenario 4, for an unlocked function 1, after the electronic device 100 receives the touch operation 1 by using the electronic device 200, the electronic device 100 may start cross-device authentication, and only when determining that cross-device authentication succeeds, draw, in response to the touch operation 1, a user interface of the function 2 triggered by the touch operation 1, and cast the user interface on the electronic device 200; or the electronic device 100 may directly draw, in response to the touch operation 1, a user interface of the function 2 triggered by the touch operation 1, and cast the user interface on the electronic device 200, without a need to start cross-device authentication. This is not specifically limited herein.

FIG. 7A to FIG. 7C each show a related interface in which a locked low-risk application is set according to an embodiment of this application.

Refer to FIG. 7C. Gallery is a locked low-risk application, and supports cross-device authentication. Refer to FIG. 10E to FIG. 10I. For the locked low-risk application Gallery, the electronic device 100 may implement casting control of Gallery based on the identity authentication information of the electronic device 200. As shown in FIG. 10E and FIG. 10F, the user 1 uses the electronic device 200. When determining that Gallery triggered by a touch operation is a locked low-risk application, the electronic device 100 starts cross-device authentication, and determines that cross-device authentication succeeds, and the electronic device 200 may display the casting content of the electronic device 100, that is, a user interface 36 of Gallery. As shown in FIG. 10H and FIG. 10I, the user 2 uses the electronic device 200. When the electronic device 100 determines that Gallery triggered by a touch operation is a locked low-risk application, the electronic device 100 starts cross-device authentication and determines that cross-device authentication fails, the electronic device 100 stops sending the casting content to the electronic device 200, and the electronic device 200 stops displaying the casting content of the electronic device 100. As shown in FIG. 10F and FIG. 10G, when the casting window 403 of the electronic device 200 displays the user interface 36 of Gallery, and the user of the electronic device 200 switches from the user 1 to the user 2, the electronic device 200 stops displaying the casting content of the electronic device 100.

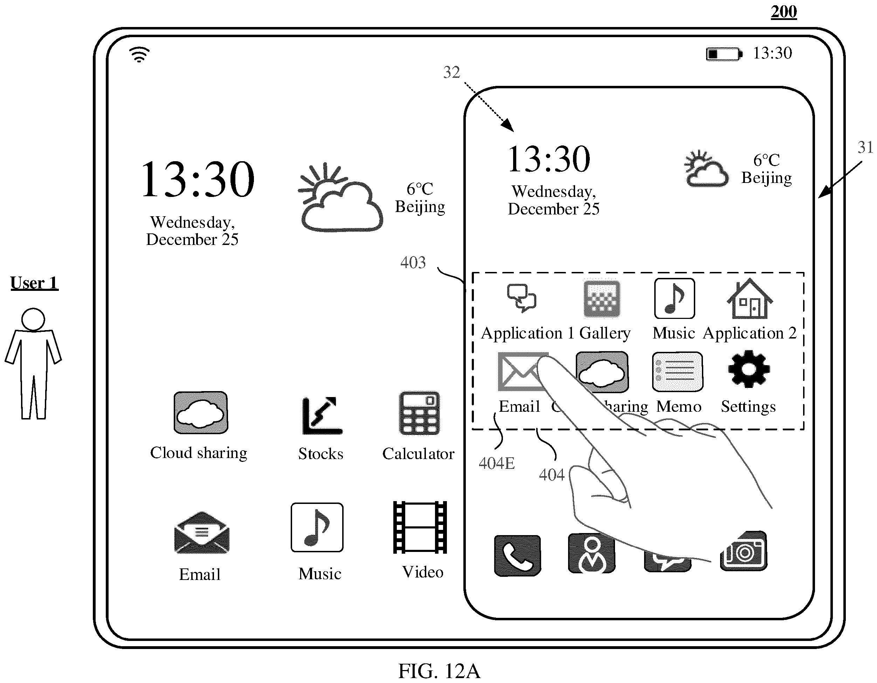

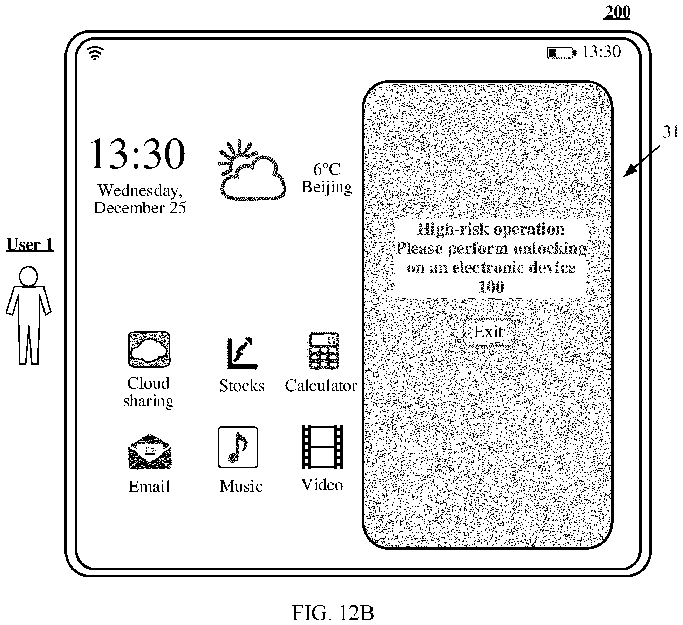

Refer to FIG. 12A. Email is a locked high-risk application. For example, as shown in FIG. 12A, the user 1 is using the electronic device 200. The user interface 32 displayed in the casting window 403 includes the icon 404E of Email. The electronic device 200 may receive a touch operation 1 (for example, a tap operation) performed on the icon 404E of Email, and notify the electronic device 100 of the touch operation. When determining that Email on which the touch operation is performed is a locked high-risk application, the electronic device 100 stops sending the casting content to the electronic device 200. As shown in FIG. 12B, the electronic device 200 may stop displaying the casting content of the electronic device 100, and display prompt information "High-risk operation. Please perform unlocking on an electronic device 100".

In some embodiments of this application, the user 1 is an owner of the electronic device 100 and the electronic device 200. In addition to the user 1, another authorized user may be added for the electronic device 200, and the electronic device 200 stores biometric feature information of the another authorized user. The another authorized user may have permission to perform screen unlocking, unlock a locked application, and unlock a locked application function. Identity authentication information of the another authorized user also supports cross-device authentication. It can be understood that when the electronic device 200 collects the biometric feature information of the another authorized user, the local authentication result of the electronic device 200 may also be that authentication succeed.

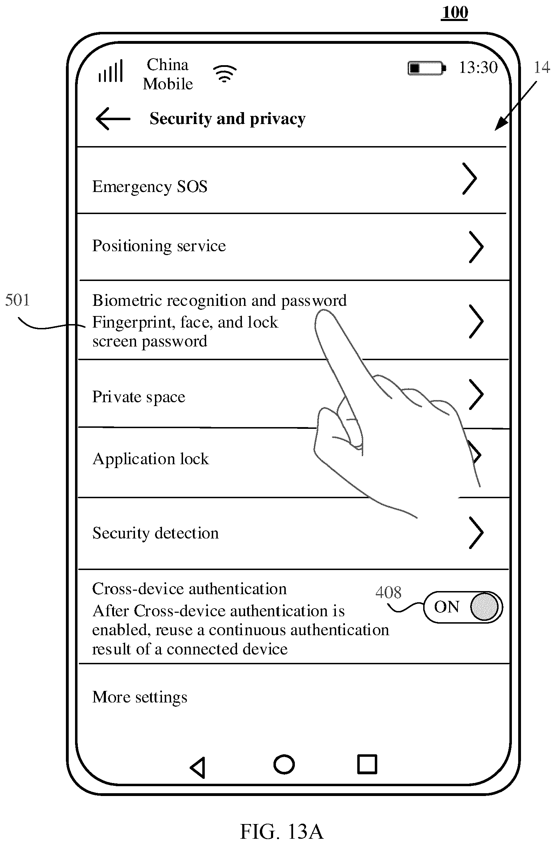

For example, FIG. 13A to FIG. 13E each show a related interface in which an electronic device adds biometric feature information (for example, a facial feature) of an authorized user.

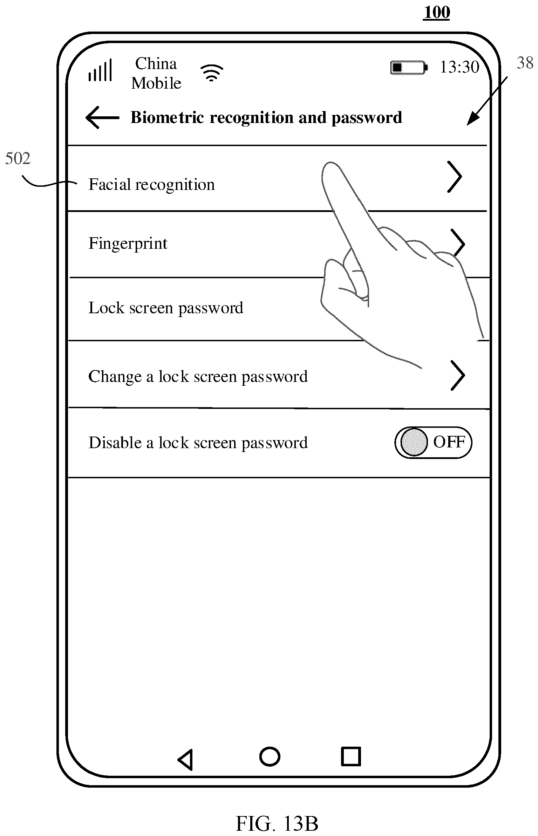

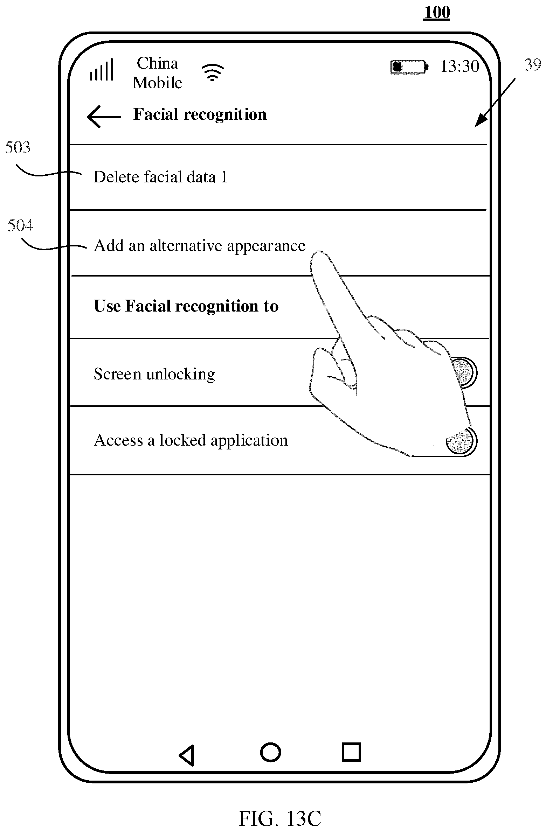

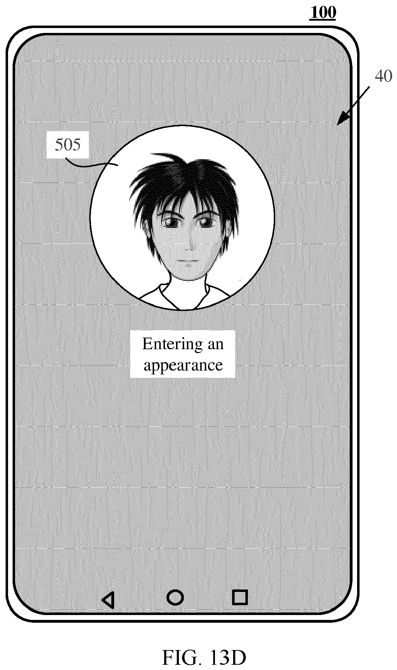

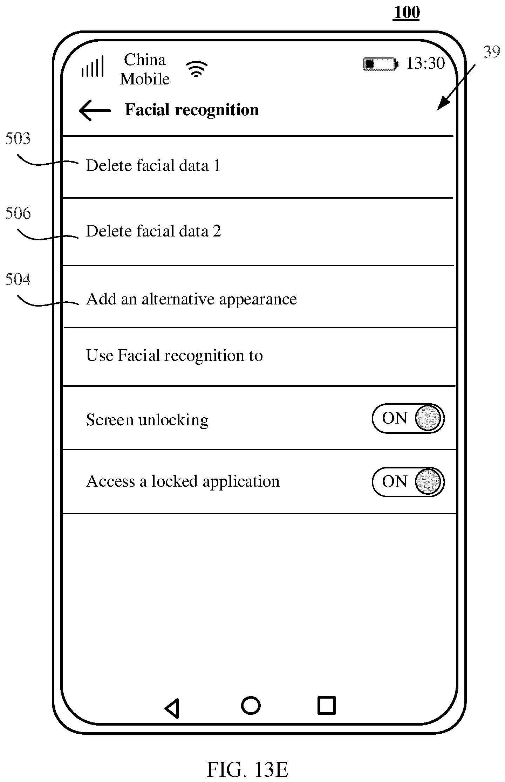

As shown in FIG. 13A, a user interface 14 includes a setting entry 501 of Biometric recognition and password. The electronic device 100 may receive an input operation (for example, a touch operation) performed on the setting entry 501, and in response to the input operation, the electronic device may display a setting interface 38 of Biometric recognition and password shown in FIG. 13B. As shown in FIG. 13B, the setting interface 38 includes a setting entry 502 of Facial recognition, a setting entry of Fingerprint, a setting entry of Change a lock screen password, and a setting bar of Disable a lock screen password. The electronic device 100 may receive an input operation (for example, a touch operation) performed on the setting entry 502 of Facial recognition, and in response to the input operation, the electronic device may display a setting interface 39 of Facial recognition shown in FIG. 13C. As shown in FIG. 13C, the setting interface 39 may include a control 503 of Delete facial data 1, a control 504 of Add an alternative appearance, and a permission setting bar of Facial recognition. The facial data 1 is facial data of the user 1, and the control 503 of Delete facial data 1 may be configured to delete facial data entered by the user 1. The electronic device 100 may receive an input operation (for example, a touch operation) performed on the control 504, and in response to the input operation, the electronic device 100 may display an appearance entering interface 40 shown in FIG. 13D. A window 505 in the appearance entering interface 40 is configured to display a face image collected by a camera. After an appearance of a user 3 is entered, as shown in FIG. 13E, the electronic device 100 may display a control 506 of Delete facial data 2 in the setting interface 39. The control 506 of Delete facial data 2 may be configured to delete facial data entered by the user 3. It can be understood that the facial data 2 is the facial data of the user 3, and after the facial data of the user 3 is added, the user 3 is an authorized user of Facial recognition.

In addition to the manner of adding the authorized user shown in FIG. 13A to FIG. 13E, in this embodiment of this application, the authorized user may be added in another manner. This is not specifically limited herein. In addition, the electronic device 200 may further collect other biometric feature information of the user 3, for example, an iris, a screen touch behavior feature, or a heart rate feature. Steps and procedures thereof are similar to those in FIG. 13A to FIG. 13E. This is not specifically limited herein.

In some embodiments, for the four casting control scenarios, after the user adds the facial data of the authorized user 3, the electronic device 100 may send the facial data of the user 3 to the electronic device 200, so that the user 3 also becomes an authorized user of the electronic device 200. If the user 3 is also an authorized user of the electronic device 200, in a process in which the electronic device 200 performs local continuous authentication through facial recognition, when a face image of the user 1 or the authorized user 3 is collected, local authentication of the electronic device 200 succeeds. If the user 3 is not an authorized user of the electronic device 200, the electronic device 100 may obtain the face image that is of the user 1 or the authorized user 3 and that is collected by the electronic device 200, and the electronic device 100 performs identity authentication.

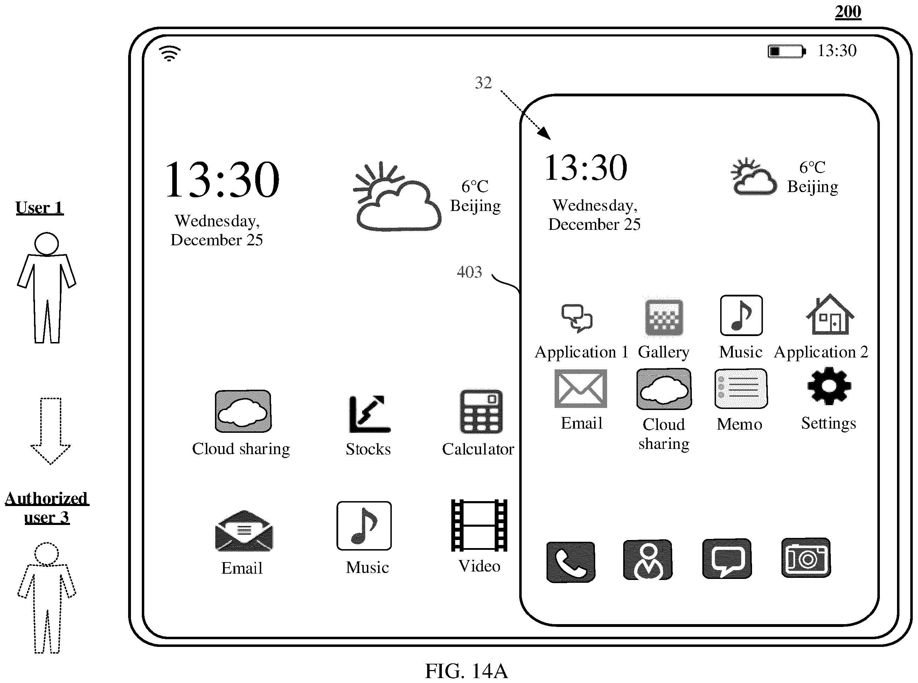

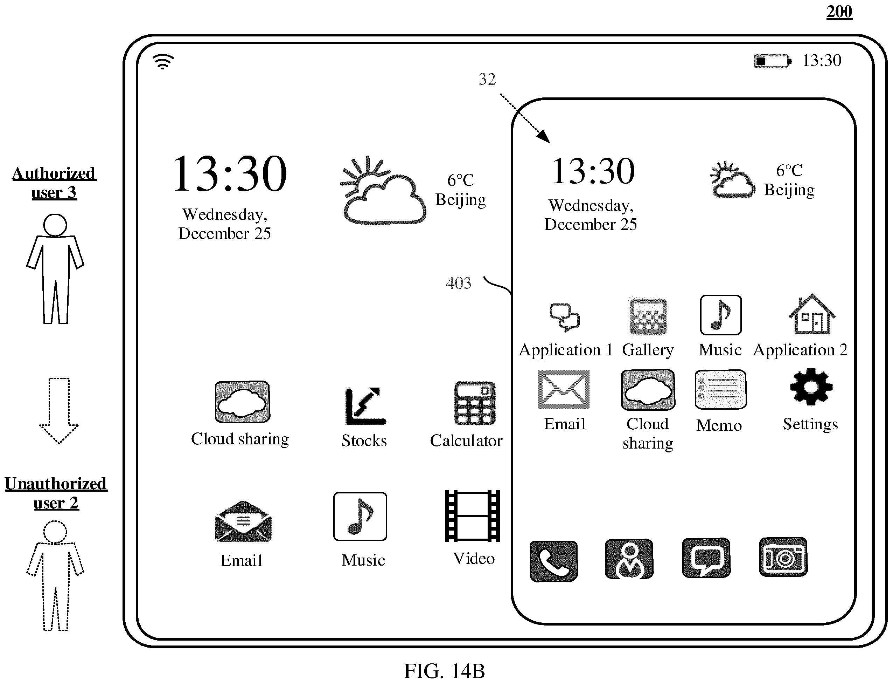

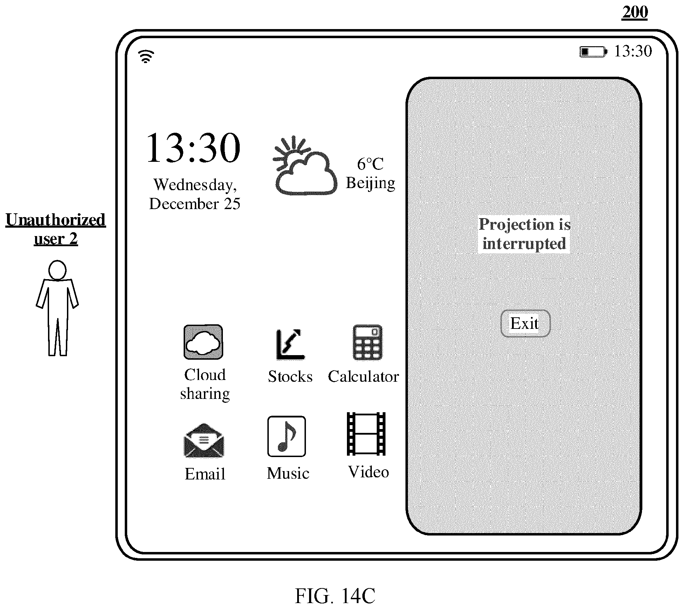

For example, in Casting control scenario 1, as shown in FIG. 14A, the user 1 is using the electronic device 200, and the casting window 403 of the electronic device 200 displays the user interface 32. As shown in FIG. 14A and FIG. 14B, after the user of the electronic device 200 changes from the user 1 to the authorized user 3, the electronic device 100 determines that cross-device authentication of the electronic device 200 succeeds, the electronic device 100 continues to send the casting content to the electronic device 200, and the electronic device 200 continues to display the casting content of the electronic device 100. As shown in FIG. 14B and FIG. 14C, after the user of the electronic device 200 changes from the authorized user 3 to an unauthorized user 2, the electronic device 100 determines that cross-device authentication of the electronic device 200 fails, the electronic device 100 stops sending the casting content to the electronic device 200, and the electronic device 200 stops displaying the casting content of the electronic device 100.

It should be noted that, in the casting control scenarios, the electronic device 100 starts cross-device authentication. When the electronic device 100 determines that the identity authentication information of the electronic device 200 does not match the preset information, the electronic device 100 stops sending the casting content to the electronic device 200, and the electronic device 200 may close the casting window, or display the screen unlocking interface of the electronic device 200 in full screen, or display the screen unlocking interface of the electronic device 100 in the casting window, or display the prompt information "Casting is interrupted" in the casting window. This is not specifically limited herein.

Optionally, in some embodiments of this application, in the four casting control scenarios, when the electronic device 100 starts cross-device authentication, the electronic device 100 obtains the identity authentication information of the electronic device 200. The electronic device 100 continues to send the casting content to the electronic device 200 only when the electronic device 100 determines that the identity authentication information of the electronic device 200 matches the preset information and that the distance between the electronic device 200 and the electronic device 100 is less than the preset distance value.

In some embodiments of this application, in the four casting control scenarios, when the electronic device 100 starts cross-device authentication, the electronic device 100 obtains the identity authentication information of the electronic device 200. The electronic device 100 continues to send the casting content to the electronic device 200 only when the electronic device 100 determines that the identity authentication information of the electronic device 200 matches the preset information and that the electronic device 200 is in the secure state.

In some embodiments of this application, in the four casting control scenarios, when the electronic device 100 starts cross-device authentication, the electronic device 100 obtains the identity authentication information of the electronic device 200. The electronic device 100 continues to send the casting content to the electronic device 200 only when the electronic device 100 determines that the identity authentication information of the electronic device 200 matches the preset information and determines that the priority of the authentication manner of local continuous authentication of the electronic device 200 is not lower than that of the electronic device 100.

In some embodiments of this application, in the four casting control scenarios, when the electronic device 100 starts cross-device authentication, the electronic device 100 obtains the identity authentication information of the electronic device 200. The electronic device 100 continues to send the casting content to the electronic device 200 only when the electronic device 100 determines that the identity authentication information of the electronic device 200 matches the preset information and determines that the electronic device 200 meets at least two of three conditions "a distance between the electronic device 200 and the electronic device 100 is less than a preset distance value", "the electronic device 200 is in the secure state", and "a priority of an authentication manner of local continuous authentication of the electronic device 200 is not lower than that of the electronic device 100". It can be understood that, only when the electronic device 200 meets at least two of the three conditions, the electronic device 100 determines that the identity authentication information of the electronic device 200 is secure and reliable.

In addition to the voice control scenarios and the casting scenarios, the cross-device authentication method provided in this embodiment of this application may be further applied to cross-device authentication in another scenario. This is not specifically limited herein.

The foregoing content is a scenario in which the cross-device authentication method in this application may be implemented. The following describes a cross-device authentication system related to the cross-device authentication method provided in embodiments of this application.

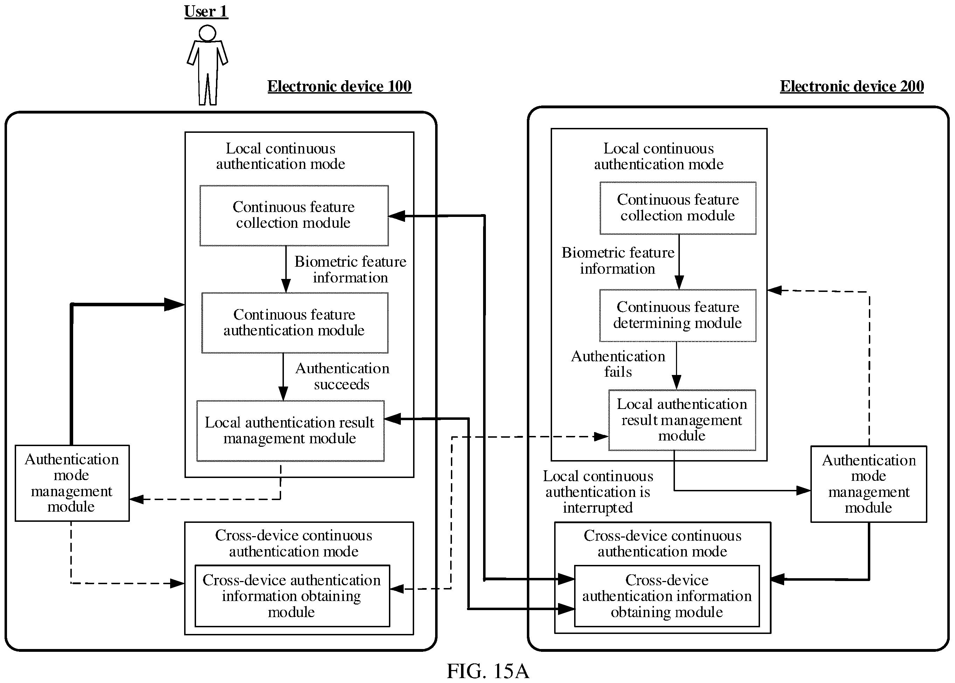

For example, as shown in FIG. 15A, a system includes an electronic device 100 and an electronic device 200 (collectively referred to as an electronic device below). Continuous authentication modes of each of the electronic device 100 and the electronic device 200 may include a local continuous authentication mode and a cross-device continuous authentication mode. The electronic device 100 and the electronic device 200 each include a continuous feature collection module, a continuous feature authentication module, a local authentication result management module, an authentication mode management module, and a cross-device authentication information obtaining module.

The continuous feature collection module is configured to continuously collect biometric feature information of a user in a detection range, for example, a facial feature, an iris feature, or a screen touch behavior feature. The biometric feature information is used for an authentication manner such as facial recognition, iris recognition, or screen touch behavior recognition.

The continuous feature authentication module is configured to match the biometric feature information collected by the continuous feature collection module with biometric feature information prestored in the electronic device. When a matching degree reaches a preset threshold 1, the electronic device may determine that a current local authentication result is that authentication succeeds.

For example, the electronic device 100 performs local continuous authentication through facial recognition. The electronic device 100 obtains, by using the continuous feature collection module, facial feature information collected by the electronic device 100, and identifies a matching degree between the collected facial feature information and facial feature information of a preset user by using the continuous feature authentication module. When the matching degree between the collected facial feature information and the facial feature information of the preset user reaches the preset threshold 1, the current local authentication result is that authentication succeeds. For example, the preset threshold 1 is equal to 90%.

It should be noted that there are two cases in which local authentication fails. In one case, feature collection is interrupted. To be specific, the continuous feature collection module does not collect the biometric feature information. For example, an authentication manner of local continuous authentication is facial recognition, there is no user in a detection range of the electronic device, and the continuous feature collection module does not collect facial feature information. In another case, feature collection is not interrupted, but the matching degree does not reach the preset threshold 1. For example, an authentication manner of local continuous authentication is facial recognition, a detection range of the electronic device includes an unauthorized user, and the matching degree between the facial feature information collected by the continuous feature collection module and the facial feature information of the preset user does not reach the preset threshold 1.

The local authentication result management module is configured to manage a local authentication result generated by the continuous feature authentication module. When the local authentication result changes from "authentication succeeds" to "authentication fails" (in other words, local continuous authentication is interrupted), the local authentication result management module may notify the authentication mode management module to switch the continuous authentication mode to the cross-device continuous authentication mode. When the local authentication result changes from "authentication fails" to "authentication succeeds", the local authentication result management module may notify the authentication mode management module to switch the continuous authentication mode to the local continuous authentication mode.

In some embodiments of this application, the local authentication result of the continuous feature authentication module may also be used for screen unlocking, application unlocking, and application function unlocking of the electronic device.

For the cross-device authentication information obtaining module, the module is configured to obtain identity authentication information of another connected electronic device when the continuous authentication mode is switched to the cross-device continuous authentication mode. In some embodiments, the module is configured to obtain a local authentication result of a local authentication result management module of another connected electronic device. In some embodiments, the module is configured to obtain biometric feature information collected by a continuous feature collection module of another connected electronic device. The electronic device may implement voice control, casting control, or the like of the electronic device based on the identity authentication information of the another electronic device. It should be noted that when the electronic device works in the cross-device continuous authentication mode, the continuous feature collection module, the continuous feature authentication module, and the local authentication result management module still keep working. In this way, when the local authentication result management module determines that a local authentication result of the electronic device is that authentication succeeds, the authentication mode management module can be notified to switch back to the local continuous authentication mode.

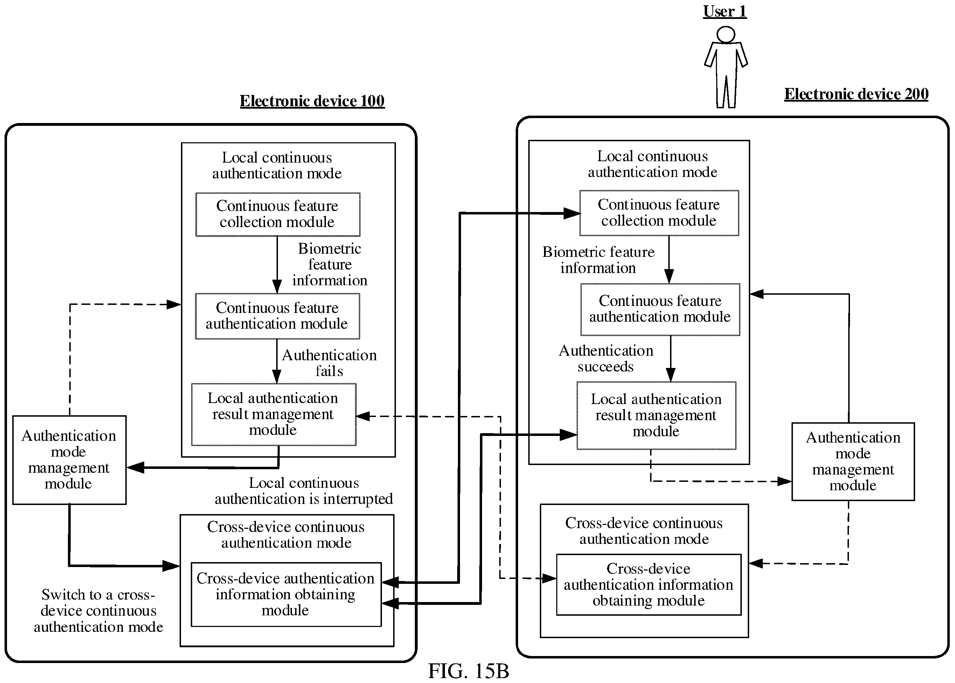

For example, as shown in FIG. 15A, a user 1 is using the electronic device 100, and the user 1 is within a detection range of local continuous authentication of the electronic device 100 and is out of a detection range of local continuous authentication of the electronic device 200. In this case, a local authentication result of the electronic device 100 is that authentication succeeds, and the continuous authentication mode of the electronic device 100 is the local continuous authentication mode. As shown in FIG. 15B, the user 1 switches a used device to the electronic device 200, and the user 1 is within the detection range of local continuous authentication of the electronic device 200 and is out of the detection range of local continuous authentication of the electronic device 100. In this case, the local authentication result of the electronic device 100 is that authentication fails, and the local authentication result management module of the electronic device 100 notifies the authentication mode management module to switch the continuous authentication mode to the cross-device continuous authentication mode. The electronic device 100 may obtain identity authentication information of the electronic device 200 by using the cross-device authentication information management module.

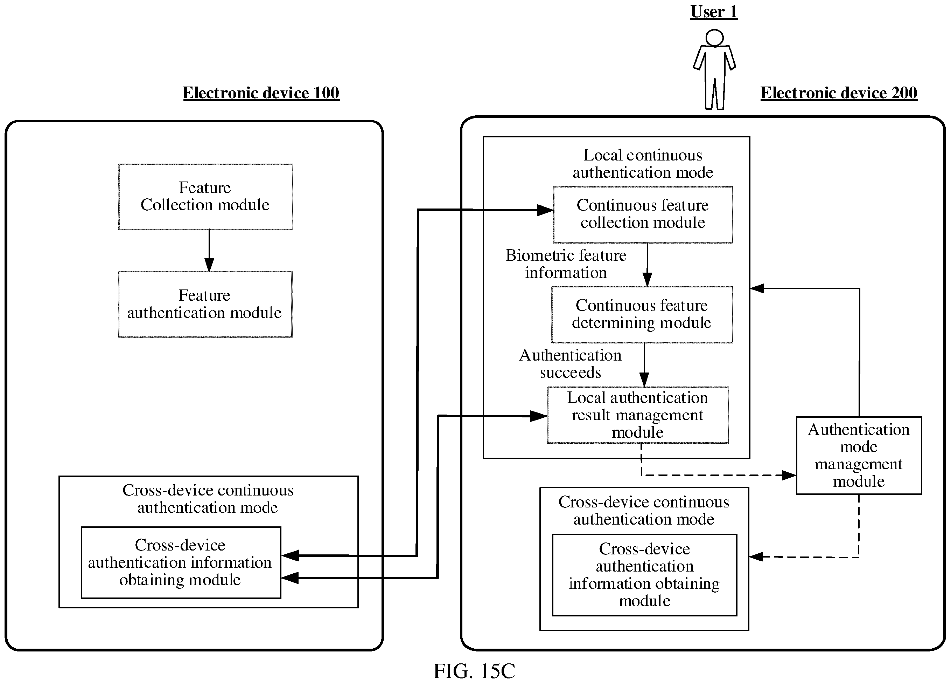

In some embodiments of this application, as shown in FIG. 15C, the electronic device 100 may alternatively not have a local continuous authentication capability, and the electronic device 100 includes a feature collection module, a feature authentication module, and a cross-device authentication information obtaining module. The feature collection module and the feature authentication module may be configured to implement screen unlocking, application unlocking, and application function unlocking of the electronic device 100. The electronic device 100 may obtain the identity authentication information of the electronic device 200 by using the cross-device authentication information obtaining module, and the electronic device 200 cannot obtain identity authentication information of the electronic device 100. The electronic device 100 may still implement voice control and casting control of the electronic device 100 based on the identity authentication information of the electronic device 200.

In some embodiments of this application, neither the electronic device 100 nor the electronic device 200 may have a local continuous authentication capability. For example, when starting cross-device authentication, the electronic device 100 sends an obtaining request to the electronic device 200, to obtain the identity authentication information of the electronic device 200. After receiving the obtaining request, the electronic device 200 collects biometric feature information, and sends the biometric feature information to the electronic device 100; or after receiving the obtaining request, the electronic device 200 collects biometric feature information, determines a local authentication result, and then sends the local authentication result to the electronic device 100.

In this embodiment of this application, at least one of the following implementations may be used for communication between different modules.

Implementation 1: Inter-system broadcast notification. For example, the local authentication result management module sends a broadcast to another module of the electronic device, to notify that local continuous authentication is interrupted.

Implementation 2: Invoke an interface between modules for a notification. For example, an interface 1 exists between the local authentication result management module and the authentication mode management module, and the local authentication result management module may notify, by invoking the interface 1, the authentication mode management module that local continuous authentication is interrupted.

Implementation 3: Write information into a storage module (for example, a configuration file or a database), and a receiving module actively reads the information from the storage module. For example, the local authentication result management module writes, into a preset configuration file, a state in which local continuous authentication is interrupted, and by periodically reading the preset configuration file, the authentication mode management module determines that local continuous authentication of the electronic device is interrupted.

In this embodiment of this application, the identity authentication information of the electronic device 100 and the electronic device 200 may be obtained in at least one of the following implementations. The following provides descriptions by using an example in which the electronic device 100 obtains the local authentication result of the electronic device 200.

Implementation 4: The electronic device 200 writes the local authentication result into a distributed database, and one or more electronic devices (for example, the electronic device 100) connected to the electronic device 200 may read the local authentication result of the electronic device 200 from the distributed database. It should be noted that one or more electronic devices connected to the electronic device 200 may perform writing and reading on the distributed database.

Implementation 5: The electronic device 200 continuously broadcasts the local authentication result of the electronic device 200 to another device, and continuously listens to an authentication result broadcast by the another device. The electronic device 100 may continuously listen to an authentication result broadcast by the another device, to obtain the local authentication result of the electronic device 200.

Implementation 6: A continuous authentication query interface of the electronic device 200 is opened, and one or more electronic devices (for example, the electronic device 100) connected to the electronic device 200 may query the local authentication result of the electronic device 200 through the query interface.

Based on the cross-device system shown in FIG. 15A to FIG. 15C, the following describes a cross-device authentication method provided in an embodiment of this application.

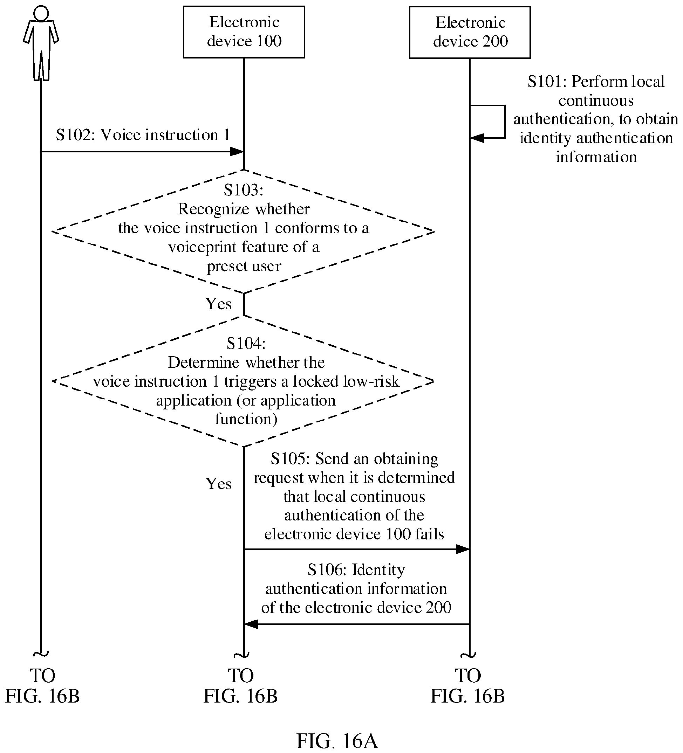

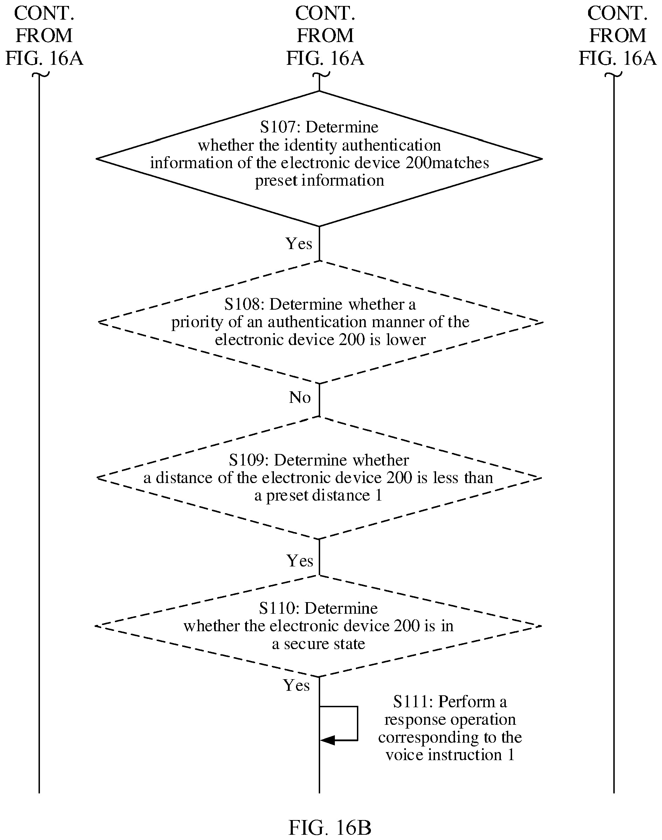

For example, FIG. 16A and FIG. 16B show a cross-device authentication method in a voice control scenario according to an embodiment of this application. The cross-device authentication method includes but is not limited to steps S101 to S111.

S101: An electronic device 200 performs local continuous authentication, to obtain identity authentication information.

In this embodiment of this application, the electronic device 200 may perform local continuous authentication in one or more authentication manners such as facial recognition, iris recognition, and screen touch behavior recognition. For example, an authentication manner of local continuous authentication of the electronic device 200 is facial recognition. The electronic device 200 may collect an image by using a camera with low power consumption, and perform facial recognition on the image. When it is determined, through facial recognition, that the image includes a face of a preset user, local authentication succeeds. The preset user may be the user 1 in the foregoing embodiment, or may be the authorized user 3 in the foregoing embodiment. In some embodiments, the electronic device 200 may periodically collect the image in real time by using the camera with low power consumption. In some embodiments, when receiving a specified touch operation (for example, a touch operation performed on an icon of a locked application) of the user, the electronic device 200 may alternatively collect the image by using the camera with low power consumption. In some embodiments, when receiving a cross-device authentication request of an electronic device 100, the electronic device 200 may alternatively collect the image by using the camera with low power consumption. This is not specifically limited herein.

In this embodiment of this application, the electronic device 100 may have a local continuous authentication capability, or may not have a local continuous capability. This is not specifically limited herein.

S102: The electronic device 100 receives a voice instruction 1 of a user.

It can be understood that when the user intends to control the electronic device 100 based on a voice, the user speaks the voice instruction 1. For example, refer to FIG. 4A, FIG. 4C, and FIG. 6A. When the user intends to control the electronic device 100 to play the song 1, the user may send the voice instruction 1, to be specific, "Hey Celia, play the song 1". Refer to FIG. 6C and FIG. 6E. When the user intends to control the electronic device 100 to send a message to Anna by using Application 1, the user may send the voice instruction 1, to be specific, "Hey Celia, use Application 1 to send 'Do you return home' to Anna". In some embodiments, the voice instruction 1 may alternatively not include a wakeup keyword. This is not specifically limited herein.

In this embodiment of this application, the electronic device 100 may receive and recognize the voice instruction 1. It should be noted that the electronic device 100 may be an electronic device that can perform voice interaction. The electronic device 100 has a microphone and a loudspeaker. Usually, the microphone remains in a powered-on state, to receive a voice instruction of the user at any time. The electronic device 100 further has a voice recognition capability, to implement voice recognition of a collected ambient sound. In some embodiments, an application processor (Application Processor, AP) of the electronic device 100 remains powered on, and the microphone may send collected voice information (for example, the voice instruction 1) to the AP. The AP recognizes the voice information, and may start a function corresponding to the voice information. In some embodiments, the microphone of the electronic device is connected to the microprocessor, the microprocessor remains powered on, and the AP of the electronic device is not powered on. The microphone sends the collected voice information (for example, the voice instruction 1) to the microprocessor, and the microprocessor recognizes the voice information, and determines, based on the voice information, whether to wake up the AP, that is, power on the AP. For example, the microprocessor wakes up the AP when recognizing that the voice information includes a preset wakeup keyword. In some embodiments, only after recognizing the preset wakeup keyword in the voice information, the AP performs a response operation corresponding to the received voice information. The preset wakeup keyword may be set by the electronic device by default before delivery, or may be preset by the user in the electronic device based on a requirement of the user. This is not specifically limited herein.

S103: The electronic device 100 recognizes whether the voice instruction 1 conforms to a voiceprint feature of the preset user. If the voice instruction 1 conforms to the voiceprint feature of the preset user, S104 is performed.

In some embodiments of this application, the preset user includes the user 1, the electronic device 100 prestores a voiceprint feature entered by the user 1, and the electronic device 100 may match the voiceprint feature of the voice instruction 1 with the voiceprint feature of the user 1. When a matching degree reaches a preset threshold 2, the electronic device 100 determines that the voice instruction 1 conforms to a voiceprint feature of the user 1. For example, the preset threshold 2 is equal to 95%.

In this embodiment of this application, when the electronic device 100 recognizes that the voice instruction 1 does not conform to the voiceprint feature of the preset user, the electronic device 100 may discard related data of the voice instruction 1, and does not perform a response operation corresponding to the voice instruction 1.

In some embodiments, step S103 may be an optional step. Alternatively, after receiving the voice instruction, the user may determine whether the voice instruction 1 triggers a locked low-risk application or a locked low-risk application function.

S104: The electronic device 100 determines whether the voice instruction 1 triggers a locked low-risk application (or a locked low-risk application function). If the voice instruction 1 triggers a locked low-risk application (or a locked low-risk application function), S105 is performed.

In this embodiment of this application, the locked low-risk application (or the locked low-risk application function) may be set by the user, or may be set by the electronic device 100 by default. For example, for an implementation of an interface in which an application is locked in this embodiment of this application, refer to related descriptions in FIG. 5A to FIG. 5G. Details are not described herein again. For an implementation of an interface in which an application function is locked in this embodiment of this application, refer to related descriptions in FIG. 5H to FIG. 5M. Details are not described herein again. For an implementation of an interface in which a locked low-risk application is set in this embodiment of this application, refer to related descriptions in FIG. 7A to FIG. 7C. Details are not described herein again. As shown in FIG. 7C, Application 1 and Gallery are locked low-risk applications. For example, the electronic device 100 sets, by default, application functions such as Payment, Transfer, and Red packet of all applications as high-risk application functions.

In some embodiments, step S104 may be an optional step. The user may perform step S105 after recognizing that the voice instruction 1 conforms to the voiceprint feature of the preset user. To be specific, after determining that local continuous authentication of the electronic device 100 fails, cross-device authentication is started, to obtain the identity authentication information of the electronic device 200. In some embodiments, step S103 and step S104 may be optional steps. After receiving the voice instruction 1, the user may perform step S105, to start cross-device authentication.

In some embodiments, when the electronic device 100 determines that the voice instruction 1 triggers a locked high-risk application (or a locked high-risk/low-risk application function), the electronic device 100 may discard the related data of the voice instruction 1, and does not perform the response operation corresponding to the voice instruction 1. For example, refer to FIG. 8A and FIG. 8B. The user intends to control, based on the voice instruction 1, the electronic device 100 to open a payment application. Because the payment application is a locked high-risk application, the electronic device 100 does not open the payment application, and may send prompt information "Please unlock" shown in FIG. 8B. Refer to FIG. 8C and FIG. 8D. The user intends to control, based on the voice instruction 1, the electronic device 100 to make a transfer. Because Transfer is a locked high-risk application function, the electronic device 100 does not make a transfer, and may send prompt information "Please unlock" shown in FIG. 8D.

In some embodiments of this application, the electronic device 100 determines whether the voice instruction 1 triggers a locked application (or a locked application function). If determining that the voice instruction 1 triggers a locked application (or a locked application function), the electronic device 100 performs step S105. For example, refer to Voice control scenario 2 shown in FIG. 6A to FIG. 6J. When the electronic device 100 determines that the voice instruction 1 triggers a locked application (or a locked application function), the electronic device starts cross-device authentication, to obtain the identity authentication information of the electronic device 200. As shown in FIG. 5E, Application 1 and Gallery may be locked applications, and Application 2 may be an unlocked application function. As shown in FIG. 5E, Me and "Messaging" of Application 2 may be locked application functions.

S105: When determining that local continuous authentication of the electronic device 100 fails, the electronic device 100 starts cross-device authentication, and sends an obtaining request 1 to the electronic device 200, where the obtaining request 1 is used to obtain the identity authentication information of the electronic device 200.

In this embodiment of this application, when the preset user is not within a detection range of local continuous authentication of the electronic device 100, the electronic device 100 cannot collect biometric feature information of the preset user. In this case, a local authentication result of the electronic device 100 is that authentication fails. For example, an authentication manner of local continuous authentication is facial recognition, and the detection range of local continuous authentication of the electronic device 100 is a photographing range of a camera with low power consumption that is configured to collect a face image. For example, refer to FIG. 4A to FIG. 4D and FIG. 6A to FIG. 6J. The preset user is the user 1, the user 1 is not within a detection range of the electronic device 100, and local continuous authentication of the electronic device 100 fails.

In some embodiments, if the preset user is in a detection range of local continuous authentication of the electronic device 100, when the electronic device 100 determines that a local authentication result of the electronic device 100 is that authentication succeeds, the electronic device 100 may perform the response operation corresponding to the voice instruction 1.

S106: In response to the obtaining request 1, the electronic device 200 sends the identity authentication information of the electronic device 200 to the electronic device 100, and the electronic device 100 receives the identity authentication information of the electronic device 200.

In this embodiment of this application, the electronic device 100 may alternatively obtain the identity authentication information of the electronic device 200 in another manner. In some embodiments, when the electronic device 200 performs local continuous authentication, the electronic device 200 broadcasts the identity authentication information of the electronic device 200 in real time. When local continuous authentication of the electronic device 100 fails, the electronic device 100 may listen to identity authentication information of another device (for example, the electronic device 200), to obtain the identity authentication information of the electronic device 200. In some embodiments, when the electronic device 200 performs local continuous authentication, the electronic device 200 writes the identity authentication information of the electronic device 200 into a distributed database in real time, and the electronic device 100 may read the identity authentication information of the electronic device 200 in the distributed database when local continuous authentication of the electronic device 100 fails.

S107: The electronic device 100 determines whether the identity authentication information of the electronic device 200 matches preset information. If the identity authentication information of the electronic device 200 matches the preset information, S108 is performed.

In this embodiment of this application, when the electronic device 100 determines that the identity authentication information of the electronic device 200 does not match the preset information, the electronic device 100 may discard the related data of the voice instruction 1, and does not perform the response operation corresponding to the voice instruction 1. For example, refer to FIG. 4C, FIG. 4D, FIG. 6C, FIG. 6D, FIG. 6G, and FIG. 6H. When the user 1 is out of a detection range of the electronic device 200, local continuous authentication of the electronic device 200 fails. When determining that local continuous authentication of the electronic device 200 fails, the electronic device 100 may send a voice response "Please unlock".

S108: When the identity authentication information of the electronic device 200 is a local authentication result of the electronic device 200, the electronic device 100 determines whether a priority of an authentication manner of the electronic device 200 is lower than a priority of the authentication manner of local continuous authentication of the electronic device 100. If the priority of the authentication manner of the electronic device 200 is not lower, S109 is performed.

In an implementation, the electronic device 100 prestores authentication manners of a plurality of devices connected to the electronic device 100. In another implementation, the electronic device 100 may send an authentication manner query request to the electronic device 200, and receive an authentication manner identifier sent by the electronic device 200. In another implementation, the local authentication result sent by the electronic device 200 further carries an authentication manner identifier of the electronic device 200, and the electronic device 100 may directly learn of the authentication manner of the electronic device 200 based on the local authentication result of the electronic device 200.

In this embodiment of this application, the priority of the authentication manner of local continuous authentication may be set by the electronic device 100, or may be set by the user. For example, priorities of authentication manners of local continuous authentication are sorted in descending order as follows: facial recognition (iris recognition), heart rate detection, gait recognition, and screen touch behavior recognition. Optionally, in some embodiments of this application, priorities of some authentication manner combinations may be different. For example, a priority of facial recognition+fingerprint recognition is higher than a priority of gait recognition+screen touch behavior. For example, an authentication manner of the electronic device 100 is facial recognition, and the authentication manner of the electronic device 200 is screen touch behavior recognition. After the electronic device 100 starts cross-device authentication, if determining that the priority of the authentication manner of the electronic device 200 is lower than a priority of the authentication manner of the electronic device 100, the electronic device 100 may directly determine that cross-device authentication of the electronic device 200 fails.

It can be understood that when the priority of the authentication manner of the electronic device 200 is lower, the electronic device 100 may determine that the identity authentication information of the electronic device 200 is insecure, and the electronic device 100 may discard the related data of the voice instruction 1, and does not perform the response operation corresponding to the voice instruction 1.

S109: The electronic device 100 determines whether a distance between the electronic device 100 and the electronic device 200 is less than a preset distance 1. If the distance between the electronic device 100 and the electronic device 200 is less than the preset distance 1, S110 is performed.

In this embodiment of this application, the electronic device 100 may measure the distance between the electronic device 100 and the electronic device 200 by using a positioning technology such as a Bluetooth positioning technology, a UWB positioning technology, or a Wi-Fi positioning technology.

For example, the electronic device 100 measures the distance between the electronic device 100 and the electronic device 200 by using the Bluetooth positioning technology. Specifically, in an implementation, the electronic device 100 sends a measurement request to the electronic device 200. The electronic device 200 sends a measurement response to the electronic device 100 after a preset time period based on the received measurement request. The electronic device 100 may determine a unidirectional flight time period of a signal based on a sending moment of the measurement request, a receiving moment of the measurement response, and the preset time period, and may further determine the distance between the electronic device 200 and the electronic device 100 based on the unidirectional flight time period and a propagation speed of an electromagnetic wave.

It can be understood that when the electronic device 100 determines that the distance between the electronic device 100 and the electronic device 200 is greater than or equal to the preset distance 1, the electronic device 100 determines that the identity authentication information of the electronic device 200 is insecure, and the electronic device 100 may discard the related data of the voice instruction 1, and does not perform the response operation corresponding to the voice instruction 1.

S110: The electronic device 100 determines whether the electronic device 200 is in a secure state. If the electronic device 200 is in the secure state, S111 is performed.

In an implementation, the electronic device 100 may send a query request to the electronic device 200. The query request is used to query whether the electronic device 200 is in the secure state. For example, when determining that the electronic device 200 is in a non-root state, the electronic device 200 sends a query response to the electronic device 100. The query response is used to indicate that the electronic device 200 is in the secure state. In another implementation, the identity authentication information sent by the electronic device 200 further carries an identifier of the secure state of the electronic device 200, and the electronic device 100 may directly learn of the secure state of the electronic device 200 based on the identity authentication information of the electronic device 200. For determining whether the electronic device is in the secure state, refer to the foregoing related definition of the secure state. Details are not described herein again.

It can be understood that when the electronic device 100 determines that the electronic device 200 is not in the secure state, the electronic device 100 determines that the identity authentication information of the electronic device 200 is insecure, and the electronic device 100 may discard the related data of the voice instruction 1, and does not perform the response operation corresponding to the voice instruction 1.

In this embodiment of this application, an execution sequence of step S108 to step S110 is not specifically limited. For example, the electronic device 100 may alternatively simultaneously perform step S108 to step S110. For example, the electronic device 100 may first determine the secure state of the electronic device 200; determine the priority of the authentication manner of the electronic device 200 when determining that the electronic device 200 is in the secure state; and determine the distance of the electronic device 200 when the priority of the authentication manner of the electronic device 200 is not lower. When the distance of the electronic device 200 is less than the preset distance 1, the electronic device 100 executes the response operation corresponding to the voice instruction 1.

In some embodiments, at least one of step S108 to step S110 is an optional step. For example, step S107 to step S109 are all optional steps. After receiving the identity authentication information of the electronic device 200, when determining that the identity authentication information of the electronic device 200 does not match the preset information, the electronic device 100 performs the response operation corresponding to the voice instruction 1. For example, step S107 is an optional step. After receiving the identity authentication information of the electronic device 200, when the electronic device 100 determines that the identity authentication information of the electronic device 200 does not match the preset information, determines that the distance of the electronic device 200 is less than the preset distance 1, and determines that the electronic device 100 is in the secure state, only when the electronic device 100 determines that the identity authentication information of the electronic device 200 is secure and reliable, the electronic device 100 performs the response operation corresponding to the voice instruction 1.

5111: The electronic device 100 performs the response operation corresponding to the voice instruction 1.

For example, in Voice control scenario 1, Music is an unlocked application. Refer to FIG. 4A and FIG. 4B. The voice instruction 1 is "Hey Celia, play the song 1". When the electronic device 100 determines that cross-device authentication succeeds, the electronic device 100 plays the song 1 and may send a voice response "OK, play the song 1" shown in FIG. 4B. In Voice control scenario 2, Application 1 is a locked application. Refer to FIG. 6E and FIG. 6F. The voice instruction 1 is "Hey Celia, use Application 1 to send 'Do you return home' to Anna". The electronic device 100 determines that Application 1 is a locked application. When determining that cross-device authentication succeeds, the electronic device 100 sends a message "Do you return home" to Anna by using Application 1, and may send a voice response "'Do you return home' is sent to Anna" shown in FIG. 6F. In Voice control scenario 3, Application 1 is a locked low-risk application. Refer to FIG. 6E and FIG. 6F. The voice instruction 1 is "Hey Celia, use Application 1 to send 'Do you return home' to Anna". The electronic device 100 determines that Application 1 is a locked low-risk application. When determining that cross-device authentication succeeds, the electronic device 100 sends a message "Do you return home" to Anna by using Application 1, and may send a voice response "'Do you return home' is sent to Anna" shown in FIG. 6F.

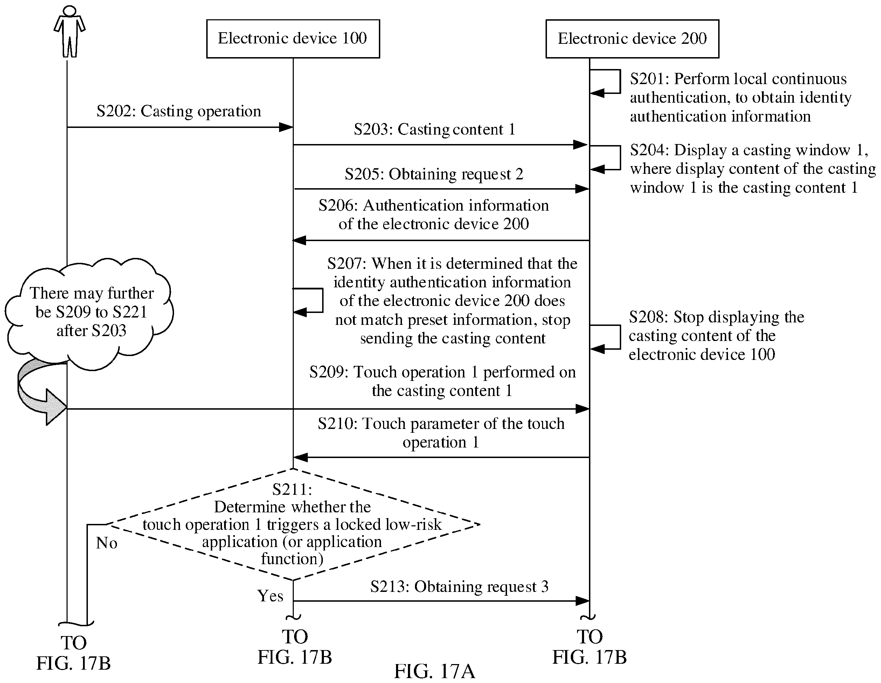

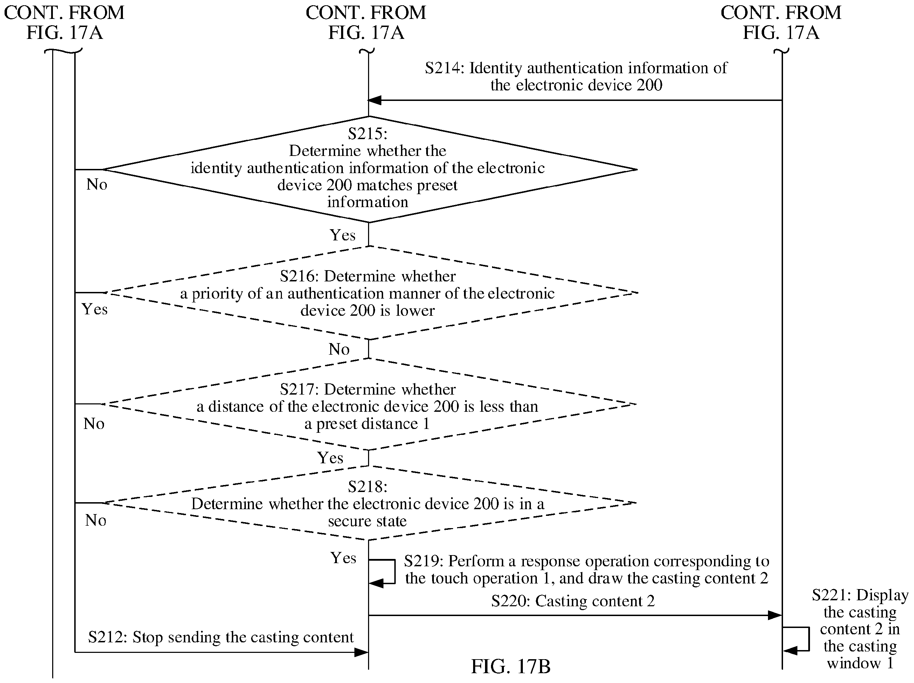

For example, FIG. 17A and FIG. 17B show a cross-device authentication method in a casting control scenario according to an embodiment of this application. The cross-device authentication method includes but is not limited to steps S201 to S208.

S201: An electronic device 200 performs local continuous authentication, to obtain identity authentication information.

In this embodiment of this application, for a specific implementation in which the electronic device 200 performs local continuous authentication, to obtain the identity authentication information, refer to related descriptions of S101 in the method embodiment in FIG. 16A and FIG. 16B. Details are not described herein again.

S202: The electronic device 100 receives a casting operation of a user.

For related content of a casting setting, refer to related descriptions in FIG. 9A to FIG. 9H. Details are not described herein again. For example, FIG. 9A to FIG. 9D show a casting manner in which an electronic device 100 actively performs casting to an electronic device 200 according to an embodiment of this application. The casting operation may be that the user taps an option 401A of the electronic device 200 shown in FIG. 9B. FIG. 9E to FIG. 9H show a casting manner in which an electronic device 200 actively obtains casting content of an electronic device 100 according to an embodiment of this application. The casting operation may be that the user taps an option 410A of the electronic device 100 shown in FIG. 9G.

S203: The electronic device 100 sends casting content 1 to the electronic device 200 in response to the casting operation.

S204: After receiving the casting content 1, the electronic device displays a casting window 1, where display content of the casting window 1 is the casting content 1.

For example, the casting window 1 may be a casting window 403 shown in FIG. 9D, and the casting content 1 may be a user interface 32 shown in FIG. 9D. Alternatively, the casting window 1 may be a casting window 411 shown in FIG. 9G, and the casting content 1 may be a user interface 32 shown in FIG. 9G.

S205: The electronic device 100 sends an obtaining request 2 to the electronic device 200, where the obtaining request 2 is used to obtain the identity authentication information of the electronic device 200.

S206: The electronic device 200 sends the identity authentication information of the electronic device 200 to the electronic device 100 in response to the received obtaining request 2.

In this embodiment of this application, for a specific implementation in which the electronic device 200 sends the identity authentication information of the electronic device 200 to the electronic device 100, refer to related descriptions of S106 in the method embodiment in FIG. 16A and FIG. 16B. Details are not described herein again.

S207: When the electronic device 100 determines that the identity authentication information of the electronic device 200 does not match preset information, the electronic device 100 stops sending the casting content to the electronic device 200.

S208: The electronic device 200 stops displaying the casting content 1.

For example, refer to FIG. 9I and FIG. 9J. After a user of the electronic device 200 switches from a user 1 to a user 2, cross-device authentication fails, and the electronic device 200 stops displaying the casting content of the electronic device 100, and may display, in the casting window 403, prompt information "Casting is interrupted" shown in FIG. 9J.

In some embodiments of this application, after step S203, the cross-device authentication method may further include but is not limited to at least one of steps S209 to S221.

S209: The electronic device 200 receives a touch operation 1 performed by the user on the casting content 1.

For example, refer to FIG. 10A and FIG. 10C. The touch operation 1 may be that the user taps an icon 404C of Music. Refer to FIG. 10E and FIG. 10G. The touch operation 1 may be that the user taps an icon 404B of Gallery. Refer to FIG. 11A. The touch operation 1 may be that the user taps an icon 404D of Application 2. Refer to FIG. 12A. The touch operation 1 may be that the user taps an icon 404E of Email.

S210: The electronic device 200 sends a touch parameter of the touch operation 1 to the electronic device 100, and the electronic device 100 receives the touch parameter of the touch operation 1.

S211: The electronic device 100 determines, based on the touch parameter of the touch operation 1, whether the touch operation 1 triggers a locked low-risk application or application function. If the touch operation 1 does not trigger a locked low-risk application or application function, S212 is performed; or if the touch operation 1 triggers a locked low-risk application or application function, S213 is performed.

In some embodiments, the electronic device 200 determines a touch parameter of the touch operation 1 on the casting content 1, and sends the touch parameter to the electronic device 100. The electronic device 100 determines, based on the touch parameter of the touch operation 1, a trigger event corresponding to the touch operation 1. The touch parameter may include touch coordinates, touch duration, and the like. For example, refer to FIG. 10E. The electronic device 200 obtains touch coordinates and touch duration of the user in the user interface 32, and the electronic device 200 sends the touch coordinates and the touch duration to the electronic device 100. The electronic device 100 determines, based on the touch coordinates and the touch duration of the touch operation 1, that the trigger event corresponding to the touch operation 1 is a tap operation performed on the icon 404B of Gallery. Refer to FIG. 7C. Gallery is a locked low-risk application, and the electronic device 100 determines that the touch operation 1 triggers a locked low-risk application. In addition to the touch coordinates and the touch duration, the touch parameter may further include another parameter. This is not specifically limited herein.

In some embodiments, step S211 may be an optional step. After receiving the touch parameter of the touch operation 1, the electronic device 100 performs step S213, to be specific, starts cross-device authentication, to obtain the identity authentication information of the electronic device 200.

S212: The electronic device 100 stops sending the casting content to the electronic device 200.

It should be noted that, when the electronic device 100 determines, based on the touch parameter of the touch operation 1, that the touch operation 1 triggers a locked high-risk application or application function, the electronic device 100 stops sending the casting content to the electronic device 200, and the electronic device 200 stops displaying the casting content of the electronic device 100. For example, refer to FIG. 12A. The electronic device 100 may determine, based on the touch parameter of the touch operation 1, that the trigger event corresponding to the touch operation 1 is a tap operation performed on the icon 404E of Email. Email is a locked high-risk application, and the electronic device 100 determines that the touch operation 1 triggers a locked high-risk application.

S213: The electronic device 100 sends an obtaining request 3 to the electronic device 200, where the obtaining request 3 is used to obtain the identity authentication information of the electronic device 200.

S214: In response to the received obtaining request 3, the electronic device 200 sends the identity authentication information of the electronic device 200 to the electronic device 100, and the electronic device 100 receives the identity authentication information of the electronic device 200.

In this embodiment of this application, for a specific implementation in which the electronic device 200 sends the identity authentication information of the electronic device 200 to the electronic device 100, refer to related descriptions of S106 in the method embodiment in FIG. 16A and FIG. 16B. Details are not described herein again.

S215: The electronic device 100 determines whether the identity authentication information of the electronic device 200 matches the preset information. If the identity authentication information of the electronic device 200 matches the preset information, S216 is performed; or if the identity authentication information of the electronic device 200 does not match the preset information, S212 is performed.

In this embodiment of this application, when the electronic device 100 determines that the identity authentication information of the electronic device 200 does not match the preset information, the electronic device 100 stops sending the casting content to the electronic device 200, and the electronic device 200 stops displaying the casting content of the electronic device 100. For example, for Casting control scenario 2, refer to FIG. 10C, FIG. 10D, FIG. 10H, and FIG. 10I. An unauthorized user 2 is using the electronic device 200, the identity authentication information of the electronic device 200 does not match the preset information, the electronic device 100 stops sending the casting content to the electronic device 200, and the electronic device 200 stops displaying the casting content of the electronic device 100 in the casting window 403, or the electronic device 200 closes the casting window 403.

S216: Compared with a priority of an authentication manner of local continuous authentication of the electronic device 100, the electronic device 100 determines whether a priority of an authentication manner of the electronic device 200 is lower. If the priority of the authentication manner of the electronic device 200 is not lower, S217 is performed; or if the priority of the authentication manner of the electronic device 200 is lower, S212 is performed.

In this embodiment of this application, for a specific implementation in which the electronic device 100 determines whether the priority of the authentication manner of the electronic device 200 is lower, refer to related descriptions of S108 in the method embodiment in FIG. 16A and FIG. 16B. Details are not described herein again.

S217: The electronic device 100 determines whether a distance between the electronic device 100 and the electronic device 200 is less than a preset distance 1. If the distance between the electronic device 100 and the electronic device 200 is less than the preset distance 1, S218 is performed; or if the distance between the electronic device 100 and the electronic device 200 is not less than the preset distance 1, S212 is performed.

In this embodiment of this application, for a specific implementation in which the electronic device 100 determines whether the distance between the electronic device 100 and the electronic device 200 is less than the preset distance 1, refer to related descriptions of S109 in the method embodiment in FIG. 16A and FIG. 16B. Details are not described herein again.

S218: The electronic device 100 determines whether the electronic device 200 is in a secure state. If the electronic device 200 is in the secure state, S219 is performed; or if the electronic device 200 is not in the secure state, S212 is performed.

In this embodiment of this application, for a specific implementation in which the electronic device 100 determines whether the electronic device 200 is in the secure state, refer to related descriptions of S110 in the method embodiment in FIG. 16A and FIG. 16B. Details are not described herein again.

In this embodiment of this application, an execution sequence of step S216, step S217, and step S218 is not specifically limited. The electronic device 100 may alternatively simultaneously perform step S216 to step S218. In some embodiments, at least one of step S216 to step S218 is an optional step. For example, step S216 to step S218 are all optional steps. After receiving the identity authentication information of the electronic device 200, when determining that the identity authentication information of the electronic device 200 matches the preset information, the electronic device 100 performs a function triggered by the touch operation 1, and draws casting content 2 corresponding to the function. For example, step S216 is an optional step. After receiving the identity authentication information of the electronic device 200, when the electronic device 100 determines that the identity authentication information of the electronic device 200 matches the preset information, and determines that the distance of the electronic device 200 is less than the preset distance 1, and that the electronic device 100 is in the secure state, the electronic device 100 determines that the identity authentication information of the electronic device 200 is secure and reliable, and the electronic device 100 starts a function triggered by the touch operation 1, and draws the casting content 2 corresponding to the function.

S219: The electronic device 100 performs a response operation corresponding to the touch operation 1, and draws the corresponding casting content 2.

S220: The electronic device 100 sends the casting content 2 to the electronic device 200, and the electronic device 200 receives the casting content 2 sent by the electronic device 100.

S221: The electronic device 200 displays the casting content 2 in the casting window 1.

For Casting control scenario 3, Gallery is a locked application. For Casting control scenario 4, Gallery is a locked low-risk application. For example, refer to FIG. 10E and FIG. 10F. The electronic device 100 determines that the touch operation 1 is the tap operation performed on the icon 404B of Gallery, and the electronic device 100 determines that Gallery triggered by the touch operation 1 is a locked application (or a locked low-risk application). When the electronic device 100 obtains identity authentication information of the electronic device 100 and determines that cross-device authentication succeeds, the electronic device 100 draws a user interface 36 of Gallery, and sends the user interface 36 to the electronic device 200. As shown in FIG. 10F, the electronic device displays the user interface 36 in the casting window 403. For the casting window 1, refer to the casting window 403 displayed in FIG. 10F. For the casting content 2, refer to the user interface 36 displayed in FIG. 10F.

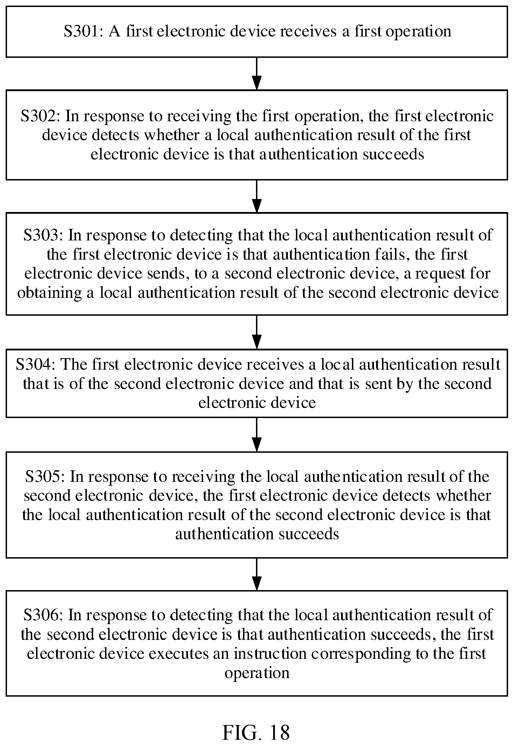

For example, FIG. 18 shows a cross-device authentication method according to an embodiment of this application. The cross-device authentication method includes but is not limited to steps S301 to S306.

S301: A first electronic device receives a first operation.

In this embodiment of this application, the first electronic device may be the electronic device 100 in the foregoing embodiments. In some embodiments, the first operation may be a voice instruction received by the electronic device 100 in the foregoing voice control scenarios. For example, as shown in FIG. 6E, the electronic device 100 receives a voice instruction "Hey Celia, use Application 1 to send 'Do you return home' to Anna". In some embodiments, the first operation may be a casting operation received by the electronic device 100 in the foregoing casting control scenarios. For example, the first operation may be that a user taps an option 401A of an electronic device 200 shown in FIG. 9B. In some embodiments, the first operation may be a touch operation indirectly received by the electronic device 100 by using the electronic device 200 in Casting control scenarios 2 to 4. It should be noted that, after receiving a touch operation of the user, the electronic device 200 may send a touch parameter of the touch operation to the electronic device 100, and the electronic device 100 determines a trigger event corresponding to the touch operation, and further performs a corresponding response operation. For example, the first operation may be that the user taps an icon 404C of Music in a casting window 403 shown in FIG. 10A.

S302: In response to receiving the first operation, the first electronic device detects whether a local authentication result of the first electronic device is that authentication succeeds.

Specifically, the first electronic device collects biometric feature information of the user in a detection range, and determines whether the collected biometric feature information matches biometric feature information of a preset user. If the collected biometric feature information matches the biometric feature information of the preset user, the local authentication result of the first electronic device is that local authentication succeeds. For an implementation of determining whether the collected biometric feature information matches the biometric feature information of the preset user, refer to related descriptions in the foregoing embodiments; and for the preset user, refer to related descriptions of a user 1 and an authorized user 3 in the foregoing embodiments. Details are not described herein again.

In some embodiments, after the first electronic device receives the first operation, the method further includes: The first electronic device detects whether the first operation triggers a locked low-risk application; and in response to detecting that the first operation triggers a locked low-risk application, the first electronic device detects whether the local authentication result of the first electronic device is that authentication succeeds. Refer to the related descriptions of Voice control scenario 3 and Casting control scenario 4. In some embodiments of this application, a locked application may include a locked low-risk application. For a setting of the locked application, refer to related descriptions in FIG. 5A to FIG. 5G. For a setting of the locked low-risk application, refer to related descriptions in FIG. 7A to FIG. 7C.

In some embodiments, when the first operation is a first voice instruction, before the first electronic device detects whether the local authentication result of the first electronic device is that authentication succeeds, the method further includes: The first electronic device detects whether a voiceprint feature in the first voice instruction conforms to a voiceprint feature of the preset user; and in response to detecting that the voiceprint feature in the first voice instruction conforms to the voiceprint feature of the preset user, the first electronic device detects whether the local authentication result of the first electronic device is that authentication succeeds. For the first voice instruction, refer to the voice instruction received by the electronic device 100 in the voice control scenarios, for example, a voice instruction 1.

In some embodiments, when a matching degree between the voiceprint feature in the first voice instruction and the voiceprint feature of the preset user reaches a preset threshold 2, the voiceprint feature in the first voice instruction conforms to the voiceprint feature of the preset user. For example, the preset threshold 2 is equal to 95%.

In some embodiments, the first electronic device performs local continuous authentication and generates the local authentication result of the first electronic device when the first electronic device receives the first operation or after the first electronic device receives the first operation. A manner in which the first electronic device performs local continuous authentication includes at least one of the following: facial recognition authentication, iris recognition authentication, and screen touch behavior recognition authentication. The local authentication result of the first electronic device may represent whether identity authentication performed by the first electronic device on the user succeeds.

S303: In response to detecting that the local authentication result of the first electronic device is that authentication fails, the first electronic device sends, to the second electronic device, a request for obtaining the local authentication result of the second electronic device.

In some embodiments, the second electronic device performs local continuous authentication and generates the local authentication result of the second electronic device when the first electronic device receives the first operation or before the first electronic device receives the first operation. A manner in which the second electronic device performs local continuous authentication includes at least one of the following: facial recognition authentication, iris recognition authentication, and screen touch behavior recognition authentication. The local authentication result of the second electronic device may represent whether identity authentication performed by the second electronic device on the user succeeds.

In this embodiment of this application, the second electronic device may be the electronic device 200.

S304: The first electronic device receives a local authentication result that is of the second electronic device and that is sent by the second electronic device.

S305: In response to receiving the local authentication result of the second electronic device, the first electronic device detects whether the local authentication result of the second electronic device is that authentication succeeds.

S306: In response to detecting that the local authentication result of the second electronic device is that authentication succeeds, the first electronic device executes an instruction corresponding to the first operation.

In this embodiment of this application, the first operation may be the voice instruction 1 in the related embodiment in FIG. 16A and FIG. 16B, and the instruction corresponding to the first operation may be a response operation corresponding to the voice instruction 1 in the related embodiment in FIG. 16A and FIG. 16B. The first operation may alternatively be a touch operation 1 in the related embodiment in FIG. 17A and FIG. 17B. The instruction corresponding to the first operation may be a response operation corresponding to the touch operation 1 in the related embodiment in FIG. 17A and FIG. 17B. For example, the voice instruction 1 is "Hey Celia, use Application 1 to send 'Do you return home' to Anna" shown in FIG. 6E, and the response operation corresponding to the voice instruction 1 is that the first electronic device (that is, the electronic device 100) sends "Do you return home" to a contact "Anna" in Application 1 by using Application 1. For example, the touch operation 1 is that the user taps the icon 404C of Music in the casting window 403 shown in FIG. 10A, and the response operation corresponding to the touch operation 1 is that the first electronic device (that is, the electronic device 100) starts the application Music and casts interface content of Music on the second electronic device (that is, the electronic device 200).

In some embodiments, before the first electronic device executes the instruction corresponding to the first operation, the method further includes: The first electronic device detects a distance between the first electronic device and a second electronic device; and in response to detecting that the distance between the first electronic device and the second electronic device is less than a first preset distance, the first electronic device executes the instruction corresponding to the first operation. The first preset distance may also be referred to as a preset distance 1. For how to measure the distance between the first electronic device and the second electronic device, refer to related descriptions of measuring the distance between the electronic device 100 and the electronic device 200 in the embodiment in FIG. 16A and FIG. 16B. Details are not described herein again.

In some embodiments, before the first electronic device executes the instruction corresponding to the first operation, the method further includes: The first electronic device detects whether the first electronic device is in a secure state; and in response to detecting that the first electronic device is in the secure state, the first electronic device executes the instruction corresponding to the first operation. For determining whether the electronic device is in the secure state, refer to the foregoing related descriptions of the secure state. Details are not described herein again.

In some embodiments, before the first electronic device executes the instruction corresponding to the first operation, the method further includes: The first electronic device detects whether a priority of local continuous authentication of the second electronic device is lower than a priority of local continuous authentication of the first electronic device; and in response to detecting that the priority of local continuous authentication of the second electronic device is not lower than the priority of local continuous authentication of the first electronic device, the first electronic device executes the instruction corresponding to the first operation. The priority of local continuous authentication is a priority of an authentication manner of local continuous authentication. For the priority of the authentication manner of local continuous authentication, refer to related descriptions in the foregoing embodiments. Details are not described herein again. For example, authentication manners of local continuous authentication include face authentication, iris recognition authentication, heart rate detection authentication, gait recognition authentication, and screen touch behavior recognition authentication. Priorities of the authentication manners of local continuous authentication are sorted in descending order as follows: facial recognition authentication (iris recognition authentication), heart rate detection authentication, gait recognition authentication, and screen touch behavior recognition authentication. Facial recognition authentication and iris recognition authentication have a same priority.

To further understand the cross-device authentication methods provided in embodiments of this application, the following describes a software system of an electronic device provided in embodiments of this application.

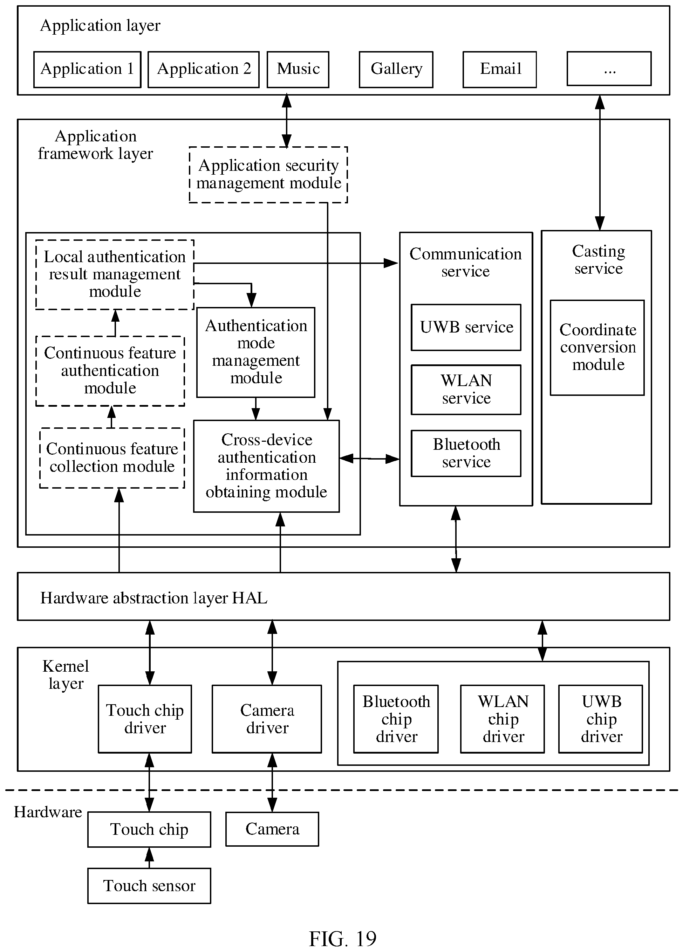

FIG. 19 is a block diagram of a software structure of a software system of an electronic device according to an example of an embodiment of this application. The electronic device may be an electronic device 100 or an electronic device 200. The following provides descriptions by using the electronic device 100 as an example. The electronic device 100 may implement voice control and casting control of the electronic device 100 based on identity authentication information of an electronic device (for example, the electronic device 200) connected to the electronic device 100, to effectively improve convenience and security of cross-device authentication, and improve user experience.

As shown in FIG. 10A, in a layered architecture, software is divided into several layers, and each layer has a clear role and task. The layers communicate with each other through a software interface. In some embodiments, an Android system may be divided into an application layer, an application framework layer, a protocol stack, a hardware abstraction layer (hardware abstraction layer, HAL) layer, and a kernel layer (kernel) from top to bottom.

The application layer includes a series of application packages, for example, Application 1, Application 2, music, Gallery, and Email, and may further include an application such as Bluetooth, Phone, or Video.

The application framework layer provides an application programming interface (application programming interface, API) and a programming framework for an application at the application layer. The application framework layer includes some predefined functions.

The application framework layer may include a continuous feature collection module, a continuous feature authentication module, a local authentication result management module, an authentication mode management module, and a cross-device authentication information obtaining module. The continuous feature collection module is configured to collect biometric feature information. The continuous feature authentication module is configured to match the biometric feature information collected by the continuous feature collection module with prestored biometric feature information, to obtain a current local authentication result. The local authentication result management module is configured to: manage the local authentication result determined by the continuous feature authentication module, and when the local authentication result changes, indicate the authentication mode management module to switch an authentication mode. The cross-device authentication information obtaining module may be configured to obtain identity authentication information of another connected device (for example, the electronic device 200).

The application framework layer may further include a Bluetooth service, a UWB service, a WLAN service, and the like. The electronic device 100 may detect a distance of another connected device of the electronic device 100 by invoking one or more short-range communication services in services such as the Bluetooth service, the UWB service, and the WLAN service. Alternatively, the electronic device 100 may be connected to a nearby device of the electronic device 100 and perform data transmission, by invoking the one or more short-range communication services in the services such as the Bluetooth service, the UWB service, and the WLAN service. In some embodiments, when the electronic device 100 determines that a distance between the electronic device 100 and the electronic device 200 is less than a preset distance 1, the electronic device 100 determines that identity authentication information of the electronic device 200 is secure and reliable.

Android runtime includes a kernel library and a virtual machine. The Android runtime is responsible for scheduling and management of the Android system.

The kernel library includes two parts: a function that needs to be invoked in java language and a kernel library of Android.

The application layer and the application framework layer run on the virtual machine. The virtual machine converts a java file at the application layer and the application framework layer into a binary file for execution. The virtual machine is configured to perform functions such as object lifecycle management, stack management, thread management, security and abnormality management, and garbage collection.

The kernel layer is a layer between hardware and software. The kernel layer may include a display driver, a camera driver, and a touch chip driver, and may further include a sensor driver, an audio driver, and the like. The HAL layer and the kernel layer (kernel) may perform a corresponding operation in response to a function invoked by the application framework layer.

In this embodiment of this application, the electronic device 100 may perform local continuous authentication in one or more authentication manners such as facial recognition, iris recognition, and screen touch behavior recognition.

In some embodiments, the electronic device 100 performs local continuous authentication through facial recognition. After screen unlocking of the electronic device 100 is performed, the electronic device 100 collects an image by using a camera (for example, a camera with low power consumption). The electronic device 100 transmits the image to the continuous feature collection module at the application framework layer by using the camera driver at the kernel layer. The continuous feature collection module obtains facial feature information in the image, and sends the facial feature information to the continuous feature authentication module. The continuous feature authentication module matches the facial feature information with biometric feature information of a preset user of the electronic device 100. When a matching degree reaches a preset threshold 1, it is determined that identity authentication succeeds; or when a matching degree does not reach a preset threshold 1, identity authentication fails. In some embodiments, the electronic device 100 performs local continuous authentication through screen touch behavior recognition. The electronic device 100 may collect N touch inputs of the user by using a touch sensor on a touchscreen. A touch chip obtains a touch parameter of the N touch inputs (the touch parameter may include coordinates of a contact region of the touch inputs and capacitance information of each coordinate point). The touch chip sends the touch parameter of the N touch inputs to the continuous feature collection module at the application framework layer by using the touch chip driver. The continuous feature collection module is configured to: obtain touch feature information of the N touch inputs based on the touch parameter of the N touch inputs, and send the touch feature information to the continuous feature authentication module. The continuous feature authentication module matches the screen touch feature information with screen touch feature information of the preset user of the electronic device 100. When a matching degree reaches a preset threshold 1, it is determined that identity authentication succeeds; or when a matching degree does not reach a preset threshold 1, identity authentication fails. The touch feature information of the touch input includes at least one or more items of information such as a touch location, a touch area, a touch force, a touch direction, and a touch time period of the touch input. N is a positive integer greater than 0. The preset user may be a user 1 in the foregoing embodiments, or may be an added authorized user 3 in the foregoing embodiments.

In some embodiments, the continuous feature authentication module sends the obtained local authentication result to the local authentication result management module. When the local authentication result changes from "authentication succeeds" to "authentication fails", the local authentication result management module may notify the authentication mode management module to switch a continuous authentication mode to a cross-device continuous authentication mode. When the local authentication result changes from "authentication fails" to "authentication succeeds", the local authentication result management module may indicate the authentication mode management module to switch a continuous authentication mode to a local continuous authentication mode. When the continuous authentication mode is the cross-device continuous authentication mode, the cross-device authentication information obtaining module may invoke a communication service to obtain identity authentication information of another connected device (for example, the electronic device 200). For example, the cross-device authentication information obtaining module obtains the identity authentication information of the electronic device 200 by invoking the Bluetooth service, the Bluetooth service invokes a Bluetooth chip driver at the kernel layer, and the Bluetooth chip driver may drive a Bluetooth antenna to send an obtaining request to the electronic device 200. The obtaining request is used to obtain a local authentication result of the electronic device 200. For example, the obtaining request may be the obtaining request 1 in the embodiment in FIG. 16A and FIG. 16B, or may be the obtaining request 2 and the obtaining request 3 in the embodiment in FIG. 17A and FIG. 17B. The electronic device 100 may obtain, by using a Bluetooth chip driver, the identity authentication information that is of the electronic device 200 and that is received by the Bluetooth antenna. The Bluetooth chip driver may send the identity authentication information of the electronic device 200 to the cross-device authentication information obtaining module at the application framework layer. In this embodiment of this application, the electronic device may implement voice control and casting control of the electronic device 100 based on the identity authentication information that is of the electronic device 200 and that is obtained by the cross-device authentication information obtaining module.

In some embodiments, the electronic device 100 also has a local continuous authentication capability. The electronic device 100 may also obtain, by using a Bluetooth chip driver, an obtaining request that is of the electronic device 200 and that is received by a Bluetooth antenna. The obtaining request is used to obtain a local authentication result of the electronic device 100. The Bluetooth chip driver may send the obtaining request to the local authentication result management module or the continuous feature collection module at the application framework layer. The local authentication result management module may send the local authentication result to the Bluetooth chip driver, the continuous feature collection module may send the collected biometric feature information to the Bluetooth chip driver, and the Bluetooth chip driver may send the local authentication result or the biometric feature information of the electronic device 100 to the electronic device 200 by using the Bluetooth antenna.

In this embodiment of this application, the electronic device 100 may implement voice control and casting control of the electronic device 100 based on the local authentication result that is of the electronic device 200 and that is obtained by the cross-device authentication information obtaining module.

Refer to Voice control scenario 2 and Casting control scenario 3. The electronic device 100 may start cross-device authentication for a locked application, and may not start cross-device authentication for an unlocked application (or application function). Refer to Voice control scenario 3 and Casting control scenario 4. The electronic device 100 may start cross-device authentication for a locked low-risk application (or application function), and may not start cross-device authentication for a locked high-risk application (or application function). In some embodiments of this application, the application framework may include an application security management module. The application security management module stores an identifier of the locked application (or application function) and/or the locked low-risk application (or application function). When receiving an input operation of the user, the electronic device 100 may invoke an application security management module to determine whether an application (or application function) triggered by the input operation is a locked application (or application function), or whether an application (or application function) triggered by the input operation is a locked low-risk application (or application function).

In some embodiments, a microphone of the electronic device 100 receives a voice instruction 1, the electronic device 100 sends the voice instruction 1 to the application framework layer by using the kernel layer, and the application framework layer invokes a voice recognition algorithm of the HAL layer to recognize the voice instruction 1 to trigger Application 1. Then, the application framework layer may invoke the application security management module to determine that Application 1 is a locked application. Because Application 1 is a locked application, when the local authentication result management module determines that local authentication fails, the local authentication result management module invokes the cross-device authentication information obtaining module to obtain the identity authentication information of the electronic device 200.

Refer to Casting control scenario 2 to Casting control scenario 4. The electronic device 100 may receive a touch parameter of a touch operation performed on casting content on the electronic device 200.

In some embodiments of this application, the application framework layer further includes a casting service, and the casting service includes a coordinate conversion module. After the electronic device 100 receives, by using the communication service, the touch parameter (the touch parameter includes touch coordinates, touch duration, and the like) that is of the touch operation and that is sent by the electronic device 200, the electronic device 100 may invoke the coordinate conversion module to convert the touch coordinates of the electronic device 200 in the touch parameter into touch coordinates of the electronic device 100, and may further determine an event triggered by the touch operation. For example, after the touch coordinates are converted into the touch coordinates of the electronic device 100, it is determined that the touch coordinates of the electronic device 100 correspond to a region in which an icon of Gallery is located. Further, the electronic device 100 may determine, based on a parameter such as the touch duration of the touch parameter, that the touch operation is a tap operation performed on the icon of Gallery.

All or some of the foregoing embodiments may be implemented by using software, hardware, firmware, or any combination thereof. When software is used to implement embodiments, all or some of embodiments may be implemented in a form of a computer program product. The computer program product includes at least one computer instruction. When the computer program instruction is loaded and executed on a computer, all or some procedures or functions in embodiments of this application are generated. The computer may be a general-purpose computer, a dedicated computer, a computer network, or another programmable apparatus. The computer instruction may be stored in a computer-readable storage medium or may be transmitted from one computer-readable storage medium to another computer-readable storage medium. For example, the computer instruction may be transmitted from one website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium that can be accessed by the computer, or a data storage device such as a server or a data center integrating at least one usable medium. The usable medium may be a magnetic medium (for example, a floppy disk, a hard disk, or a magnetic tape), an optical medium (for example, a DVD), a semiconductor medium (for example, a solid-state drive), or the like.

A person of ordinary skill in the art may understand that all or some procedures of the methods in embodiments may be implemented by a computer program instructing related hardware. The program may be stored in a computer-readable storage medium. When the program is executed, the processes in the method embodiments are performed. The storage medium includes any medium that can store program code such as a ROM, a random storage memory RAM, a magnetic disk, or a compact disc.

## Claims

1. A cross-device authentication method, applied to a first electronic device and a second electronic device, wherein the first electronic device is connected to the second electronic device, and the method comprises:
receiving, by the first electronic device, a first operation;
performing, by the first electronic device, local authentication in response to the first operation;
starting, by the first electronic device, cross-device authentication in response to detecting that a local authentication result of the first electronic device is that authentication fails, wherein the cross-device authentication is used by the first electronic device to perform authentication by using the second electronic device;
obtaining, by the first electronic device, a cross-device authentication result; and
executing, by the first electronic device, an instruction corresponding to the first operation if the first electronic device determines that the cross-device authentication result is that authentication succeeds.

2. The method according to claim 1, wherein the starting, by the first electronic device, cross-device authentication comprises:
sending, by the first electronic device, a first request message to the second electronic device, wherein the first request message is used to request to obtain a local authentication result of the second electronic device; and
the obtaining, by the first electronic device, a cross-device authentication result comprises:
receiving, by the first electronic device, a first response message from the second electronic device, wherein the first response message comprises the cross-device authentication result, and the cross-device authentication result is the local authentication result of the second electronic device.

3. The method according to claim 1, wherein the starting, by the first electronic device, cross-device authentication comprises:
sending, by the first electronic device, a second request message to the second electronic device, wherein the second request message is used to request to obtain identity authentication information of the second electronic device; and
receiving, by the first electronic device, a second response message from the second electronic device, wherein the second response message comprises the identity authentication information of the second electronic device; and
the obtaining, by the first electronic device, a cross-device authentication result comprises:
authenticating, by the first electronic device, the first operation based on the identity authentication information of the second electronic device, and generating the cross-device authentication result.

4. The method according to claim 3, wherein the first electronic device stores preset information; and
the authenticating, by the first electronic device, the first operation based on the identity authentication information of the second electronic device, and generating the cross-device authentication result comprises:
matching, by the first electronic device, the identity authentication information sent by the second electronic device with the preset information, to generate a matching result; and
when the matching result is greater than a first preset threshold, determining, by the first electronic device, that the local authentication result of the second electronic device is that authentication succeeds; or when the matching result is not greater than a first preset threshold, determining, by the first electronic device, that the local authentication result of the second electronic device is that authentication fails.

5. The method according to any one of claims 1 to 3, wherein the first electronic device stores preset information; and
the performing, by the first electronic device, local authentication on the first operation in response to the first operation comprises:
in response to the first operation, obtaining, by the first electronic device, identity authentication information of a user who enters the first operation;
matching, by the first electronic device, the identity authentication information of the user with the preset information; and
determining, by the first electronic device based on a matching result, whether the local authentication result of the first electronic device is that authentication succeeds.

6. The method according to claim 5, wherein the determining, by the first electronic device based on a matching result, whether the local authentication result of the first electronic device is that authentication succeeds comprises:
comparing, by the first electronic device, a matching degree in the matching result and a preset threshold; and
when the matching degree is greater than a second preset threshold, determining, by the first electronic device, that the local authentication result of the first electronic device is that authentication succeeds; or when the matching degree is not greater than a second preset threshold, determining, by the first electronic device, that the local authentication result of the first electronic device is that authentication fails.

7. The method according to any one of claims 3 to 6, wherein the identity authentication information comprises any one or more of face information, fingerprint information, voiceprint information, iris information, and screen touch behavior information; and the preset information comprises any one or more of face information, fingerprint information, voiceprint information, iris information, and screen touch behavior information.

8. The method according to any one of claims 1 to 7, wherein the first operation is any one of a screen unlocking operation, an application unlocking operation, or an operation performed on a functional control in an application.

9. The method according to any one of claims 1 to 8, wherein the first electronic device and the second electronic device log in to a same user account, and the user account is one of an instant messaging account, an email account, and a mobile phone number.

10. The method according to any one of claims 1 to 9, further comprising:
detecting, by the first electronic device, a distance between the first electronic device and the second electronic device; and
the executing, by the first electronic device, an instruction corresponding to the first operation if the first electronic device determines that the cross-device authentication result is that authentication succeeds comprises:
executing, by the first electronic device, the instruction corresponding to the first operation when the first electronic device determines that the cross-device authentication result is that authentication succeeds and that the distance between the first electronic device and the second electronic device is less than a first preset distance.

11. The method according to claim 10, wherein the detecting, by the first electronic device, a distance between the first electronic device and the second electronic device comprises:
detecting, by the first electronic device, the distance between the first electronic device and the second electronic device by using a Bluetooth positioning technology, an ultra-wideband UWB positioning technology, or a wireless fidelity Wi-Fi positioning technology.

12. The method according to any one of claims 1 to 11, wherein that the first electronic device is connected to the second electronic device comprises: establishing, by the first device, a connection to the second device by using a near field communication protocol, wherein the near field communication protocol comprises being connected to the second electronic device by using one or more of a wireless fidelity Wi-Fi communication protocol, a UWB communication protocol, a Bluetooth communication protocol, a Zigbee communication protocol, or a near field communication NFC protocol.

13. The method according to any one of claims 1 to 12, wherein before the starting, by the first electronic device, cross-device authentication, the method further comprises:
receiving a second operation, wherein the second operation is used to trigger starting of a cross-device authentication function; and
the starting, by the first electronic device, cross-device authentication in response to detecting that a local authentication result of the first electronic device is that authentication fails comprises:
starting, by the first electronic device, cross-device authentication in response to the second operation and in response to detecting that the local authentication result of the first electronic device is that authentication fails.

14. The method according to any one of claims 1 to 13, further comprising:
obtaining, by the first electronic device, security state information of the second electronic device; and
the executing, by the first electronic device, an instruction corresponding to the first operation if the first electronic device determines that the cross-device authentication result is that authentication succeeds comprises:
executing, by the first electronic device, the instruction corresponding to the first operation if the first electronic device determines that the cross-device authentication result is that authentication succeeds, and determines that the security state information of the second electronic device indicates that the second electronic device is in a secure state.

15. A cross-device authentication method, applied to a first electronic device, wherein the first electronic device is connected to a second electronic device, and the method comprises:
receiving a first operation;
performing local authentication in response to the first operation;
starting cross-device authentication in response to detecting that a local authentication result of the first electronic device is that authentication fails, wherein the cross-device authentication is used by the first electronic device to perform authentication by using the second electronic device;
obtaining a cross-device authentication result; and
executing an instruction corresponding to the first operation if determining that the cross-device authentication result is that authentication succeeds.

16. The method according to claim 15, wherein the starting cross-device authentication comprises:
sending a first request message to the second electronic device, wherein the first request message is used to request to obtain a local authentication result of the second electronic device; and
the obtaining a cross-device authentication result comprises:
receiving a first response message from the second electronic device, wherein the first response message comprises the cross-device authentication result, and the cross-device authentication result is the local authentication result of the second electronic device.

17. The method according to claim 15, wherein the starting cross-device authentication comprises:
sending a second request message to the second electronic device, wherein the second request message is used to request to obtain identity authentication information of the second electronic device; and
receiving a second response message from the second electronic device, wherein the second response message comprises the identity authentication information of the second electronic device; and
the obtaining a cross-device authentication result comprises:
authenticating the first operation based on the identity authentication information of the second electronic device, and generating the cross-device authentication result.

18. The method according to claim 17, wherein the first electronic device stores preset information; and
the authenticating the first operation based on the identity authentication information of the second electronic device, and generating the cross-device authentication result comprises:
matching the identity authentication information sent by the second electronic device with the preset information, to generate a matching result; and
when the matching result is greater than a first preset threshold, determining that the local authentication result of the second electronic device is that authentication succeeds; or when the matching result is not greater than a first preset threshold, determining that the local authentication result of the second electronic device is that authentication fails.

19. The method according to any one of claims 15 to 18, wherein the first electronic device stores the preset information; and
the performing local authentication on the first operation in response to the first operation comprises:
in response to the first operation, obtaining identity authentication information of a user who enters the first operation;
matching the identity authentication information of the user with the preset information; and
determining, based on a matching result, whether the local authentication result of the first electronic device is that authentication succeeds.

20. The method according to claim 19, wherein the determining, based on a matching result, whether the local authentication result of the first electronic device is that authentication succeeds comprises:
comparing a matching degree in the matching result and a preset threshold; and
when the matching degree is greater than a second preset threshold, determining that the local authentication result of the first electronic device is that authentication succeeds; or when the matching result is not greater than a second preset threshold, determining that the local authentication result of the first electronic device is that authentication fails.

21. The method according to any one of claims 17 to 20, wherein the identity authentication information comprises any one or more of face information, fingerprint information, voiceprint information, iris information, and screen touch behavior information; and the preset information comprises any one or more of face information, fingerprint information, voiceprint information, iris information, and screen touch behavior information.

22. The method according to any one of claims 15 to 21, wherein the first operation is any one of a screen unlocking operation, an application unlocking operation, or an operation performed on a functional control in an application.

23. The method according to any one of claims 15 to 22, wherein the first electronic device and the second electronic device log in to a same user account, and the user account is one of an instant messaging account, an email account, and a mobile phone number.

24. The method according to any one of claims 15 to 23, further comprising:
detecting a distance between the first electronic device and the second electronic device; and
the executing an instruction corresponding to the first operation if determining that the cross-device authentication result is that authentication succeeds comprises:
executing, by the first electronic device, the instruction corresponding to the first operation when the first electronic device determines that the cross-device authentication result is that authentication succeeds and that the distance between the first electronic device and the second electronic device is less than a first preset distance.

25. The method according to claim 24, wherein the detecting a distance between the first electronic device and the second electronic device comprises:
detecting the distance between the first electronic device and the second electronic device by using a Bluetooth positioning technology, an ultra-wideband UWB positioning technology, or a wireless fidelity Wi-Fi positioning technology.

26. The method according to any one of claims 15 to 25, wherein that the first electronic device is connected to the second electronic device comprises: establishing, by the first device, a connection to the second device by using a near field communication protocol, wherein the near field communication protocol comprises being connected to the second electronic device by using one or more of a wireless fidelity Wi-Fi communication protocol, a UWB communication protocol, a Bluetooth communication protocol, a Zigbee communication protocol, or a near field communication NFC protocol.

27. The method according to any one of claims 15 to 26, wherein before the starting cross-device authentication, the method further comprises:
receiving a second operation, wherein the second operation is used to trigger starting of a cross-device authentication function; and
the starting cross-device authentication in response to detecting that a local authentication result of the first electronic device is that authentication fails comprises:
starting, by the first electronic device, cross-device authentication in response to the second operation and in response to detecting that the local authentication result of the first electronic device is that authentication fails.

28. The method according to any one of claims 15 to 27, further comprising:
obtaining security state information of the second electronic device; and
the executing an instruction corresponding to the first operation if determining that the cross-device authentication result is that authentication succeeds comprises:
executing the instruction corresponding to the first operation if determining that the cross-device authentication result is that authentication succeeds, and determining that the security state information of the second electronic device indicates that the second electronic device is in a secure state.

29. A cross-device authentication method, applied to a second electronic device, wherein the second electronic device is connected to a first electronic device, and the method comprises:
receiving a cross-device authentication request sent by the first electronic device, wherein the cross-device authentication request is generated after a local authentication result of the first electronic device is that authentication fails; and
sending a cross-device authentication result to the first electronic device in response to the cross-device authentication request, wherein the cross-device authentication result is used by the first electronic device to perform authentication.

30. The method according to claim 29, wherein the cross-device authentication result is specifically a local authentication result of the second electronic device or identity authentication information of the second electronic device.

31. The method according to claim 29 or 30, wherein the first electronic device and the second electronic device log in to a same user account, and the user account is one of an instant messaging account, an email account, and a mobile phone number.

32. The method according to any one of claims 29 to 31, wherein that the first electronic device is connected to the second electronic device comprises: establishing, by the first device, a connection to the second device by using a near field communication protocol, wherein the near field communication protocol comprises being connected to the second electronic device by using one or more of a wireless fidelity Wi-Fi communication protocol, a UWB communication protocol, a Bluetooth communication protocol, a Zigbee communication protocol, or a near field communication NFC protocol.

33. The method according to any one of claims 29 to 32, further comprising:
obtaining security state information of the second electronic device; and
sending the security state information to the first electronic device.

34. A first electronic device, wherein the first electronic device is connected to a second electronic device, the first electronic device comprises a memory and one or more processors, the memory is coupled to the one or more processors, the memory is configured to store computer program code, the computer program code comprises computer instructions, and the one or more processors invoke the computer instructions, so that the electronic device performs the following steps:
receiving a first operation;
performing local authentication in response to the first operation;
starting cross-device authentication in response to detecting that a local authentication result of the first electronic device is that authentication fails, wherein the cross-device authentication is used by the first electronic device to perform authentication by using the second electronic device;
obtaining a cross-device authentication result; and
executing an instruction corresponding to the first operation if determining that the cross-device authentication result is that authentication succeeds.

35. The first electronic device according to claim 34, wherein the starting cross-device authentication comprises:
sending a first request message to the second electronic device, wherein the first request message is used to request to obtain a local authentication result of the second electronic device; and
the obtaining a cross-device authentication result comprises:
receiving a first response message from the second electronic device, wherein the first response message comprises the cross-device authentication result, and the cross-device authentication result is the local authentication result of the second electronic device.

36. The first electronic device according to claim 34, wherein the starting cross-device authentication comprises:
sending a second request message to the second electronic device, wherein the second request message is used to request to obtain identity authentication information of the second electronic device; and
receiving a second response message from the second electronic device, wherein the second response message comprises the identity authentication information of the second electronic device; and
the obtaining a cross-device authentication result comprises:
authenticating the first operation based on the identity authentication information of the second electronic device, and generating the cross-device authentication result.

37. The first electronic device according to claim 17, wherein the memory stores preset information; and
the authenticating the first operation based on the identity authentication information of the second electronic device, and generating the cross-device authentication result comprises:
matching the identity authentication information sent by the second electronic device with the preset information, to generate a matching result; and
when the matching result is greater than a first preset threshold, determining that the local authentication result of the second electronic device is that authentication succeeds; or when the matching result is not greater than a first preset threshold, determining that the local authentication result of the second electronic device is that authentication fails.

38. The first electronic device according to any one of claims 34 to 37, wherein the memory stores the preset information; and
the performing local authentication on the first operation in response to the first operation comprises:
in response to the first operation, obtaining identity authentication information of a user who enters the first operation;
matching the identity authentication information of the user with the preset information; and
determining, based on a matching result, whether the local authentication result of the first electronic device is that authentication succeeds.

39. The first electronic device according to claim 38, wherein the determining, based on a matching result, whether the local authentication result of the first electronic device is that authentication succeeds comprises:
comparing a matching degree in the matching result and a preset threshold; and
when the matching degree is greater than a second preset threshold, determining that the local authentication result of the first electronic device is that authentication succeeds; or when the matching result is not greater than a second preset threshold, determining that the local authentication result of the first electronic device is that authentication fails.

40. The first electronic device according to any one of claims 36 to 39, wherein the identity authentication information comprises any one or more of face information, fingerprint information, voiceprint information, iris information, and screen touch behavior information; and the preset information comprises any one or more of face information, fingerprint information, voiceprint information, iris information, and screen touch behavior information.

41. The first electronic device according to any one of claims 34 to 40, wherein the first operation is any one of a screen unlocking operation, an application unlocking operation, or an operation performed on a functional control in an application.

42. The first electronic device according to any one of claims 34 to 41, wherein the first electronic device and the second electronic device log in to a same user account, and the user account is one of an instant messaging account, an email account, and a mobile phone number.

43. The first electronic device according to any one of claims 34 to 42, further comprising:
the one or more processors are further configured to invoke the computer instructions, so that the electronic device performs the following step: detecting a distance between the first electronic device and the second electronic device; and
the executing an instruction corresponding to the first operation if determining that the cross-device authentication result is that authentication succeeds comprises:
executing, by the first electronic device, the instruction corresponding to the first operation when the first electronic device determines that the cross-device authentication result is that authentication succeeds and that the distance between the first electronic device and the second electronic device is less than a first preset distance.

44. The first electronic device according to claim 43, wherein the detecting a distance between the first electronic device and the second electronic device comprises:
detecting the distance between the first electronic device and the second electronic device by using a Bluetooth positioning technology, an ultra-wideband UWB positioning technology, or a wireless fidelity Wi-Fi positioning technology.

45. The first electronic device according to any one of claims 34 to 44, wherein that the first electronic device is connected to the second electronic device comprises: establishing, by the first device, a connection to the second device by using a near field communication protocol, wherein the near field communication protocol comprises being connected to the second electronic device by using one or more of a wireless fidelity Wi-Fi communication protocol, a UWB communication protocol, a Bluetooth communication protocol, a Zigbee communication protocol, or a near field communication NFC protocol.

46. The first electronic device according to any one of claims 34 to 45, wherein before the starting cross-device authentication, the one or more processors are further configured to invoke the computer instructions, so that the electronic device performs the following steps:
receiving a second operation, wherein the second operation is used to trigger starting of a cross-device authentication function; and
the starting cross-device authentication in response to detecting that a local authentication result of the first electronic device is that authentication fails comprises:
starting, by the first electronic device, cross-device authentication in response to the second operation and in response to detecting that the local authentication result of the first electronic device is that authentication fails.

47. The first electronic device according to any one of claims 34 to 46, wherein the one or more processors are further configured to invoke the computer instructions, so that the electronic device performs the following steps:
obtaining security state information of the second electronic device; and
the executing an instruction corresponding to the first operation if determining that the cross-device authentication result is that authentication succeeds comprises:
executing the instruction corresponding to the first operation if determining that the cross-device authentication result is that authentication succeeds, and determining that the security state information of the second electronic device indicates that the second electronic device is in a secure state.

48. A second electronic device, wherein the second electronic device is connected to a first electronic device, the first electronic device comprises a memory and one or more processors, the memory is coupled to the one or more processors, the memory is configured to store computer program code, the computer program code comprises computer instructions, and the one or more processors invoke the computer instructions, so that the electronic device performs the following steps:
receiving a cross-device authentication request sent by the first electronic device, wherein the cross-device authentication request is generated after a local authentication result of the first electronic device is that authentication fails; and
sending a cross-device authentication result to the first electronic device in response to the cross-device authentication request, wherein the cross-device authentication result is used by the first electronic device to perform authentication.

49. The second electronic device according to claim 48, wherein the cross-device authentication result is specifically a local authentication result of the second electronic device or identity authentication information of the second electronic device.

50. The second electronic device according to claim 48 or 49, wherein the first electronic device and the second electronic device log in to a same user account, and the user account is one of an instant messaging account, an email account, and a mobile phone number.

51. The second electronic device according to any one of claims 48 to 50, wherein that the first electronic device is connected to the second electronic device comprises: establishing, by the first device, a connection to the second device by using a near field communication protocol, wherein the near field communication protocol comprises being connected to the second electronic device by using one or more of a wireless fidelity Wi-Fi communication protocol, a UWB communication protocol, a Bluetooth communication protocol, a Zigbee communication protocol, or a near field communication NFC protocol.

52. The second electronic device according to any one of claims 48 to 51, wherein the one or more processors are further configured to invoke the computer instructions, so that the electronic device performs the following steps:
obtaining security state information of the second electronic device; and
sending the security state information to the first electronic device.

53. A computer-readable storage medium, comprising instructions, wherein when the instructions are run on an electronic device, the electronic device is enabled to perform the method according to any one of claims 15 to 28 or claims 29 to 33.

54. A computer program product, wherein when the computer program product runs on a computer, the computer is enabled to perform the method according to any one of claims 15 to 28 or claims 29 to 33.

55. A communication system, comprising a first electronic device and a second electronic device, wherein the first electronic device is configured to perform the method according to any one of claims 15 to 28, and the second device is configured to perform the method according to any one of claims 29 to 33.
